Europäisches Patentamt

European Patent Office

Office européen des brevets

(19)

(11) EP 1 329 491 A2

(12) **EUROPEAN PATENT APPLICATION**

(43) Date of publication:
23.07.2003 Bulletin 2003/30

(51) Int Cl.⁷: **C09J 7/02**, B60R 16/02

(21) Application number: 03290112.6

(22) Date of filing: 16.01.2003

(84) Designated Contracting States:
AT BE BG CH CY CZ DE DK EE ES FI FR GB GR
HU IE IT LI LU MC NL PT SE SI SK TR
Designated Extension States:
AL LT LV MK RO

(30) Priority: 18.01.2002 JP 2002009367
18.01.2002 JP 2002009368
18.01.2002 JP 2002009369

(71) Applicant: Sumitomo Wiring Systems, Ltd.
Yokkaichi-City, Mie, 510-8503 (JP)

(72) Inventors:
• Nakamura, T.,
c/o Sumitomo Wiring systems, Ltd.
Yokkaichi-city, Mie 510-8503 (JP)
• Kondo, Mamoru,
c/o Sumitomo Wiring systems, Ltd.
Yokkaichi-city, Mie 510-8503 (JP)

• Hase, Tatsuya,
c/o Sumitomo Wiring systems, Ltd.
Yokkaichi-city, Mie 510-8503 (JP)
• Deguchi, Y., c/o Sumitomo Wiring systems, Ltd.
Yokkaichi-city, Mie 510-8503 (JP)
• Yoshimoto, J.,
c/o Sumitomo Wiring systems, Ltd.
Yokkaichi-city, Mie 510-8503 (JP)
• Kawakita, G., c/o Sumitomo Wiring systems, Ltd.
Yokkaichi-city, Mie 510-8503 (JP)
• Ishikawa, M., c/o Sumitomo Wiring systems, Ltd.
Yokkaichi-city, Mie 510-8503 (JP)
• Yamashita, T.,
c/o Sumitomo Wiring systems, Ltd.
Yokkaichi-city, Mie 510-8503 (JP)

(74) Representative: Uchida, Kenji et al
S.A. Fedit-Loriot et Autres Conseils en Propriété
Industrielle,
38, avenue Hoche
75008 Paris (FR)

(54) **Wire-harness-protecting material and wire harness comprising said material**

(57) A harness-protecting material comprises a base material which comprises two faces, at least one face of which is coated with an adhesive. The base material comprises a base organic material portion which includes a base polymer portion formed of a halogen-free resin or a substantially halogen-free resin. The adhesive comprises an adhesive adjuvant which contains at least one compound selected from the group consisting of a hydrogenated terpene-type resin, a hydrogenated aromatic resin, a hydrogenated aliphatic-type resin, a cumarone-indene type resin, a phenol-type resin and a styrene-type resin. The adhesive may contain acrylic acid-type resin as base polymer portion. The base material and/or adhesive may contain an anti-oxidizing agent, a copper damage inhibitor and/or an adsorbent.

EP 1 329 491 A2

**Description**

The present invention relates to a material for protecting wire harnesses and a wire harness comprising such protecting material. More particularly, the invention relates to a wire harness-protecting material suitable for protecting the external periphery of a bundle of electrical wires or cables in wire harnesses used for wiring vehicles or electrical appliances or products.

The wire harness comprises a bundle of electrical cables, each of which, in turn, comprises one or several conductor element(s) coated e.g. with a polyolefin-type insulating resin material. The polyolefin-type insulating resin material of the invention contains no halogen atom, or its halogen content is at least lower than that of vinyl chloride resin. Such an electrical cable is called "halogen-free insulated electrical cable" (HF electrical cable), and a bundle of such electrical cables is referred to as a "HF-type cable bundle". When part of HF electrical cables contained in a single cable bundle is replaced by electrical cables in which the conductor element(s) is/are coated with polyvinyl chloride resin (PVC-type electrical cables), the bundle is called "mixed cable bundle". The wire harness of the invention is prepared by wrapping such a bundle with a harness-protecting material composed of a tape base (or tape base material) and an adhesive (or adhesive layer).

Recently, higher performance and functionality have been sought after, especially for vehicles and electrical products. To this end, many items of electronic equipment have been installed in vehicles, electrical products and the like. Further, for good and precise functioning, these vehicles or electrical products employ a plurality of electrical wires or cables for their internal wiring.

Generally, the plurality of electrical cables are assembled into an electrical cable bundle, which is then used as what is referred to as a "wire harness". The wire harness is also referred to as "assembled electrical cables", in which a plurality of electrical cables are assembled beforehand into ready-to-wire configurations. In other words, the necessary branching(s) and connector-mounting(s) at cable ends, for instance, are prepared beforehand, and the bundle of electrical cables is then wrapped with various forms of harness-protecting materials such as tapes, tubes and sheets.

The electrical cable used in the wire harness usually comprises one or several conductor element(s) made of e.g. copper, which is/are coated with a vinyl chloride resin (such as polyvinyl chloride), supplemented with additives e.g. a plasticizer and a heat stabilizer so as to make the cable flexible and formable (PVC-type electrical cable).

A harness-protecting material may be in the form of an adhesive tape, which itself comprises a tape base (material) made of a vinyl chloride resin e.g. polyvinyl chloride. A surface of the tape base is then painted (coated) with an adhesive (layer) which comprises natural or synthetic rubber etc. supplemented with an adhesive adjuvant, a plasticizer etc. The adhesive tape obtained is referred to hereinafter as a PVC-type adhesive tape.

However, the commonly used vinyl chloride resin contains halogen atoms in its molecular structure whereupon, when vehicles or electrical appliances are burnt e.g. to be discarded or processed as waste, toxic halogen gas is liberated in the air and pollutes the environment.

Accordingly, the vinyl chloride resin used in PVC-type electrical cables and PVC-type adhesive tapes is being replaced by a resin containing no halogen, as part of environment protection measures.

The replacement resins include, for example, a halogen-free flame retardant olefin resin, in which an olefin resin is supplemented with a flame retardant, a copper damage inhibitor, anti-oxidizing agent and the like..

Accordingly, as electrical cables for wire harnesses, PVC-type electrical cables may be used alone, or together with HF-type electrical cables, in which conductor elements made e.g. of copper are coated with a halogen-free resin. Furthermore, HF-type electrical cables may also be used alone.

Likewise, in the tape-shaped harness-protecting materials, PVC-type adhesive tapes may be used alone, or together with HP-type adhesive tapes, in which the base material is replaced by a HF-type resin. Furthermore, PVC-type adhesive tapes may also be used alone.

The wire harnesses used in vehicles are subjected to extremely severe environments surrounding the motor, so that heat- and oxidation-resistant qualities of the harnesses become very important criteria.

In such a context, wire harnesses have been prepared by wrapping with a PVC-type adhesive tape a bundle of electrical cables composed solely of HF-type electrical cables and a bundle of the latter mixed with PVC-type electrical cables. Hot oxidation tests effected on those harnesses revealed that the heat- and oxidation-resistant qualities of HF-type electrical cables in each harness are considerably lower than those of an individual HF-type electrical cable.

Further, wire harnesses have been prepared by wrapping with a HF-type adhesive tape a bundle of electrical cables composed solely of HF-type electrical cables and a bundle of the latter mixed with PVC-type electrical cables. Likewise, hot oxidation tests effected on those harnesses revealed that the heat- and oxidation-resistant qualities of HF-type electrical cables in each harness are considerably lower than those of an individual HF-type electrical cable.

The inventors have then investigated on the deterioration of the electrical cables contained in a wire harness, when various types of cable bundle are wrapped with a tape-shaped harness-protecting material.

As already mentioned, the tape-shaped harness-protecting material has a structure in which a surface of the tape base is painted with an adhesive. When this harness-protecting material is wrapped around a cable bundle of one kind or another, the adhesive is placed in direct contact with the cable bundles. As a result, the adhesive adjuvants, plasticizers etc. contained in the adhesive penetrate into the coatings of HF-type electrical wires and are diffused therein.

The diffused adhesive adjuvants, plasticizers etc. act on the conductor element, e.g. copper, of the HF-type electrical cables, and create copper ions having a catalytic effect.

The copper ions formed in the coatings of an individual HF-type electrical wire are trapped by copper damage inhibitors already existing in the coatings, and form a chelate compound, thus preventing catalytic activities. However, as the ionisation of copper is accelerated by the adhesive adjuvants, plasticizers etc., the copper damage inhibitors previously added to the HF-type wire coatings are consumed more than expected, and become deficient.

Then, the copper ions formed in excess of the copper damage inhibitors' capacity can no longer be stabilized as chelate compounds. The catalytically active copper ions thus cut off the chemical bonds in the coating material (e. g. HF-type resins), and accelerate its degradation. This phenomenon is called "copper damage". It causes the hot oxidation-resistant capability of the HF-type electrical wires contained in a wire harness to be considerably lower than that of an individual HF-type electrical wire.

Further, the anti-oxidizing agents added beforehand to the coatings of the HF-type electrical wires are dissolved and extracted by the adhesive adjuvants, plasticizers etc. which have moved to become present in the coating materials. Then, the adhesive adjuvants, plasticizers etc. containing the anti-oxidizing agents move again into the wire harness-protecting materials. Accordingly, the anti-oxidizing agents in the coatings diminish faster than their expected time-dependent reduction. The hot oxidation-resistant capacity of the HF-type electrical wires in a wire harness is thus considerably lower than that of an individual HF-type electrical wire.

Accordingly, in the tape-shaped harness-protecting materials, the adhesive adjuvants, plasticizers and other coating-noxious, low molecular-weight compounds (hereafter referred to as adhesive-side deterioration accelerators) are present in the adhesive which is placed in direct contact with the wire bundle surface, and greatly contribute to the deterioration of the electrical cables.

When, as in the case of PVC-type adhesive tapes, the tape base contains plasticizers and the like, the plasticizers and other coating-noxious low-molecular compounds (hereafter referred to as tape base-side deterioration accelerators) move into the wire coatings through the adhesive, and may cause a similar deterioration.

The present invention therefore has as a first main object to provide a tape-shaped harness-protecting material which substantially suppresses damage to electrical cables, in particular those coated with halogen-free resins, contained in a wire bundle for a wire harness. This object is attained by substantially suppressing copper damage caused at least by the migration of adhesive adjuvants, or by inhibiting copper damage and the decrease in anti-oxidizing agents contained in the coatings caused by the migration of adhesive-side deterioration accelerators and the tape base-side deterioration accelerators. Another object of the invention is to provide a wire harness implementing such a harness protecting material.

As mentioned above, a wire harness installed in automobiles or other vehicles is called "assembled electrical wires". Electrical cables having an appropriate specificity and size are selected, cut off and assembled to make a cable bundle. The bundle is then passed through a tube, or wrapped with a sheet and the like, and bundled by taping. Subsequently, various kinds of electrical parts are attached to the bundle and assembled to constitute an entity. An electrical cable is commonly prepared by grouping several conductor wires and covering them with a PVC resin coating. The conductor wire is usually made of annealed soft copper wire, or a tin-plated soft copper wire.

The tape commonly used (PVC tape) comprises a tape base composed of a PVC resin which is mixed with a plasticizer etc., and an adhesive painted on the base material. This adhesive comprises a base material made of low-molecular weight rubber e.g. SBR and NR, which is supplemented with an adhesive adjuvant (rosin-type resin) and a plasticizer (DOP, DINP, DBP). Other than tapes, common types of harness-protecting material include, for instance, a PVC tube and PVC sheet, in which PVC resin is supplemented with a plasticizer and the like. In other words, the PVC resin is predominantly used not only as insulator coatings for electrical cables, but also as cable- or harness-protecting materials (tapes, tubes, sheets).

However, the PVC electrical cables widely used as insulated cables raise environmental problems, and searches for replacement products have been undertaken. There has thus been proposed a HF-type electrical cable, in which polyolefin is mixed with a large quantity of inorganic filler as flame retardant.

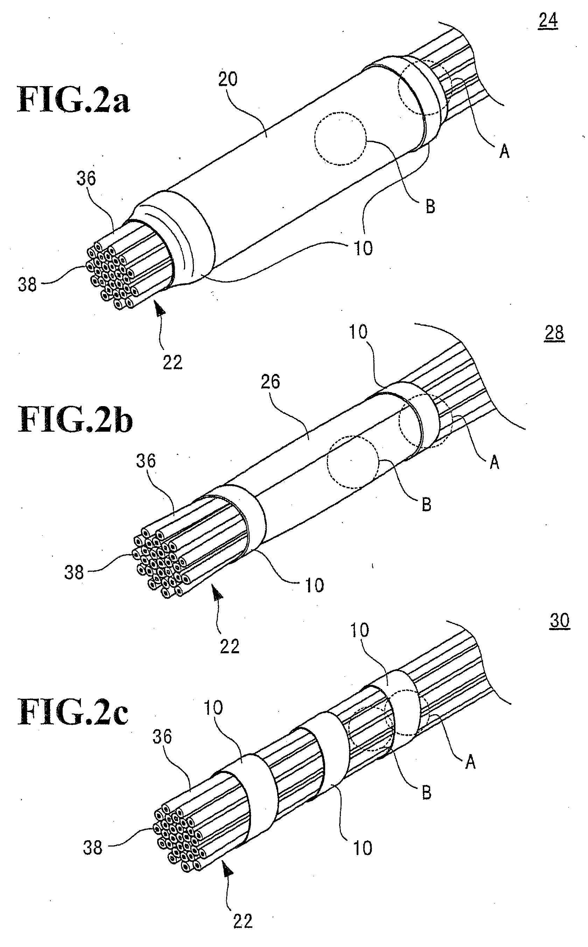

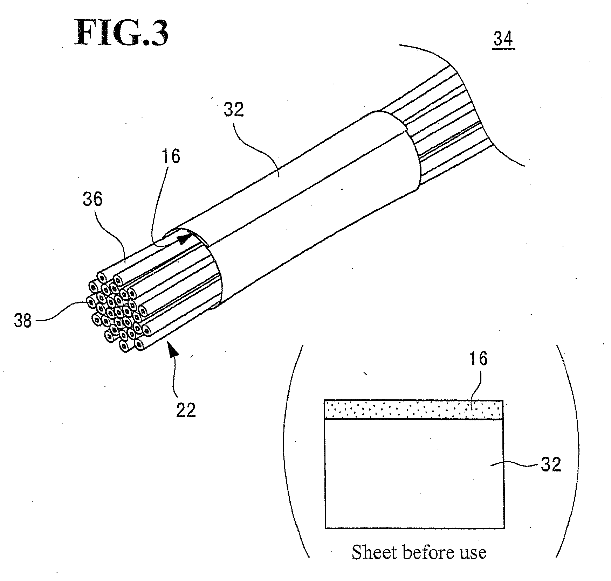

In order to test the hot oxidizing tendency of wire harnesses, a HF-type plain cable bundle is mounted with a PVC tube or a PVC sheet, and both ends of PVC tube or sheet are bundled with an adhesive-painted PVC tape to form a wire harness. A mixed cable bundle is likewise processed to form another wire harness (Figs.2 and 3). These wire harnesses are then subjected to hot oxidation tests.

As a result, it became clear that the wire harness made of a mixed cable bundle shows a much worse hot oxidizing property than the wire harness made of a plain HF cable bundle. The mixed cable bundle is then analysed to detect which part of the bundle is most affected. When a bundled portion (designated A) in which the adhesive-painted tape is used and non-bundled portion (designated B) are compared, the former of the mixed cable bundles tends to exhibit more cracks and deterioration (Figs.2 and 3).

After repeated experiments effected by the present inventors on hot oxidizing behaviour, it is now understood that the different behaviour between the above two types of bundles may stem from the phenomenon of migration of the plasticizer contained in the PVC tube or sheet, as well as the adhesive adjuvants, plasticizers or low-molecular compounds contained in the adhesive-painted PVC tape.

Firstly, a HF-type electrical cable contains a given quantity of anti-oxidizing agent from the beginning. This anti-oxidizing agent is dissolved in plasticizers and adhesive adjuvants, when the latter migrate to the cable from a PVC tape, tube or sheet (PVC-type protecting material). The plasticizers and the adhesive adjuvants then "carry" the anti-oxidizing agent out from the HF-type electrical cable, and go back to the PVC-type protecting material where the concentration gradient of the anti-oxidizing agent is lower. Accordingly, the HF-type electrical cable begins to lack the anti-oxidizing agent, and its oxidation is accelerated. To avoid this, the diffusion of anti-oxidizing agent must be stopped, e.g. by blocking the movement of the carriers such as plasticizers and adhesive adjuvants.

Secondly, when the plasticizers and adhesive adjuvants contained in the PVC-type protecting material move into the HF-type electrical cable, they react with copper wires in the cable and accelerate the ionisation of copper. This phenomenon causes copper damage, i.e. the copper ions thus formed act as catalysers, cut off the chemical bonds in the polymers used in cable coatings, and deteriorate the cable coatings. The ionisation of copper must therefore be stopped, e.g. by limiting the migration of the plasticizers and adhesive adjuvants which react with copper.

Thirdly, as mentioned above, the plasticizers and adhesive adjuvants in the PVC-type protecting material move into the HF-type electrical cable, react with copper wires and accelerate the ionisation of copper. Accordingly, the copper damage inhibitor, which is included in the HF-type electrical cable in a given quantity from the beginning, is consumed in excess. Such a copper damage inhibitor serves to stabilize the copper ions generated by the reaction of copper wires with water contained in the air which penetrates into the HF-type electrical cable through the PVC-type protecting material. However, it is not intended to stabilize the copper ions formed under the effect of plasticizers and adhesive adjuvants. The consumption of copper damage inhibitor must therefore be reduced, e.g. by inhibiting the ionisation of copper, i.e. preventing the migration of the plasticizers and adhesive adjuvants.

Fourthly, as explained above, the copper damage inhibitor contained in the HF-type electrical cable is dissolved in the plasticizers and adhesive adjuvants, when they migrate from the PVC-type protecting material to the HF-type electrical cable. The plasticizers and the adhesive adjuvants then "carry" the copper damage inhibitor out from the HF-type electrical cable, and go back to the PVC-type protecting material where the concentration gradient of the copper damage inhibitor is lower. The copper damage inhibitor is then consumed for stabilizing the copper ions generated by water in the air under the influence of plasticizers and adhesive adjuvants, on the one hand, and, on the other, is carried on the plasticizers and adhesive adjuvants and diffused from the HF-type electrical cable into the PVC-type protecting material. The amount of copper damage inhibitor decreases thus in a synergetic manner, and the oxidation of the HF-type electrical cable is further accentuated. The diffusion and decrease of the copper damage inhobotor must thus be prevented, e.g. by preventing the migration of the carriers such as the plasticizers and adhesive adjuvants.

As an example, the cable bundles are wrapped with a tube or sheet made of HF-type polyethylene or polypropylene (HF-type protecting material), and closed by an adhesive-painted HF-type tape. The wire harnesses thus obtained are then subjected to hot oxidizing tests. As a result, the wire harness made of a mixed cable bundle shows a much worse hot oxidizing property than the wire harness made of a HF-type plain cable bundle. The main cause of this difference may also reside in the fact that, in the mixed cable bundles, there occurs a migration of the plasticizers and adhesive adjuvants between the PVC-type electrical cables and the HF-type electrical cables. The anti-oxidizing agent and copper damage inhibitor must therefore be prevented from diffusing, and the migration of the plasticizers and adhesive adjuvants must be stopped.

As is well known, the adhesives painted on a base material (e.g. tape-shaped) of PVC- or HF-type protecting material are traditionally supplemented with plasticizers and adhesive adjuvants which tend to migrate. However, repeated experiments suggested that a high molecular polymer, which migrates less and has a sufficient adhesive power, should be used as base polymer of the adhesive.

As to the tape base of PVC- and HF-type protecting materials, if it is supplemented with an adsorbent agent, the latter may adsorb the plasticizers and prevent the latter from migrating.

As to the anti-oxidizing agent and copper damage inhibitor, if their concentration is suitably balanced between the HF-type electrical cable and the PVC-type protecting material, or between the HF-type electrical cable and the PVC-type electrical cable, their diffusion from the HF-type electrical cable to the PVC-type protecting material and the PVC-type electrical cable may be efficiently prevented, even though the plasticizers and adhesive adjuvants may not be completely immobilized.

Accordingly, another object of the invention is to provide a wire harness comprising a plain cable bundle made of HF-type electrical cables alone, or a mixed cable bundle in which part of the HF-type electrical cables is replaced by PVC-type electrical cables. In particular, when the harness-protecting material comprises a tape base painted with an adhesive, the plasticizers and adhesive adjuvants must be prevented from migrating, whilst the anti-oxidizing agent and copper damage inhibitor are prevented from moving from the HF-type electrical cables to the PVC-type protecting material and the PVC-type electrical cables. In this manner, the harness-protecting material procures a good anti-hot oxidation property, and the wire harness comprising this material obtains a stable and durable cable quality.

To the above end, there is provided a harness-protecting material comprising a base material comprising two faces, at least one face of which is coated with an adhesive;

the base material comprising a base organic material portion which includes a base polymer portion formed of a halogen-free resin or a substantially halogen-free resin; and

the adhesive comprising a base organic material portion which includes a base polymer portion, and an adhesive adjuvant which contains at least one compound selected from the group consisting of a hydrogenated terpene-type resin, a hydrogenated aromatic resin, a hydrogenated aliphatic-type resin, a cumarone-indene type resin, a phenol-type resin and a styrene-type resin.

Preferably, the adhesive contains an acrylic acid-type resin as the base polymer portion.

Preferably yet, the adhesive adjuvant is added in a proportion of about 10 to about 200 parts by weight, relative to 100 parts by weight of the base polymer portion of the adhesive.

Typically, at least one of the base material and the adhesive contain(s) at least one agent selected from the group consisting of an anti-oxidizing agent, a copper damage inhibitor and an adsorbent.

The adsorbent may comprise at least one of carbon black and silica.

Typically, the adsorbent is added in a proportion of about 1 to about 150 parts by weight, relative to 100 parts by weight of the base polymer portion of the adhesive, and/or in a proportion of about 1 to about 150 parts by weight, relative to 100 parts by weight of the base polymer portion of the base material.

The harness-protecting material of the invention may be adapted to cover a cable bundle that comprises at least one electrical cable covered with a halogen-free or substantially halogen-free cable coating which contains a determined amount of anti-oxidizing agent relative to parts by weight of base organic material portion of the halogen-free or substantially halogen-free cable coating. In such a case, the base material and/or the adhesive of the harness-protecting material preferably contain(s) about 10 to about 500 % by weight of anti-oxidizing agent, with regard to the determined amount in the halogen-free or substantially halogen-free cable coating.

Suitably, the base material and/or the adhesive contain(s) parts by weight of anti-oxidizing agent equivalent to the determined amount in the halogen-free or substantially halogen-free cable coating.

Suitably yet, the anti-oxidizing agent used in the base material and/or adhesive is of the same type as the anti-oxidizing agent used in the halogen-free or substantially halogen-free cable coating.

Preferably, the copper damage inhibitor is added in a proportion of about 0.001 to about 5 parts by weight , relative to 100 parts by weight of the base organic material portion of the base material, and/or in a proportion of about 0.001 to about 5 parts by weight, relative to 100 parts by weight of the base organic material portion of the adhesive.

The harness-protecting material of the invention may be adapted to cover a cable bundle that comprises at least one electrical cable covered with a halogen-free or substantially halogen-free cable coating which contains a determined amount of copper damage inhibitor relative to parts by weight of base organic material portion of the halogen-free or substantially halogen-free cable coating. In such a case, the base material and/or the adhesive of the harness-protecting material preferably contain(s) parts by weight of copper damage inhibitor equivalent to the determined amount in the halogen-free or substantially halogen-free cable coating.

Typically, the base material is in the form of a tape.

The substantially halogen-free resin defined above may contain about 5 % by weight, more preferably about 2 % by weight, of halogen at the most, relative to the total amount of resin including additives.

The invention also relates to a wire harness comprising a harness-protecting material, the material including a base material comprising two faces, at least one face of which is coated with an adhesive;

the base material comprising a base organic material portion which includes a base polymer portion formed of a halogen-free resin or a substantially halogen-free resin; and

the adhesive comprising a base organic material portion which includes a base polymer portion, and an adhesive adjuvant which contains at least one compound selected from the group consisting of a hydrogenated terpene-type resin, a hydrogenated aromatic resin, a hydrogenated aliphatic-type resin, a cumarone-indene type resin, a phenol-type resin and a styrene-type resin.

Preferably, the adhesive contains an acrylic acid-type resin as the base polymer portion.

Preferably yet, the adhesive adjuvant is added in a proportion of about 10 to about 200 parts by weight, relative to 100 parts by weight of the base polymer portion of the adhesive.

Typically, at least one of the base material and the adhesive contain(s) at least one agent selected from the group consisting of an anti-oxidizing agent, a copper damage inhibitor and an adsorbent.

preferably, the adsorbent comprises at least one of carbon black and silica.

Suitably, the adsorbent is added in a proportion of about 1 to about 150 parts by weight, relative to 100 parts by weight of the base polymer portion of the adhesive, and/or in a proportion of about 1 to about 150 parts by weight, relative to 100 parts by weight of the base polymer portion of the base material.

In the wire harness of the invention, the harness-protecting material may cover a cable bundle that comprises at least one electrical cable covered with a halogen-free or substantially halogen-free cable coating which contains a determined amount of anti-oxidizing agent relative to parts by weight of base organic material portion of the halogen-free or substantially halogen-free cable coating. In such a case, the base material and/or the adhesive of the harness-protecting material preferably contain(s) about 10 to about 500 % by weight of anti-oxidizing agent, with regard to the determined amount in the halogen-free or substantially halogen-free cable coating.

Typically, the base material and/or the adhesive contain(s) parts by weight of anti-oxidizing agent equivalent to the determined amount in the halogen-free or substantially halogen-free cable coating.

Preferably, the anti-oxidizing agent used in the base material and/or adhesive is of the same type as the anti-oxidizing agent used in the halogen-free or substantially halogen-free cable coating.

In the above invention, the copper damage inhibitor is preferably added in a proportion of about 0.001 to about 5 parts by weight , relative to 100 parts by weight of the base organic material portion of the base material, and/or in a proportion of about 0.001 to about 5 parts by weight, relative to 100 parts by weight of the base organic material portion of the adhesive.

The invention also relates to the use of the above harness-protecting material for a wire harness used in a vehicle.

In the wire harness according to the invention, the harness-protecting material may cover a cable bundle that comprises at least one electrical cable covered with a halogen-free or substantially halogen-free cable coating which contains a determined amount of copper damage inhibitor relative to parts by weight of base organic material portion of the halogen-free or substantially halogen-free cable coating. In such a case, the base material and/or the adhesive of the harness-protecting material preferably contain(s) parts by weight of copper damage inhibitor equivalent to the determined amount in the halogen-free or substantially halogen-free cable coating.

In the above harness-protecting material, an adhesive is painted on at least one surface of the tape base made of a HF-type resin or vinyl chloride resin, and this adhesive contains an adhesive adjuvant composed of one or several specific resin(s) having low reactivity and less prone to bond with other atoms and molecules. Such adhesive adjuvants include, for instance, a hydrogenated terpene-type resin, a hydrogenated aromatic resin, a hydrogenated aliphatic resin, cumarone-indene type resin, a phenol-type resin and a styrene-type resin.

Accordingly, even if the adhesive adjuvants move into the cable coatings, they do not act on the wire conductors made of copper. In this manner, the catalytic copper ions can be prevented from being formed in the cable coatings, and copper damage due to the migration of adhesive adjuvants is avoided. As a consequence, the deterioration of the electrical cables contained in wire bundles is considerably slowed down.

Further, in the above harness-protecting material, the adhesive adjuvant composed of one or several specific resin(s) may be added in a proportion of about 10 to about 200 parts by weight, relative to 100 parts by weight of base polymer portion of the adhesive. This proportion secures a sufficient adhesive power, while maintaining the ease with which the tape can be wrapped.

Further, in the above harness-protecting material, when an anti-oxidizing agent is added beforehand to the adhesive and/or the base material of the tape, its concentration gradient between the harness-protecting material and the cable coating can be minimized. Accordingly, the decrease in the anti-oxidizing agent contained in cable coatings due to the migration of adhesive-side deterioration accelerators and base material-side deterioration accelerators, can be suppressed or limited.

As explained above, in normal cases, copper ions are formed in the cable coatings due to the migration of adhesive-side deterioration accelerators and base material-side deterioration accelerators other than the adhesive adjuvants, and the copper damage inhibitors added beforehand to the cable coatings are consumed and cause copper damage. Even in such case, when a copper damage inhibitor is added to the adhesive and/or the base material of the tape beforehand, a copper damage inhibitor is newly supplied to from the harness-protecting material to the cable coatings. The copper damage can thus be securely avoided.

Accordingly, the use of one or several resin(s) specifically chosen among the above-cited resins as adhesive adjuvants, on the one hand, and the inclusion of an anti-oxidizing agent and/or copper damage inhibitor in the adhesive and/or base material of the tape, on the other, produce a synergetic effect, and can efficiently prevent the deterioration of the electrical cables contained in cable bundles.

Further, in the above harness-protecting material, the proportion of anti-oxidizing agent over 100 parts by weight of base organic material portion of the adhesive (e.g. SBR, natural rubber and an adhesive adjuvant) and/or those of the base material of the tape (e.g. PVC and DOP) may range from about 10 to about 500 % by weight (i.e. about 0.1 to 5 times), relative to parts by weight of anti-oxidizing agent over base organic material portion (e.g. polypropylene) contained in the coatings of the HF-type resin-coated electrical cables which are included in a cable bundle wrapped with a harness-protecting material. In this manner, the concentration of anti-oxidizing agents is well balanced between the harness-protecting material and the cable coatings. Accordingly, the decrease in the anti-oxidizing agent contained in cable coatings, due to the migration of adhesive-side deterioration accelerators and base material-side deterioration accelerators, can be suppressed or limited efficiently.

Further, the copper damage inhibitor may be added to the adhesive in a proportion of about 0.001 to about 5 parts by weight, relative to 100 parts by weight of base organic material portion (e.g. SBR, natural rubber and an adhesive adjuvant) of the adhesive. Likewise, the copper damage inhibitor may be added to the tape base material in a proportion of about 0.001 to about 5 parts by weight, relative to 100 parts by weight of base organic material portion (e.g. PVC and DOP) of the tape base material. The addition of the copper damage inhibitor to the cable coatings thus produces a great beneficial effect, and does not deteriorate the quality of the harness-protecting material.

Accordingly, the use of one or several resin(s) specifically chosen among the above-cited resins as adhesive adjuvants, on the one hand, and the inclusion of an anti-oxidizing agent and/or copper damage inhibitor in the adhesive and/or base material of the tape, on the other, produces a synergetic effect, and can efficiently prevent the deterioration of the electrical cables contained in a cable bundle.

According to the above harness-protecting material, the anti-oxidizing agents used in the adhesive and/or tape base material and in the cable coatings may be of the same type. The concentration of the anti-oxidizing agent can thus be easily balanced between the harness-protecting material and the cable coatings. The decrease in the anti-oxidizing agent contained in cable coatings due to the migration of adhesive-side deterioration accelerators and tape base material-side deterioration accelerators, can be suppressed or limited more efficiently.

According to the above wire harness, the electrical cables contained in a cable bundle do not deteriorate in a substantial way. The quality of the wire harness can thus be maintained for long.

Further, even if a cable bundle contains electrical cables coated with a HF-type resin and those coated with vinyl chloride resin as a mixture, the HF-type resin coated cables do not deteriorate in a substantial manner, and the wire harness can maintain its quality for an appreciably long time.

As a second aspect of the invention, in the above harness-protecting material, the adhesive and/or the tape base material contain(s) an adsorbent, which adsorbs the adhesive-side deterioration accelerators such as an adhesive adjuvant and the tape base material-side deterioration accelerators such as a plasticizer. In this manner, both types of deterioration accelerators are blocked in the harness-protecting material and prevented from moving into the cable coatings. Accordingly, the copper damage due to the migration of adhesive-side deterioration accelerators and tape base material-side deterioration accelerators, as well as the decrease in the anti-oxidizing agent contained in cable coatings, can be suppressed or limited, and the deterioration of the electrical cables contained in a cable bundle can be slowed down considerably.

Even if the adhesive adjuvant is not adsorbed by the adsorbent in totality and part of adjuvant moves into the cable coatings, the adjuvant does not act on the cable's conductor element made of copper. Thus, the formation of copper ions in the cable coatings is prevented or restricted. Accordingly, the copper damage owing to the adhesive adjuvant is securely avoided, and the deterioration of the electrical cables in a cable bundle owing to the immigration of the adhesive adjuvant is considerably slowed down.

In the above harness-protecting material, the adsorbent may be added to the adhesive in a proportion of about 1 to about 150 parts by weight, relative to 100 parts by weight of base polymer portion (e.g. SBR and natural rubber) of the adhesive. Likewise, the adsorbent may be added to the tape base material in a proportion of about 1 to about 150 parts by weight, relative to 100 parts by weight of base polymer portion (e.g. PVC) of the tape base. The addition of adsorbent to the wire coatings thus produces a great beneficial effect, whilst it does not impede the wrapping operation. Further, the adhesive adjuvant is added in a proportion of about 10 to about 200 parts by weight, relative to 100 parts by weight of adhesive's base polymer portion (e.g. SBR and natural rubber). Accordingly, a sufficient adhesive capacity is maintained, and the wrapping operation is not damaged.

Further, in the above harness-protecting material, the adhesive-side deterioration accelerators and the tape base-side deterioration accelerators may not be adsorbed by the adsorbent in totality and part of accelerators may move into the wire coatings. Even in such case, when the anti-oxidizing agent is added to the adhesive and/or tape base beforehand, the concentration gradient of anti-oxidizing agent between the harness-protecting material and the cable coatings can be minimized. Accordingly, the decrease in the anti-oxidizing agent contained in cable coatings, owing to the migration of adhesive-side deterioration accelerators and base material-side deterioration accelerators, can be suppressed or limited.

On the other hand, when the adhesive and/or the tape base contain(s) a copper damage inhibitor, copper ions may be formed in the cable coatings, owing to the migration of the adhesive-side deterioration accelerators and tape base-side deterioration accelerators which are not adsorbed by the adsorbent. Then, the copper damage inhibitor contained in the cable coatings beforehand may be consumed, and cause copper damage. Even in such case, the copper damage inhibitor is freshly supplied from the harness-protecting material to the cable coatings, so that the copper damage can be securely prevented.

There are thus produced three effects: the effect of adding the adsorbent to the adhesive and/or tape base, the effect of using one or several resins chosen from the specific resins as adhesive adjuvant, and the effect of adding the anti-oxidizing agent and/or copper damage inhibitor to the adhesive and/or tape base. Thanks to these effects, the electrical cables contained in a cable bundle can be efficiently prevented from the deterioration.

As mentioned supra, the proportion of the anti-oxidizing agent added to the base organic material portion of adhesive and/or tape base material in the harness-protecting material may range from about 10 to about 500 % by weight, relative to that of the anti-oxidizing agent added to the base organic material portion of the coatings of HF-type resin-coated electrical cables which are included in a wire bundle wrapped with harness-protecting materials. In this manner, the concentration of anti-oxidizing agents is well balanced between the harness-protecting material and the cable coatings. Accordingly, the decrease in the anti-oxidizing agent contained in cable coatings, due to the migration of adhesive-side deterioration accelerators and tape base-side deterioration accelerators, can be suppressed or limited efficiently.

Further, the copper damage inhibitor may be added to the adhesive in a proportion of about 0.001 to about 5 parts by weight, relative to 100 parts by weight of base organic material portion of the adhesive. Likewise, the copper damage inhibitor may be added to the tape base in a proportion of about 0.001 to about 5 parts by weight, relative to 100 parts by weight of base organic material portion of the tape base material. The addition of the copper damage inhibitor to the cable coatings thus produces a great beneficial effect, whilst it does not deteriorate the quality of the harness-protecting material.

Thus, the inclusion of adsorbent in the adhesive and/or tape base, the use of one or several resin(s) specifically chosen among the above-cited resins as adhesive adjuvant, and the inclusion of an anti-oxidizing agent and/or copper damage inhibitor in the adhesive and/or base material of the tape produce a synergetic effect, and can efficiently prevent the deterioration of the electrical wires contained in wire bundles.

According to the above harness-protecting material, the anti-oxidizing agents used in the adhesive and/or tape base material and in the cable coatings may belong to the same type. The concentration of the anti-oxidizing agent can thus be easily balanced between the harness-protecting material and the cable coatings. The decrease in the anti-oxidizing agent contained in cable coatings, due to the migration of adhesive-side deterioration accelerators and tape base material-side deterioration accelerators, can be thus suppressed or limited more efficiently.

According to the above wire harness, the electrical cables contained in a cable bundle do not deteriorate in a substantial way. The quality of the wire harness can thus be maintained for long time.

Further, even if a cable bundle contains electrical cables coated with a HF-type resin and those coated with vinyl chloride resin as a mixture, the HF-type resin coated cables do not deteriorate in a substantial manner, and the wire harness can maintain its quality for an appreciably long time.

In the above harness-protecting material, the adhesive painted on the surface of the tape base may contain an acrylic acid-type resin as base polymer portion, so that the harness-protecting material can maintain a good anti-hot oxidation property. As a result, the insulated HF-type electrical cables are prevented from the decrease in anti-hot oxidation property.

Further, the tape base and/or adhesive preferably contain(s) an adsorbent.

Examples of adsorbent include silica, carbon black, calcium carbonate, magnesium carbonate and clay. For instance, when carbon black is used, the tape base and/or adhesive become more durable at least. When silica is used, at least the heat and acid resistance of the tape base and/or adhesive is improved. Accordingly, the addition of an adsorbent to the tape base and/or adhesive reinforces the protection of the insulated HF-type electrical cables, and prevents the latter from the decrease in anti-hot oxidation property.

When the tape base used is vinyl chloride-type resin material, the adsorbent adsorbs the plasticizer and acrylic acid-type resin, which are thus prevented from migrating from the adhesive-painted tape base into the insulated HF electrical cables. The insulated HF-type electrical cables are thus prevented from the deteriorating in anti-hot oxidation property. As to base polymers of the vinyl chloride-type resin material, any compound suitable as base polymer portion for the cable coatings in the insulated PVC-type electrical cables may be used. To this is added, where appropriate, a plasticizer, a stabilizer, etc..

When the tape base used is a HF-type resin material, the addition of an adsorbent improves the anti-hot oxidation property of the tape base. The insulated HF-type electrical cables are thus prevented from the degradation in anti-hot oxidation property. As to base polymers of the HF-type resin material, any compound suitable as base polymer portion for the cable coatings in the insulated HF electrical cables may be used. To this may be added a bromine-based flame-retardant containing low halogen. There can also be used a HF-type flame-retardant e.g. a metal hydrate such as magnesium hydroxide and aluminium hydroxide.

When the amount of adsorbent is less than about 1 part by weight (based on the definition supra), there is no effect. Conversely, when it is more than 150 parts by weight, workability deteriorates. A preferred amount range is between about 5 and about 100 parts by weight. When the amount is less than 5 parts by weight, the effect of the adsorbent is rather weak. Conversely, when it is more than 100 parts by weight, workability somewhat deteriorates.

As anti-oxidizing agent and copper damage inhibitor, any compound suitable for the insulated HF-type electrical cables may be used. When the anti-oxidizing agent and/or copper damage inhibitor are added to the tape base and/or adhesive, the anti-oxidizing agent and/or copper damage inhibitor contained in the cable coatings of the insulated HF-type electrical cables are prevented from diffusing into the harness-protecting material (adhesive, tape base, tube, sheet). The insulated HF-type electrical cables are thus prevented from the deterioration of anti-hot oxidation property.

When the tape base used is a HF-type resin material and the anti-oxidizing agent and/or copper damage inhibitor is/are added to the HF-type protecting material (tape base and/or adhesive), the insulated HF-type electrical cables are affected less by water in the air and the adhesive, as the HF-type protecting material acts as a barrier. The insulated HF-type electrical cables are thus prevented from the lowering of their anti-hot oxidation property. When the conductor element used is a copper wire, the copper damage inhibitor contained in the cable coatings of the insulated HF-type electrical cables is efficiently consumed, such that the copper ions generated by the reaction of water in the air with the copper wire, are stabilized. The insulated HF-type electrical cables are thus prevented from the lowering of their anti-hot oxidation property.

There is little concentration gradient of the anti-oxidizing agent and/or copper damage inhibitor between the insulated HF-type electrical cables and the harness-protecting material (tape base and adhesive). This lack of gradient prevents both agents from being diffused.

In the wire harness of the invention, the harness-protecting material wrapped around the electrical bundle contains an adhesive, and the latter may contain an acrylic acid-type resin. Further, the tape base and/or adhesive contain, where appropriate, an adsorbent, an anti-oxidizing agent and/or a copper damage inhibitor, so that the anti-hot oxidation property of the insulated HF-type electrical cable can be maintained easily.

When the tape base used is a vinyl chloride-type resin material, the adsorbent adsorbs the plasticizer, so that the plasticizer is prevented from migrating from the adhesive-painted tape into the insulated HF-type electrical cable. The latter is thus prevented from the deterioration of its anti-hot oxidation property. When the tape base used is a HF-type resin material, the anti-hot oxidation property of the adhesive-painted tape is improved, not to mention being prevented from the deterioration.

As already mentioned, the copper damage inhibitor and/or anti-oxidizing agent are prevented from diffusing from the insulated HF-type electrical cables into the insulated vinyl chloride electrical cable and harness-protecting material. The insulated HF-type electrical cables are thus prevented from the deterioration of their anti-hot oxidation property.

Preferably, the copper damage inhibitor and/or anti-oxidizing agent contained in each electrical cable and harness-protecting material belong to the same type. Although there exist many kinds of copper damage inhibitor and anti-oxidizing agent, by using the same type, their concentration equilibrium can be maintained more appropriately and efficiently.

The above, and the other objects, features and advantages of the present invention will be made apparent from the following description of the preferred embodiments, given as non-limiting examples, with reference to the accompanying drawings, in which:

Fig.1(a) is a cross-sectional view of a tape, one face of which is painted with an adhesive;

Fig.1(b) is a cross-sectional view of a tape, both faces of which are painted with an adhesive;

Fig.2(a) is a perspective view of a cable bundle wrapped with a tube, then with tapes one face of which is painted with an adhesive;

Fig.2(b) is a perspective view of a cable bundle wrapped with a sheet, then with tapes one face of which is painted with an adhesive;

Fig.2(c) is a perspective view of a cable bundle wrapped with tapes one face of which is painted with an adhesive; and

Fig.3 is a perspective view of a cable bundle wrapped with tapes both faces of which are painted with an adhesive.

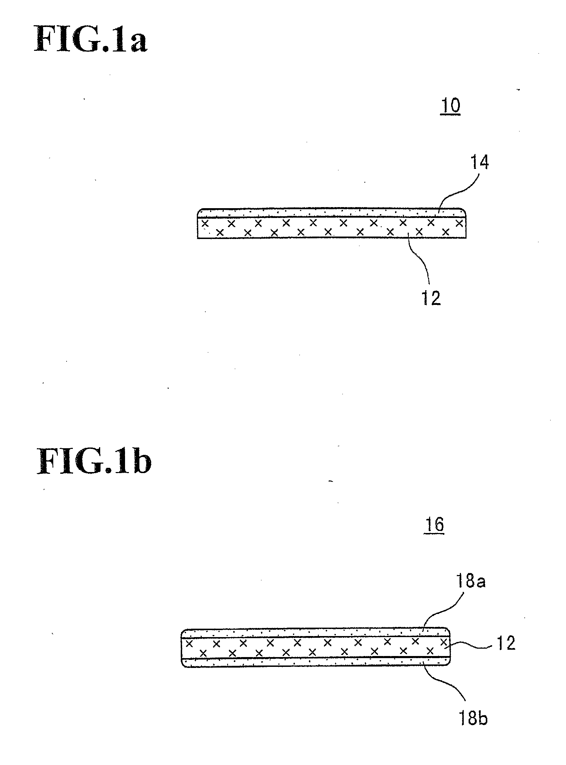

In the present invention, Fig.1 shows the cross-section of a tape painted with an adhesive. Fig.1a shows a tape 10 in which one face of a tape base 12 is painted with an adhesive, forming an adhesive layer 14, whilst Fig.1b shows a tape 16 in which both faces of a tape base 12 is painted with an adhesive, forming adhesive layers 18a and 18b. The length and width of the tapes 10 and 16 is appropriately chosen depending on the applied location.

Fig.2 shows an example of wire harness prepared by using a tape 10 of which one face is painted with an adhesive. Fig.2a shows an external view of a wire harness 24, in which the cable bundle 22 is passed through a tube 20, and one-side painted tapes 10 are wound around both ends of the tube 20, so that the space between the tube 20 and the cable bundle 22 is closed. Fig.2b shows an external view of a wire harness 28, in which the electrical cables 22 are wrapped with a sheet 26, and one-side painted tapes 10 are wound around both ends of the sheet 26, so that the space between the tube 20 and the cable bundle 22 is closed. Fig.2c shows an external view of a wire harness 30, in which one-side painted tapes 10 are merely wound around the cable bundle 22.

Fig.3 show an example of wire harness 34 prepared by using a tape 16, both faces of which are painted with adhesives. In this example, the tape 16 is adhered to the end portions of the sheet 32, then the sheet 32 is wrapped around the cable bundle 22.

In the foregoing figures, the tape base 12 of the adhesive-painted tapes 10 and 16 contains a base polymer portion formed of a PVC resin, or of a HF-type resin which contains no halogen or contains halogen whose content is lower than that in the PVC-type resin. The tape base 12 contains, where necessary, an adsorbent, an anti-oxidizing agent and/or a copper damage inhibitor. Further, the cable bundle 22 may be a plain HF-type cable bundle, or a mixed cable bundle in which PVC electrical cables and HF-type electrical cables are mixed. An electrical conductor element 38 of each electrical cable 36 is composed of 7 soft copper wires.

In the figures, 30 electrical cables are formed into a cable bundle, and the latter is covered with a harness-protecting material (tape 10 and 16, tube 20, sheet 26).

The term "surface" in the present invention means part or the whole surface of one or both face(s) of the tape base.

For the purpose of the invention, additions of adhesive adjuvant and adsorbent are defined relative to "base polymer portion" of the tape base and/or adhesive, whilst additions of anti-oxidizing agent and copper damage inhibitor are defined relative to "base organic material portion" of the cable coating, tape base and/or adhesive, the both portions excluding the organic compounds used for anti-oxidizing agents and/or copper damage inhibitors.

The harness-protecting material of the invention is wrapped around a bundle of electrical cables (cable bundle), and comprises a base material in the form of a tape made of a HF-type resin or a vinyl chloride resin. At least one face of the tape base is painted with an adhesive, which contains a specific resin as adhesive adjuvant.

As to the cable coatings in the insulated HF-type electrical cables, examples of base polymer portion used as cable coatings include olefins e.g. propylene polymer (homopolymer and propylene random or block copolymer), polyethylene (high-density polyethylene, straight-chain low-density polyethylene, low-density polyethylene, ultra low-density polyethylene, etc.), polybutene polymer, ethylene copolymer (ethylene - vinyl acetate copolymer, ethylene - ethylacrylate copolymer, etc.), olefin-type elastomer (polypropylene - ethylene/propylene copolymer), or one of the above copolymers in which the double bond is saturated by hydrogenation. The above polymers may be used alone or in a mixture of several polymers. To these are added halogen-free flame-retardants, e.g. metal hydrates such as magnesium hydroxide and aluminium hydroxide. To these may be further added a copper damage inhibitor, an anti-oxidizing agent, and, where suitable, a formability adjuvant and a cross-linking agent for improving heat resistance. In the present invention, the anti-oxidizing agent and copper damage inhibitor are preferably added. Examples of low-halogen flame-retardants include bromide-type compounds. Flame-retardants may also include polymers containing halogen whose level is less than that of PVC resins (e.g. a retardant containing halogen atom, e.g. bromine, such as tetra-bromo bis-phenol A and its derivative).

Examples of anti-oxidizing agent contained in HF electrical cables include; phenol-type compounds e.g. tetrakis-[methylene-3-(3',5'-ditertiary-butyl-4'-hydroxyphenyl) propionate] methane and octa-decyl-3-(3,5-di-tertiary-butyl-4-hydroxyphenyl) propionate; and amine-type compounds e.g. 4,4'-dioctyldiphenylamine, N-phenyl-N'-1,3-dimethylbutyl-p-phenylenediamine. The anti-oxidizing agents may be used alone, or as a mixture of several agents.

Examples of copper damage inhibitor contained in HF electrical cables include 1,2,3-benzotriazole, tolyltriazole, and its derivatives, tolyltriazole amine salts, tolyltriazole potassium salts, 3-(N-salicyloyl)amino-1,2,4-triazole, a triazine-type derivative, a hydrazide-type compound e.g. decamethylene dicarboxylic acid disalicyloylhydrazide, oxalic acid derivatives and salicylic acid derivatives. These copper damage inhibitors may be used alone, or as a mixture of several agents.

As to the cable coatings in the insulated PVC-type electrical cables, examples of base polymer portion include, for example, polyvinyl chloride, ethylene - vinyl chloride copolymer, and propylene - vinyl chloride copolymer. The base polymers are supplemented with a plasticizer, which is easily mixable with the PVC resin, water-resistant and dielectric, in order to render the PVC resin flexible, improve its formability and reduce material costs. May further be added to this an anti-oxidizing agent which is suitable for the HF electrical cables.

The electrical conductor elements for insulated HF-type or PVC-type electrical cables include, for instance, annealed soft copper wires, tin-plated soft copper wires and tungsten wires, but are not limited to them.

As to the adhesive of the harness-protecting material, examples of its base polymer portion includes; a rubber-type resin containing natural and synthetic rubber; an acrylic acid-type resin; a silicone-type resin; a polyether-type resin; and a polyurethane-type resin. The base polymer may contains, besides adhesive adjuvants, a plasticizer, a softener, a filler and other additives, insofar as they serve for the object of the invention.

Examples of acrylic acid-type resin as adhesive include a homopolymer containing acrylic acid or its ester (e. g. ethyl acrylate, butyl acrylate and 2-ethylhexyl acrylate) as sole or main monomers, or a copolymer of at least one of these monomers with another monomers e.g. vinyl acetate, methyl methacrylate and the like. The acrylic acid-type resins may be used alone, or as a mixture of several resins. Examples of acrylic acid ester suitable as acrylic acid-type resins include methyl acrylate, ethyl acrylate, propyl acrylate, butyl acrylate, 2-ethylhexyl acrylate, 2-hydroxyethyl acrylate, 2-hydroxypropyl acrylate, tetrafurfuryl acrylate and isononyl acrylate. The acrylic acid-type resins used have an adhesive nature. They may be an emulsion type, a solvent type, a hot melt type, a liquid-solidified type, a water-soluble type, a calendar-shaped type and a cross-linked type.

As a first aspect of the invention, the adhesive comprises an adhesive adjuvant. The adhesive adjuvants may comprise a hydrogenated terpene-type resin, a hydrogenated aromatic resin, a hydrogenated aliphatic resin, a cumarone-indene-type resin, a phenol-type resin, a styrene-type resin or a mixture of several of them.

The "hydrogenated terpene-type resin", "hydrogenated aromatic resin" and "hydrogenated aliphatic resin" respectively mean a terpene-type resin to which hydrogen is added; a resin where a product obtained by polymerising $C_5$ fraction is hydrogenated; and a resin where a product obtained by polymerising $C_9$ fraction is hydrogenated.

Examples of hydrogenated terpene-type resin include a resin comprising poly ($\beta$-pinene), poly di-pentene, poly ($\alpha$-pinene), $\alpha$-pinene phenol, di-pentene phenol, terpene phenol and the like as skeletal structure, the latter being then hydrogenated.

Examples of hydrogenated aromatic resin include a resin comprising indene, styrene, methyl indene, $\alpha$-methyl styrene and the like as skeletal structure, the latter being then hydrogenated.

Examples of hydrogenated aliphatic resin include a resin comprising isoprene, cyclopentadiene, 1,3-pentadiene, 1-pentene, 2-pentene, dicyclopentadiene and the like as skeletal structure, the latter being then hydrogenated.

The "cumarone-indene-type resin" means a resin obtained by polymerising a coal tar fraction containing cumarone resin and indene resin. The "phenol-type resin" means a resin obtained by polymerising phenol and its derivatives as main constituent. The "styrene-type resin" means a resin obtained by polymerising styrene and its derivatives as main constituent.

Examples of cumarone-indene-type resin include a resin comprising cumarone, indene, styrene, di-cyclopentadiene, $\alpha$-methylstyrene and the like as skeletal structure.

Examples of phenol-type resin include a resin comprising an alkylphenol such as p-t-butylphenol as skeletal structure..

Examples of styrene-type resin include a resin comprising styrene, $\alpha$-methylstyrene, p-methylstyrene and the like as skeletal structure.

The above resins may be prepared as functions of the type of base polymer portion of the adhesive, the degree of adhesion to be conferred, the costs and the purpose. When the adhesive adjuvant contains several specific resins, they may belong to the same type or different types of products. Their choice is not particularly limited.

The adhesive adjuvant is preferably added to the adhesive in a proportion of about 10 to about 200 parts by weight, relative to 100 parts by weight of base polymer portion (as defined supra) of the adhesive.

When the above amount added is less than 10 parts by weight, the adhesion tends to be insufficient, and when the amount is more than 200 parts by weight, the wrapping operation tends to become difficult. More preferably, the adhesive adjuvant is added in a proportion of about 20 to about 100 parts by weight, from the view point of tucking, adhesive and retaining power.

The tape base, painted with the above adjuvant-added adhesive, may be composed of any of HF-type resins and vinyl chloride resins.

The "HF-type resin" means a resin free of halogen, or a resin containing halogen atom less than so-called "vinyl chloride resin compound". The "vinyl chloride resin compound" means a forming material in which vinyl chloride resin is supplemented with a plasticizer, a stabilizer and a filler, and the whole mixture is kneaded and shaped into a suitable form. Such a resin containing halogen atom less than the vinyl chloride resin compounds is referred to as "substantially halogen-free resin" in the present invention.

In other words, the HF-type resin of the invention comprises not only a resin containing no halogen, but also a low-halogen containing resin whose halogen content is less than that of known vinyl chloride resin compounds. The low-halogen containing resin includes cases in which the resin may contain halogen atoms in its resin structure or as additives e.g. flame-retardant, but the resin's halogen content is in any case less than that of vinyl chloride resin compound.

A known vinyl chloride resin compound typically contains 35 % by weight of halogen, relative to the total amount of compound including additives.

Examples of HF-type resin include a non-halogen non-combustible olefin-type resin, in which an olefin resin (e.g. polypropylene, polyethylene and propylene-ethylene copolymer) is supplemented with a flame-retardant (a non-halogen flame-retardant e.g. magnesium hydroxide and aluminium hydroxide or a halogen-containing flame-retardant e.g. tetra-bromo bis-phenol and its derivatives), an anti-oxidizing agent (e.g. phenol- or amine-type compound), and/or a copper damage inhibitor (e.g. a triazine-type derivative). However, the HF-type resin of the invention is not limited to the above examples.

The "vinyl chloride resin" means homopolymer of vinyl chloride or a copolymer which contains vinyl chloride as main constituent. They may also be mixed. Examples of such resin include polyvinyl chloride, ethylene-vinyl chloride copolymer and propylene-vinyl chloride copolymer.

Preferably, the adhesive and/or tape base contain(s) an anti-oxidizing agent and/or a copper damage inhibitor in a suitable amount.

The adhesive and/or the tape base may also contain an adsorbent such as carbon black and silica.

When various resins used for the adhesive and/or tape base are commonly used for other ends, each resin may not require any anti-oxidizing agent and/or copper damage inhibitor. According to the invention, even in such case, the harness-protecting material contains an anti-oxidizing agent and/or a copper damage inhibitor.

Polyvinyl chloride is commonly supplemented with a plasticizer, a heat stabilizer and the like, but often not with an anti-oxidizing agent. Accordingly, when the harness-protecting material of the invention utilizes polyvinyl chloride, it preferably contains an anti-oxidizing agent in a suitable amount.

The "anti-oxidizing agent" of the invention means an organic compound added for inhibiting or delaying the oxidation phenomenon, in which the physical and chemical properties of a high molecular material change with time under certain environmental factors and the material's performance deteriorates.

Examples of such agent include a phenol-type compound such as tetrakis-[methylene-3-(3',5'-di-tertiary-butyl-4'-hydroxyphenyl) propionate] methane and octa-decyl-3-(3,5-di-tertiary-butyl-4-hydroxyphenyl) propionate; and amine-type compounds e.g. 4,4'-dioctyldiphenylamine, N-phenyl-N'-1,3-dimethylbutyl-p-phenylenediamine. The anti-oxidizing agents may be used alone, or as a mixture of several agents.

The ratio of the anti-oxidizing agent added to the adhesive and/or the base material of the tape preferably range from about 10 to about 500 % by weight, relative to that of the anti-oxidizing agent (as defined supra) contained in the cable coatings of the HF-type resin-coated electrical cables which are included in a cable bundle wrapped with harness-protecting materials.

When the amount used is less than 10 % by weight, a sufficient effect may not be obtained. When the amount is more than 500 % by weight, handling operation becomes difficult and not practical. In order to efficiently prevent the anti-oxidizing agent from moving from the cable coatings into the harness-protecting material, the amount is preferably limited to between about 10 and about 150 % by weight. The anti-oxidizing agent used in the adhesive and/or tape base and that in the cable coatings belong preferably to the same type.

The "ratio of anti-oxidizing agent" contained in the cable coatings in which the electrical cables are coated with a HF-type resin supplemented with an anti-oxidizing agent means the ratio by weight of the anti-oxidizing agent relative to the base organic material portion of the cable coatings (i.e. coating's organic component excluding the anti-oxidizing agent).

When the ratio of anti-oxidizing agent in the cable coatings is e.g. 3 % by weight, the adhesive and/or tape base preferably contains about 0.3 (in case of 10 % equivalent supra) to about 15 % (in case of 500 % equivalent supra) by weight of anti-oxidizing agent.

The copper damage inhibitor is usually included in the coatings covered around a conductor made mainly of copper. It captures catalytically active copper ions as chelate compounds and stabilizes the cable coatings. The copper damage inhibitor thus prevents the deterioration of the cable coating resin due to copper ions.

Examples of copper damage inhibitor contained in HF electrical cables include 1,2,3-benzotriazole, tolyltriazole, and its derivatives, tolyltriazole amine salts, tolyltriazole potassium salts, 3-(N-salicyloyl) amino-1,2,4-triazole, a triazine-type derivative, a hydrazide-type compound e.g. decamethylene dicarboxylic acid disalicyloylhydrazide, oxalic acid derivatives and salicylic acid derivatives.

A low melting point anti copper agent is usually preferred, since it is easily dissolved and moves into the cable coatings, when the harness-protecting material is heated. These copper damage inhibitors may be used alone, or as a mixture of several agents.

The copper damage inhibitor may be added to the adhesive in a proportion of about 0.001 to about 5 parts by weight, relative to 100 parts by weight of base organic material portion of the adhesive. Likewise, the copper damage inhibitor may be added to the tape base material in a proportion of about 0.001 to about 5 parts by weight, relative to 100 parts by weight of base organic material portion of the tape base.

When the quantity is less than 0.001 parts by weight, the effect of the invention is not sufficient. When the amount is more than 5 parts by weight, the additives precipitate on the surface of the resin and crystallize thereon (formation of bloom). These crystals tend to hurt the quality. In order to reinforce the effect of supplying the copper damage inhibitor to the cable coatings, the agent is preferably added in a proportion of about 0.01 to about 5 parts by weight.

The effect of the harness-protecting material is explained in more detail hereunder.

In the harness-protecting material of the invention, the adhesive is painted on at least one face of the tape base made of a HF-type resin or vinyl chloride resin, and the adhesive contains an adhesive adjuvant. The adhesive adjuvants include, as mentioned supra, a hydrogenated terpene-type resin, a hydrogenated aromatic resin, a hydrogenated aliphatic resin, cumarone-indene type resin, a phenol-type resin, a styrene-type resin and a mixture thereof. A low reactivity resin, less prone to bond to other atoms or molecules, is preferably used.

Accordingly, even if the adhesive adjuvant moves into the cable coatings, it does not react with the electrical conductors made of copper. The catalytically active copper ions are thus prevented from being formed in the cable coatings, and the copper damage caused by the movement of the adhesive adjuvant can be avoided. The deterioration of the electrical cables contained in cable bundles is then considerably slowed down.

Further, when the adhesive and/or tape base contain an anti-oxidizing agent beforehand, the concentration gradient of the agent between the harness-protecting material and the cable coating can be minimized. Consequently, the decrease in anti-oxidizing agent in the cable coating, caused by the migration of the adhesive-side and the tape base-side deterioration accelerators, can be limited or stopped.

In the above case, the anti-oxidizing agent in the adhesive and/or tape base and that in the cable coating are preferably of the same type. In this manner, the concentration equilibrium of the agent can be easily attained between the harness-protecting material and the cable coating. Consequently, the decrease in anti-oxidizing agent in the cable coating, caused by the migration of the adhesive-side and the tape base-side deterioration accelerators, can be limited or stopped more efficiently.

The catalytically active copper ions may be formed in the cable coatings, due to the migration of the adhesive-side and the tape base-side deterioration accelerators, other than the adhesive adjuvants. The previously-added copper damage inhibitor is then consumed and causes copper damage. In such a case, when the adhesive and/or tape base contain a copper damage inhibitor beforehand, the latter is supplied freshly from the harness-protecting material into the cable coating, and copper damage can be securely prevented.

As the adhesive adjuvant comprises one or several specific resin(s) indicated above and the adhesive and/or tape base contain(s) an anti-oxidizing agent and/or a copper damage inhibitor, such a combined application produces a synergic effect, and cable deterioration can be avoided in an efficient manner.

In the present harness-protecting material, the adhesive adjuvant composed of one or several specific resin(s) is preferably added in a proportion of about 10 to about 200 parts by weight, relative to 100 parts by weight of base polymer portion of the adhesive. Under such conditions, a required adhesive power is secured and the wrapping operation is not adversely affected.

As already mentioned, the anti-oxidizing agent contained in the adhesive and/or tape base is preferably added in a proportion of about 10 to about 500 % by weight, relative to the anti-oxidizing agent contained in the coatings of the HF-type resin-coated electrical wires which are included in a cable bundle wrapped with harness-protecting materials.

In the above range, the concentration equilibrium of the agent is maintained between the harness-protecting material and the cable coating. As a result, the decrease in anti-oxidizing agent in the cable coating, due to the migration of the adhesive-side and tape base-side deterioration accelerators, can be efficiently limited or suppressed.

The copper damage inhibitor is preferably added to the adhesive in a proportion of about 0.001 to about 5 parts by weight, relative to 100 parts by weight of base organic material portion of the adhesive. Likewise, it is preferably added to the tape base in a proportion of about 0.001 to about 5 parts by weight, relative to 100 parts by weight of base organic material portion of the base material.

In the above range, the copper damage inhibitor is efficiently supplied to the cable coating, and the quality of the harness-protecting material is not damaged.

When the adhesive adjuvant is appropriately included in the adhesive, whilst the anti-oxidizing agent and/or copper damage inhibitors are suitably included in the adhesive and/or tape base, a synergic effect is produced by the specific resins used for the adhesive adjuvant and the anti-oxidizing agent and copper damage inhibitor added in the adhesive and/or tape base. The degradation of the electrical cables in cable bundles can thus be prevented more efficiently.

The wire harnesses composed of a cable bundle and a harness-protecting material wrapped therearound will be explained hereunder.

Examples of cable bundle of the invention include a plain cable bundle comprising only electrical cables coated with a HF-type resin containing an anti-oxidizing agent; a mixed cable bundle comprising, in a given proportion, i) electrical cables coated with a HF-type resin containing an anti-oxidizing agent and ii) electrical cables coated with a vinyl chloride resin; and a plain cable bundle comprising only electrical cables coated with a vinyl chloride resin. The invention is not, however, limited to the above combination. In order to enhance the effect of use of the harness-protecting material, the cable bundle preferably contains at least one electrical cable coated with a HF-type resin containing an anti-oxidizing agent.

When the cable bundle contains, in a given ratio, the electrical cables coated with a HF-type resin with anti-oxidizing agent and the electrical cables coated with a vinyl chloride resin, the latter cable coating (i.e. vinyl chloride coating) preferably contains beforehand an anti-oxidizing agent in a proportion of about 10 to about 500 % by weight, with respect to % by weight of anti-oxidizing agent (as defined supra) contained in the former cable coating (i.e. HF-type resin coating with anti-oxidizing agent). In this manner, the deterioration, due to the migration of the agent between the electrical cables, of the electrical cables coated with the anti-oxidizing agent-added HF-type resin may be reduced to the minimum.

According to the wire harness of the invention, the electrical cables in a cable bundle is well protected from the deterioration. In particular, even if the electrical cables coated with a HF-type resin and those coated with a vinyl chloride resin are mixed in the same cable bundle, the electrical cables with the HF-type coating are prevented from significant deterioration. The wire harness can thus retain a long-lasting quality.

Regarding the second aspect of the invention, the adhesive and/or tape base further contain(s) an adsorbent, whilst the adhesive contain an adhesive adjuvant made of a specific resin.

The above adsorbent captures adhesive-side deterioration accelerators such as adhesive adjuvants and tape base-side deterioration accelerators such as plasticizers. These accelerators are thus fixed in the harness-protecting material, and prevented from moving into the cable coatings. This phenomenon in turn prevents the copper damage and decrease in anti-oxidizing agent contained in the cable coating, which are caused by the migration of the adhesive-side and base material-side deterioration accelerators. As a result, the deterioration of individual cables contained in the cable bundle can be considerably slowed down.

The adhesive adjuvants contained in the adhesive are composed of a low-reactivity specific resin, which does not bond easily with other atoms or molecules. Even if the whole quantity of adhesive adjuvants is not adsorbed by the adsorbent and part of them moves into the cable coatings, this part of the adjuvants does not react with electrical conductors made of copper, and the formation of copper ions in the cable coatings can be avoided or limited. The copper damage owing to the adhesive adjuvants can thus be securely prevented, and the degradation of the electrical cables in the cable bundle is considerably delayed.

The adsorbent is added to the adhesive in a proportion of about 1 to about 150 parts by weight, relative to 100 parts by weight of base polymer portion of the adhesive. Likewise, the adsorbent is added to the tape base in a proportion of about 1 to about 150 parts by weight, relative to 100 parts by weight of base polymer portion of the tape base. The adsorption then produces a sufficient effect, and the wrapping operation can be performed easily.

When the adhesive adjuvant is added in a proportion of about 10 to about 200 parts by weight, relative to 100 parts by weight of adhesive's base polymer portion, a sufficient adhesive capacity is maintained and the wrapping operation is not affected.

Further, an anti-oxidizing agent may be added to the adhesive and/or tape base. In such cases, the whole quantity of adhesive-side deterioration accelerators and tape base-side deterioration accelerators may not be adsorbed by the adsorbent and part of them may move into the cable coatings. Even in such cases, the concentration gradient of the anti-oxidizing agent between the harness-protecting material and the cable coating can be reduced to the minimum. The decrease of the anti-oxidizing agent in the cable coating, due to the migration of adhesive-side deterioration accelerators and tape base-side deterioration accelerators, can thus be minimized or suppressed.

In the above case, the anti-oxidizing agent in the adhesive and/or tape base and that in the cable coating are preferably of the same type. In this manner, the concentration equilibrium of the agent can be easily attained between the harness-protecting material and the cable coating. Consequently, the decrease in anti-oxidizing agent in the cable coating caused by the migration of the adhesive-side and the tape base-side deterioration accelerators can be limited or stopped more efficiently.

The catalytically active copper ions may be formed in the cable coatings, due to the migration of the adhesive-side and the tape base-side deterioration accelerators, not adsorbed by the adsorbent. The previously added copper damage inhibitor is then consumed and causes copper damage. In such a case, when the adhesive and/or tape base contain(s) a copper damage inhibitor beforehand, the latter is supplied freshly from the harness-protecting material into the cable coating, and the copper damage can be securely prevented.

As mentioned supra, besides the use of adhesive and adhesive adjuvants, an anti-oxidizing agent may be added to the adhesive and/or tape base. Then, the effects of adding an adsorbent to the adhesive and/or tape base, of using one or several specific resin(s) indicated above as adhesive adjuvant, and of adding an anti-oxidizing agent and/or a copper damage inhibitor to the adhesive and/or tape base are combined, and further enhance the synergistic effect. The cable deterioration in cable bundles can thus be avoided in an efficient manner.

As a third aspect of the invention, the adhesive contains a base polymer portion formed of an emulsion-type acrylic acid resin. The adhesive contains, where necessary, an adsorbent, an anti-oxidizing agent and/or a copper damage inhibitor.

**Embodiment 1**

Electrical cables

The harness-protecting material comprised an adhesive tape which wraps a cable bundle comprising a plurality of electrical cables. Three types of electrical cables were prepared. In all cases, electrical conductors used were soft copper wires.

The first type relates to electrical cables coated with a resin containing no halogen (HF-type resin). **Table 1** shows the composition of this type of coating, in which 80 parts by weight of magnesium hydroxide as flame-retardant, 3 parts by weight of anti-oxidizing agent (e.g. phenol-type compound) and 1 part by weight of copper damage inhibitor were added, relative to 100 parts by weight of polypropylene (polyolefin-type compound) as base polymer portion.

The ratio of anti-oxidizing agent contained in the cable coating of HF electrical cables relative to the base polymer portion was:

$$3 : 100.$$

The % of anti-oxidizing agent in the composition was:

$$(3 / 184) \times 100 = 1.63 \text{ wt \%}.$$

The ratio of copper damage inhibitor contained in the cable coating of HF-type electrical cables relative to the base polymer portion was:

$$1 : 100.$$

The % of anti-oxidizing agent in the composition was:

$$(1 / 184) \times 100 = 0.54 \text{ wt \%}.$$

The second type relates to electrical cables coated with a vinyl chloride resin (PVC-type resin). **Table 2** shows the composition of this type of coating, in which 40 parts by weight of diisononyl phthalate (DINP) as plasticizer, 20 parts by weight of calcium carbonate as fillers and 5 parts by weight of stabilizer (zinc-calcium type compound) were added, relative to 100 parts by weight of polyvinyl chloride (polymerization degree: 1300) as base polymer portion.

The cable coatings for this PVC-type electrical cables did not contain the anti-oxidizing agent.

The third type relates to electrical cables coated with a vinyl chloride resin containing an anti-oxidizing agent (PVC-type resin with anti-oxidizing agent). **Table 3** shows the composition of this type of coating, in which 40 parts by weight of diisononyl phthalate (DINP) as plasticizer, 20 parts by weight of calcium carbonate as fillers, 5 parts by weight of stabilizer (e.g. zinc-calcium type compound) and 4.5 parts by weight of anti-oxidizing agent were added, relative to 100 parts by weight of polyvinyl chloride (polymerization degree: 1300) as base polymer portion.

The % of anti-oxidizing agent in the composition was:

$$(4.5 / 169.5) \times 100 = 2.65 \text{ wt \%}.$$

The ratio of anti-oxidizing agent contained in the cable coating of PVC-type electrical cables relative to the organic polymer (PVC and DINP) was:

$$4.5 : 140 = 3.2 : 100.$$

These three types of electrical cables respectively comprised an electrical conductor element having a cross-section of 0.5 mm$^2$ (outer diameter of about 1.0 mm). The conductor element was formed by intertwining seven soft copper wires respectively having a diameter of 0.32 mm. A coating material according to Table 1, 2 or 3 was mixed by a twin axis kneader and extruded around the conductor element, yielding a coating of 0.3 mm thick. In this manner, the HF-type electrical cables were prepared by mixing at 250 °C and formed into pellets by a pelletizer. The pellets were then extruded at 250 °C into a coating of 0.3 mm thick. Likewise, the PVC-type electrical cables and the PVC-type, anti-oxidizing agent-containing electrical cables were mixed at 180 °C and extruded at 180 °C.

**Table 4** shows the cable coatings and harness-protecting materials (adhesive tapes) used in the present invention, as well as names of the manufactures of those products.

Adhesive tape as a harness-protecting material

The adhesive tape as harness-protecting material of the invention is explained hereunder. Six types of adhesive tape were prepared.

**Table 5** shows the composition of a first type of adhesive tape. The first type comprised a PVC-type anti-oxidizing adhesive tape (Examples 1 to 5), in which the tape base was formed of a vinyl chloride resin containing an anti-oxidizing agent, one face of which was painted with an adhesive that contained an adhesive adjuvant made of a specific resin, and an anti-oxidizing agent.

The tape base comprised 60 parts by weight of di-octylphthalate (DOP) as plasticizer, 20 parts by weight of calcium carbonate as fillers, 5 parts by weight of stabilizer and respectively 0.5, 5, 7.5, 12.5 and 25 parts by weight of anti-oxidizing agent, relative to 100 parts by weight of polyvinyl chloride. When expressed by weight ratio relative to the base organic material portion (PVC + DOP), the anti-oxidizing agents were contained in a ratio of, respectively, 0.3, 3.1, 4.7, 7.8 and 15.6 in the tape base. These ratios correspond to about 0.10, 1, 1.5, 2.5 and 5 times, relative to 3 weight ratio of anti-oxidizing agent, relative to 100 parts by weight of base organic material portion, contained in the cable coating of HF-type electrical cables. The tape base had a thickness of 0.11 mm.

The adhesive of Examples 1 to 5 comprised 70 parts by weight of styrene butadiene rubber, 30 parts by weight of natural rubber and 20 parts by weight of zinc white. Examples 1 to 5 further comprised, as adhesive adjuvant made of a specific resin, 80 parts by weight of, respectively, hydrogenated terpene-type resin, hydrogenated aromatic resin, hydrogenated aliphatic resin, cumarone-indene-type resin and phenol-type resin, as well as an anti-oxidizing agent of, respectively, 0.6, 6, 9, 14 and 28 parts by weight. The weight ratios of the above anti-oxidizing agent corresponded to 0.3, 3.3, 5, 7.8 and 15.5, respectively, relative to 100 parts by weight of base organic material portion. These ratios correspond to about 0.1, 1, 1.5, 2.5 and 5 times, relative to 3 weight ratio of anti-oxidizing agent, relative to 100 parts by weight of base organic material portion, contained in the cable coating of HF-type electrical cables. The adhesive had a thickness of 0.02 mm.

Table 5 also comprises a Comparative Example 1, in which the ratio of anti-oxidizing agent contained in the tape base and adhesive of Example 5 was 6 times the ratio of anti-oxidizing agent in the cable coating of HF-type electrical cables. Table 5 further comprises Prior Art 1, in which the tape base and adhesive contained no anti-oxidizing agent, but contained, as adhesive adjuvant, a rosin-type resin instead of the foregoing specific resin.

A second type of the adhesive tape comprised a HF-type anti-oxidizing adhesive tape (Examples 6 to 10), in which the tape base was formed of a HF-type resin containing an anti-oxidizing agent, one face of which was painted with an adhesive that contained an adhesive adjuvant made of a specific resin, and an anti-oxidizing agent. **Table 6** shows the composition of the HF-type anti-oxidizing adhesive tapes of Examples 6 to 10.

The tape base comprised 3 parts by weight of bromine-type flame-retardant, 1.5 parts by weight of antimony trioxide and respectively 0.4, 3.5, 5.5, 8 and 16 parts by weight of anti-oxidizing agent, relative to 100 parts by weight of polyolefin. When expressed by weight ratio relative to 100 parts by weight of base organic material portion (polyolefin + bromine-type flame-retardant), the anti-oxidizing agents were contained in a ratio of, respectively, 0.4, 3.4, 5.3, 7.8 and 15.5 in the tape base. These ratios correspond to about 0.10, 1, 1.5, 2.5 and 5 times, relative to 3 weight ratio of anti-oxidizing agent, relative to 100 parts by weight of base organic material portion, contained in the cable coating of HF-type electrical cables. The tape base had a thickness of 0.11 mm.

The adhesive of Examples 6 to 10 comprised 70 parts by weight of styrene butadiene rubber, 30 parts by weight of natural rubber and 20 parts by weight of zinc white. Examples 6 to 10 further comprised, as adhesive adjuvant made of a specific resin, 80 parts by weight of, respectively, hydrogenated terpene-type resin, hydrogenated aromatic resin, hydrogenated aliphatic resin, cumarone-indene-type resin and phenol-type resin, as well as an anti-oxidizing agent of, respectively, 0.6, 6, 9, 14 and 28 parts by weight. The weight ratios of the above anti-oxidizing agent correspond to 0.3, 3.3, 5, 7.8 and 15.5, respectively, relative to 100 parts by weight of base organic material portion. These ratios correspond to about 0.10, 1, 1.5, 2.5 and 5 times, relative to 3 parts by weight of anti-oxidizing agent (with regard to 100 parts by weight of base organic material portion), contained in the cable coating of HF-type electrical cables. The adhesive had a thickness of 0.02 mm.

Table 6 also comprises a Comparative Example 2, in which the ratio of anti-oxidizing agent contained in the tape base and adhesive of Example 10 was 6 times the parts by weight of anti-oxidizing agent in the cable coating of HF-type electrical cables. Table 6 further comprises Prior Art 2, in which the tape base and adhesive contained no anti-oxidizing agent, but contained, as adhesive adjuvant, a rosin-type resin instead of the foregoing specific resin.

A third type of the adhesive tape comprised a PVC-type copper damage-preventing adhesive tape (Examples 11 to 15), in which the tape base was formed of a vinyl chloride resin containing a copper damage inhibitor, one face of which was painted with an adhesive that contained an adhesive adjuvant made of a specific resin, and a copper damage inhibitor. **Table 7** shows the composition of the PVC-type copper damage-preventing adhesive tapes of Examples 11 to 15.

The tape base comprised 60 parts by weight of DOP as plasticizer, 20 parts by weight of calcium carbonate as fillers, 5 parts by weight of stabilizer and respectively 0.002, 0.016, 1.6, 4.8 and 8 parts by weight of copper damage inhibitor, relative to 100 parts by weight of PVC (P: 1300). When expressed by weight ratio relative to the organic component (PVC + DOP), the copper damage inhibitors were contained in a ratio of, respectively, 0.001, 0.01, 1, 3 and 5 in the tape base. The tape base had a thickness of 0.11 mm.

The adhesive of Examples 11 to 15 comprised 70 parts by weight of styrene butadiene rubber, 30 parts by weight of natural rubber and 20 parts by weight of zinc white. Examples 11 to 15 further comprised, as adhesive adjuvant made of a specific resin, 80 parts by weight of, respectively, hydrogenated terpene-type resin, hydrogenated aromatic resin, hydrogenated aliphatic resin, cumarone-indene-type resin and phenol-type resin, as well as, respectively, 0.002, 0.02, 1.8, 4.8 and 9 parts by weight of copper damage inhibitor. The weight ratios of the above copper damage inhibitor corresponded to 0.001, 0.01, 1, 3 and 5, respectively, relative to 100 parts by weight of base organic material portion (styrene-butadiene rubber + natural rubber + specific resin). The adhesive had a thickness of 0.02 mm.

Table 7 also comprises a Comparative Example 3, in which the ratio of copper damage inhibitor was 7 parts by weight, relative to 100 parts by weight of base organic material portion in the tape base and adhesive, while this ratio was 5 to 100 parts by weight in Example 15. Table 7 further comprises Prior Art 3, in which the tape base and adhesive contained no copper damage inhibitor, but contained, as adhesive adjuvant, a rosin-type resin instead of the foregoing specific resin.

A fourth type of the adhesive tape comprised a HF-type copper damage-preventing adhesive tape (Examples 16 to 20), in which the tape base was formed of a HF-type resin containing a copper damage inhibitor, one face of which was painted with an adhesive that contained an adhesive adjuvant made of a specific resin, and a copper damage inhibitor. **Table 8** shows the composition of the HF-type copper damage-preventing adhesive tapes of Examples 16 to 20.

The tape base comprised 3 parts by weight of bromine-type flame-retardant, 1.5 parts by weight of antimony trioxide and respectively 0.001, 0.01, 1, 3.1 and 5.2 parts by weight of copper damage inhibitor, relative to 100 parts by weight of polyolefin. When expressed by weight ratio relative to 100 parts by weight of base organic material portion (polyolefin + bromine-type flame-retardant), the copper damage inhibitors were contained in a ratio of, respectively, 0.001, 0.01, 1, 3 and 5 in the tape base. The tape base had a thickness of 0.11 mm.

The adhesive of Examples 16 to 20 comprised 70 parts by weight of styrene butadiene rubber, 30 parts by weight of natural rubber and 20 parts by weight of zinc white. Examples 16 to 20 further comprised, as adhesive adjuvant made of a specific resin, 80 parts by weight of, respectively, hydrogenated terpene-type resin, hydrogenated aromatic resin, hydrogenated aliphatic resin, cumarone-indene-type resin and phenol-type resin, as well as, respectively, 0.002, 0.02, 1.8, 4.8 and 9 parts by weight of copper damage inhibitor. The weight ratios of the above copper damage inhibitor in the adhesive correspond to 0.001, 0.01, 1,3 and 5, respectively, relative to 100 parts by weight of base organic material portion (styrene butadiene rubber + natural rubber + specific resin). The adhesive had a thickness of 0.02 mm.

Table 8 also comprises a Comparative Example 4, in which the ratio of copper damage inhibitor was 7 parts by weight, relative to 100 parts by weight of base organic material portion in the tape base and adhesive, while this ratio was 5 to 100 parts by weight in Example 20. Table 8 further comprises Prior Art 4, in which the tape base and adhesive contained no copper damage inhibitor, but contained, as adhesive adjuvant, a rosin-type resin instead of the foregoing specific resin.

A fifth type of the adhesive tape comprised a PVC-type, anti-oxidizing and copper damage inhibiting adhesive tape (Examples 21 to 25), in which the tape base was formed of a vinyl chloride resin containing an anti-oxidizing agent and a copper damage inhibitor, one face of which was painted with an adhesive that contained an adhesive adjuvant made of a specific resin, an anti-oxidizing agent and a copper damage inhibitor. **Table 9** shows the composition of the PVC-type, anti-oxidizing and copper damage inhibiting adhesive tapes of Examples 21 to 25.

The tape base comprised 60 parts by weight of DOP as plasticizer, 20 parts by weight of calcium carbonate as fillers, 5 parts by weight of stabilizer, 5 parts by weight of anti-oxidizing agent and respectively 0.002, 0.016, 1.6, 4.8 and 8 parts by weight of copper damage inhibitor, relative to 100 parts by weight of PVC (P: 1300). When expressed by weight ratio relative to 100 parts by weight of base organic material portion (PVC + DOP), the copper damage inhibitors were contained in a ratio of, respectively, 0.001, 0.01, 1, 3 and 5 in the tape base. The weight ratio of anti-oxidizing agent to resin component in the tape base of Examples 21 to 25 was similar to that in the cable coating of HF-type electrical cables (i.e. about 3 parts by weight relative to 100 parts by weight of base organic material portion). The tape base had a thickness of 0.11 mm.

The adhesive of Examples 21 to 25 comprised 70 parts by weight of styrene butadiene rubber, 30 parts by weight of natural rubber, 20 parts by weight of zinc white and 6 parts by weight of anti-oxidizing agent. Examples 21 to 25 further comprised, as adhesive adjuvant made of a specific resin, 80 parts by weight of, respectively, hydrogenated terpene-type resin, hydrogenated aromatic resin, hydrogenated aliphatic resin, cumarone-indene-type resin and phenol-type resin, as well as, respectively, 0.002, 0.02, 1.8, 4.8 and 9 parts by weight of copper damage inhibitor. The weight ratios of the above copper damage inhibitor correspond to 0.001, 0.01, 1, 3 and 5, respectively, relative to 100 parts by weight of base organic material portion (styrene-butadiene rubber + natural rubber + specific resin). The weight ratio of anti-oxidizing agent to resin component in the adhesive of Examples 21 to 25 was similar to that in the cable coating of HF-type electrical cables (i.e. about 3 parts by weight relative to 100 parts by weight of base organic material portion). The adhesive had a thickness of 0.02 mm.

Table 9 also comprises a Comparative Example 5, in which the ratio of copper damage inhibitor was 7 parts by weight, relative to 100 parts by weight of base organic material portion in the tape base and adhesive, while this ratio was 5:100 (parts by weight) in Example 25. Table 9 further comprises Prior Art 5, in which the tape base and adhesive contained no anti-oxidizing agent and no copper damage inhibitor, but contained, as adhesive adjuvant, a rosin-type resin instead of the foregoing specific resin.

A sixth type of the adhesive tape comprised a HF-type, anti-oxidizing and copper damage-inhibiting adhesive tape (Examples 26 to 30), in which the tape base was formed of a HF-type resin containing an anti-oxidizing agent and a copper damage inhibitor, one face of which was painted with an adhesive that contained an adhesive adjuvant made of a specific resin, an anti-oxidizing agent and a copper damage inhibitor. **Table 10** shows the composition of the HF-type, anti-oxidizing and copper damage inhibiting adhesive tapes of Examples 26 to 30.

The tape base comprised 3 parts by weight of bromine-type flame-retardant, 1.5 parts by weight of antimony trioxide, 3.5 parts by weight of anti-oxidizing agent and respectively 0.001, 0.01, 1, 3.1 and 5.2 parts by weight of copper damage inhibitor, relative to 100 parts by weight of polyolefin. When expressed by weight ratio relative to 100 parts by weight of base organic material portion (polyolefin + bromine-type flame-retardant), the copper damage inhibitors were contained in a ratio of, respectively, 0.001, 0.01, 1, 3 and 5 in the tape base. The weight ratio of anti-oxidizing agent to resin component in the tape base of Examples 26 to 30 was similar to that in the cable coating of HF-type electrical cables (i.e. about 3 parts by weight relative to 100 parts by weight of base organic material portion). The tape base had a thickness of 0.11 mm.

The adhesive of Examples 26 to 30 comprised 70 parts by weight of styrene butadiene rubber, 30 parts by weight of natural rubber, 20 parts by weight of zinc white and 6 parts by weight of anti-oxidizing agent. Examples 26 to 30 further comprised, as adhesive adjuvant made of a specific resin, 80 parts by weight of, respectively, hydrogenated terpene-type resin, hydrogenated aromatic resin, hydrogenated aliphatic resin, cumarone-indene-type resin and phenol-type resin, as well as, respectively, 0.002, 0.02, 1.8, 4.8 and 9 parts by weight of copper damage inhibitor. The weight ratios of the above copper damage inhibitor in the adhesive correspond to 0.001, 0.01, 1, 3 and 5, respectively, relative to 100 parts by weight of base organic material portion (styrene butadiene rubber + natural rubber + specific resin). The weight ratio of anti-oxidizing agent to resin component in the adhesive of Examples 26 to 30 was similar to that in the cable coating of HF-type electrical cables (i.e. about 3 parts by weight relative to 100 parts by weight of base organic material portion) The adhesive had a thickness of 0.02 mm.

Table 10 also comprised a Comparative Example 6, in which the ratio of copper damage inhibitor was 7 parts by weight, relative to 100 parts by weight of base organic material portion in the tape base and adhesive, while this ratio was 5:100 (parts by weight) in Example 30. Table 10 further comprises Prior Art 6, in which the tape base and adhesive contained no anti-oxidizing agent and no copper damage inhibitor, but contained, as adhesive adjuvant, a rosin-type resin instead of the foregoing specific resin.

Cable bundles

The cable bundle, around which the adhesive tape as harness-protecting material was wrapped, comprised three types.

A first type relates to a HF-type plain electrical cable, in which 30 HF-type electrical cables were assembled into a cable bundle, and the latter was wrapped with the cable coatings referred to in Table 1.

A second type relates to a PVC- and HF-type mixed cable bundle, in which there were provided electrical cables wrapped with the cable coatings referred to in Table 1 and those wrapped with the cable coatings referred to in Table 2, and they were assembled in a given mixture ratio, i.e. PVC:HF (by number of cables) = 29:1; 20:10 and 1:29.

A third type relates to a mixed cable bundle of PVC-type anti-oxidizing electrical cables and HF-type electrical cables, in which PVC-type electrical cables covered with the cable coatings (containing an anti-oxidizing agent) referred to in Table 3, and HF-type electrical cables covered with the cable coatings referred to in Table 1 were mixed in a given ratio. The ratio of PVC-type anti-oxidizing electrical cables to HF-type electrical cables (by number of cables) was: 29: l, 20:10 and 1/29.

When, in the second and third types, only one electrical cable was different from the others, that electrical cable was assembled such that it was placed in contact with the adhesive of the adhesive tape. When the ratio was 20:10, the electrical cables of one type were assembled such that they were well mingled with the electrical cables of another type.

Wire harness

A wire harness was prepared by wrapping the electrical cables with the adhesive tape as a harness-protecting material of the invention. As 6 types of adhesive tape and 3 types of cable bundle were prepared, the wire harnesses produced included 18 sorts of combinations.

First, the HF-type plain cable bundles were wrapped with PVC-type adhesive tapes (with anti-oxidizing agent) of Examples 1 to 5, to prepare wire harnesses W1 to W5. Second, the HF-type plain cable bundles were wrapped with HF-type adhesive tapes (with anti-oxidizing agent) of Examples 6 to 10, to prepare wire harnesses W6 to W10. Third, the HF-type plain cable bundles were wrapped with PVC-type adhesive tapes (with copper damage inhibitor) of Examples 11 to 15, to prepare wire harnesses W11 to W15. Fourth, the HF-type plain cable bundles were wrapped with HF-type adhesive tapes (with copper damage inhibitor) of Examples 16 to 20, to prepare wire harnesses W16 to W20. Fifth, the HF-type plain cable bundles were wrapped with PVC-type adhesive tapes (with anti-oxidizing agent and copper damage inhibitor) of Examples 21 to 25, to prepare wire harnesses W21 to W25. Sixth, the HF-type plain cable bundles were wrapped with HF-type adhesive tapes (with anti-oxidizing agent and copper damage inhibitor) of Examples 26 to 30, to prepare wire harnesses W26 to W30. Further, the adhesive tapes of Comparative Examples 1 to 6 and of Prior Art 1 to 6 were wrapped around the HF-type plain cable bundles, to prepare the corresponding wire harnesses.

Likewise, firstly, the mixed cable bundles comprising PVC-type electrical cables and HF-type electrical cables were wrapped with PVC-type adhesive tapes (with anti-oxidizing agent) of Examples 1 to 5, to prepare wire harnesses W31 to W35. Second, the corresponding mixed cable bundles were wrapped with HF-type adhesive tapes (with anti-oxidizing agent) of Examples 6 to 10, to prepare wire harnesses W36 to W40 . Third, the corresponding mixed cable bundles were wrapped with PVC-type adhesive tapes (with copper damage inhibitor) of Examples 11 to 15, to prepare wire harnesses W41 to W45. Fourth, the corresponding mixed cable bundles were wrapped with HF-type adhesive tapes (with copper damage inhibitor) of Examples 16 to 20, to prepare wire harnesses W46 to W50. Fifth, the corresponding mixed cable bundles were wrapped with PVC-type adhesive tapes (with anti-oxidizing agent and copper damage inhibitor) of Examples 21 to 25, to prepare wire harnesses W51 to W55. Sixth, the corresponding mixed cable bundles were wrapped with HF-type adhesive tapes (with anti-oxidizing agent and copper damage inhibitor) of Examples 26 to 30, to prepare wire harnesses W56 to W60. Further, the adhesive tapes of Comparative Examples 1 to 6 and of Prior Art 1 to 6 were wrapped around the mixed cable bundles, to prepare the corresponding wire harnesses.

Further, firstly, the mixed cable bundles comprising PVC-type electrical cables (with anti-oxidizing agent) and HF-type electrical cables were wrapped with PVC-type adhesive tapes (with anti-oxidizing agent) of Examples 1 to 5, to prepare wire harnesses W61 to W65. Second, the corresponding mixed cable bundles were wrapped with HF-type adhesive tapes (with anti-oxidizing agent) of Examples 6 to 10, to prepare wire harnesses W66 to W70 . Third, the corresponding mixed cable bundles were wrapped with PVC-type adhesive tapes (with copper damage inhibitor) of Examples 11 to 15, to prepare wire harnesses W71 to W75. Fourth, the corresponding mixed cable bundles were wrapped with HF-type adhesive tapes (with copper damage inhibitor) of Examples 16 to 20, to prepare wire harnesses W76 to W80. Fifth, the corresponding mixed cable bundles were wrapped with PVC-type adhesive tapes (with anti-oxidizing agent and copper damage inhibitor) of Examples 21 to 25, to prepare wire harnesses W81 to W85. Sixth, the corresponding mixed cable bundles were wrapped with HF-type adhesive tapes (with anti-oxidizing agent and copper damage inhibitor) of Examples 26 to 30, to prepare wire harnesses W86 to W90. Further, the adhesive tapes of Comparative Examples 1 to 6 and of Prior Art 1 to 6 were wrapped around the mixed cable bundles, to prepare the corresponding wire harnesses.

Test methods

The wire harnesses thus prepared were subjected to various tests as follows. Each wire harness was allowed to stand in a thermostat at 150 °C for 96 hours. The wire harness was then withdrawn from the thermostat and the adhesive tape was stripped off the wire harness. The electrical cables in each cable bundle were wound around a mandrel of $\Phi$ 10 mm, and visually observed whether cracks were formed in the cable coatings. Likewise, when preparing wire harness, the adhesive tape was wrapped around the cable bundle and the ease of wrapping operation was evaluated. Further, when preparing the adhesive tape, the gluing capacity of the adhesive was evaluated. When the copper damage inhibitor was added to the adhesive tape, the appearance of the tape was also observed.

Test results

(1) HF-type plain cable bundle x PVC-type adhesive tape (with anti-oxidizing agent)

The HF-type plain cable bundle was wrapped with a PVC-type adhesive tape (with anti-oxidizing agent) to form a wire harness, which was indicated as "HF-type plain cable bundle x PVC-type adhesive tape (with anti-oxidizing agent)". The other wire harnesses were also indicated in the same manner, unless otherwise mentioned.

**Table 11** shows the results of the tests carried out with a HF-type plain cable bundle x PVC-type adhesive tape (with anti-oxidizing agent). As to the mandrel-winding test, cracks were found in the HF-type electrical cables in Prior Art W1 (wire harness), and the latter were evaluated as defective. It was understood that the adhesive-side deterioration accelerators and the tape base-side deterioration accelerators moved into the cable coatings of HF-type electrical cables, thereby causing the copper damage and decrease in anti-oxidizing agent in the cable coatings.

By comparison, the HF-type electrical cables in wire harnesses of Examples W1 to W5 did not form any crack by the mandrel-winding tests. In the above preparation, the PVC-type adhesive tapes (with anti-oxidizing agent) of Examples 1 to 5 were supplied with an adhesive adjuvant made of a low-reactivity specific resin hardly prone to bond with other atoms and molecules, so that the copper damage, due to the migration of adhesive adjuvant, was at least prevented. Further, as the adhesive and tape base contains an anti-oxidizing agent in a suitable amount, the decrease in anti-oxidizing agent of the cable coatings, caused by the migration of adhesive-side deterioration accelerators and tape base-side deterioration accelerators, was prevented.

As to the ease of wrapping operation and gluing capacity, the PVC-type adhesive tape (with anti-oxidizing agent) of Comparative Example 1 was judged as defective, the reason for this deficiency being probably that it contained an excess quantity of anti-oxidizing agent. By comparison, the PVC-type adhesive tapes (with anti-oxidizing agent) of Examples 1 to 5 were found good in ease of wrapping operation and gluing capacity, the reason therefor being probably that they contained the anti-oxidizing agent in a suitable amount. The Examples of the invention were evaluated as globally good (indicated by "O" in Tables)

(2) <u>HF-type plain cable bundle x HF-type adhesive tape (with anti-oxidizing agent).</u>

**Table 12** shows the results of the tests effected with the HF-type plain cable bundle x HF-type adhesive tape (with anti-oxidizing agent). According to the mandrel-winding tests, the HF-type electrical cables in the wire harness of Prior Art W2 formed cracks and were found defective. This is probably because the adhesive-side deterioration accelerators and tape base-side deterioration accelerators moved into the cable coatings of HF-type electrical cables, thereby causing the copper damage and decrease in anti-oxidizing agent in the cable coatings.

The HF-type adhesive tape itself of Prior Art 2 formed cracks probably because the adhesive-side deterioration accelerators moved into the tape base. This adhesive tape was thus found defective.

The HF-type electrical cables in the wire harnesses of Examples W6 to W10 formed no crack by the mandrel-winding tests. In the above preparation, the HF-type adhesive tapes (with anti-oxidizing agent) of Examples 6 to 10 were supplied with an adhesive adjuvant made of a low-reactivity specific resin hardly prone to bond with other atoms and molecules, so that the copper damage, due to the migration of adhesive adjuvant, was at least prevented. Further, as the adhesive and tape base contains an anti-oxidizing agent in a suitable amount, the decrease in anti-oxidizing agent of the cable coatings, caused by the migration of adhesive-side deterioration accelerators and tape base-side deterioration accelerators, was prevented.

As to the ease of wrapping operation and gluing capacity, HF-type adhesive tape (with anti-oxidizing agent) of Comparative Example 2 was judged as defective, the reason therefor being probably that it contained an excess of anti-oxidizing agent. By comparison, the HF-type adhesive tapes (with anti-oxidizing agent) of Examples 6 to 10 were found good in ease of wrapping operation and gluing capacity, the reason for this being probably that they contained the anti-oxidizing agent in a suitable amount. The Examples of the invention were evaluated as globally good ("O").

(3) <u>HF-type plain cable bundle x PVC-type adhesive tape (with copper damage inhibitor)</u>

**Table 13** shows the results of the tests effected with the HF-type plain cable bundle x PVC-type adhesive tape (with copper damage inhibitor). According to the mandrel-winding tests, the HF-type electrical cables in the wire harness of Prior Art W3 formed cracks and were found defective. This is probably because the adhesive-side deterioration accelerators and tape base-side deterioration accelerators moved into the cable coatings of HF-type electrical cables, thereby causing the copper damage and decrease in anti-oxidizing agent in the cable coatings.

The HF-type electrical cables in the wire harnesses of Examples W11 to W15 formed no crack by the mandrel-winding tests. In the above preparation, the PVC-type adhesive tapes (with copper damage inhibitor) of Examples 11 to 15 were supplied with an adhesive adjuvant made of a low-reactivity specific resin hardly prone to bond with other atoms and molecules, so that the copper damage, due to the migration of adhesive adjuvant, was at least prevented. Further, the adhesive and tape base contained a copper damage inhibitor in a suitable amount. Accordingly, although the copper damage inhibitor was consumed by the migration of the adhesive-side deterioration accelerators and tape base-side deterioration accelerators other than the adhesive adjuvant, fresh copper damage inhibitor was supplied from the adhesive tape into the cable coatings, and the copper damage was securely prevented.

As to the ease of wrapping operation, tape appearance and gluing capacity, the PVC-type adhesive tape (with copper damage inhibitor) of Comparative Example 3 was judged as defective, the reason for this being probably that it contained an excessive copper damage inhibitor. By comparison, the PVC-type adhesive tapes (with copper damage inhibitor) of Examples 11 to 15 were found good in ease of wrapping operation, tape appearance and gluing capacity, the reason for this being probably that they contained the copper damage inhibitor in a suitable amount. The Examples of the invention were evaluated as globally good ("O").

(4) HF-type plain cable bundle x HF-type adhesive tape (with copper damage inhibitor)

**Table 14** shows the results of the tests effected with the HF-type plain cable bundle x HF-type adhesive tape (with copper damage inhibitor). According to the mandrel-winding tests, the HF-type electrical cables in the wire harness of Prior Art W4 formed cracks and were found defective. This is probably because the adhesive-side deterioration accelerators and tape base-side deterioration accelerators moved into the cable coatings of HF-type electrical cables, thereby causing the copper damage and decrease in anti-oxidizing agent in the cable coatings.

The HF-type adhesive tape itself of Prior Art 4 formed cracks probably because the adhesive-side deterioration accelerators moved into the tape base. This adhesive tape was thus found defective.

The HF-type electrical cables in the wire harnesses of Examples W16 to W20 formed no crack by the mandrel-winding tests. In the above preparation, the HF-type adhesive tapes (with copper damage inhibitor) of Examples 16 to 20 were supplied with an adhesive adjuvant made of a low-reactivity specific resin hardly prone to bond with other atoms and molecules, so that the copper damage, due to the migration of adhesive adjuvant, was at least prevented. Further, the adhesive and tape base contained a copper damage inhibitor in a suitable amount. Accordingly, although the copper damage inhibitor was consumed by the migration of the adhesive-side deterioration accelerators and tape base-side deterioration accelerators other than the adhesive adjuvant, fresh copper damage inhibitor was supplied from the adhesive tape into the cable coatings, and the copper damage could be securely prevented.

As to the ease of wrapping operation, tape appearance and gluing capacity, the HF-type adhesive tape (with copper damage inhibitor) of Comparative Example 4 was judged as defective, the reason for this being probably that it contained an excessive copper damage inhibitor. By comparison, the HF-type adhesive tapes (with copper damage inhibitor) of Examples 16 to 20 were found good in ease of wrapping operation, tape appearance and gluing capacity, the reason for this being probably that they contained the copper damage inhibitor in a suitable amount. The Examples of the invention were evaluated as globally good ("O").

(5) HF-type plain cable bundle x PVC-type adhesive tape (with anti-oxidizing agent and copper damage inhibitor)

**Table 15** shows the results of the tests effected with the HF-type plain cable bundle x PVC-type adhesive tape (with anti-oxidizing agent and copper damage inhibitor). According to the mandrel-winding tests, the HF-type electrical cables in the wire harness of Prior Art W5 formed cracks and were found defective. It is probably because the adhesive-side deterioration accelerators and tape base-side deterioration accelerators moved into the cable coatings of HF-type electrical cables, thereby causing the copper damage and decrease in anti-oxidizing agent of the cable coatings.

The HF-type electrical cables in the wire harnesses of Examples W21 to W25 formed no crack by the mandrel-winding tests. The use of a specific resin as adhesive adjuvant in the adhesive, as well as the presence of anti-oxidizing agent and copper damage inhibitor in the adhesive and tape base in a suitable amount, produced a synergic effect. In this manner, the decrease of the anti-oxidizing agent in the cable coatings and the copper damage due to copper ions could thus be prevented efficiently.

As to the ease of wrapping operation, tape appearance and gluing capacity, the PVC-type adhesive tape (with anti-oxidizing agent and copper damage inhibitor) of Comparative Example 5 was judged as defective, the reason for this being probably that it contained an excessive copper damage inhibitor. By comparison, the PVC-type adhesive tapes (with anti-oxidizing agent and copper damage inhibitor) of Examples 21 to 25 were found good in ease of wrapping operation, tape appearance and gluing capacity, the reason therefor being that they contained the anti-oxidizing agent and copper damage inhibitor in a suitable amount. The Examples of the invention were evaluated as globally good ("O").

(6) HF-type plain cable bundle x HF-type adhesive tape (with anti-oxidizing agent and copper damage inhibitor)

**Table 16** shows the results of the tests effected with the HF-type plain cable bundle x HF-type adhesive tape (with anti-oxidizing agent and copper damage inhibitor). According to the mandrel-winding tests, the HF-type electrical cables in the wire harness of Prior Art W6 formed cracks and were found defective. This is because the adhesive-side deterioration accelerators and tape base-side deterioration accelerators moved into the cable coatings of HF-type electrical cables, thereby causing the copper damage and decrease in anti-oxidizing agent in the cable coatings.

The HF-type adhesive tape itself of Prior Art 6 formed cracks, because the adhesive-side deterioration accelerators moved into the tape base.

The HF-type electrical cables in the wire harnesses of Examples W26 to W30 formed no crack by the mandrel-winding tests. The use of a specific resin as adhesive adjuvant in the adhesive, as well as the presence of anti-oxidizing agent and copper damage inhibitor in the adhesive and tape base in a suitable amount, produced a synergic effect. In this manner, the decrease of the anti-oxidizing agent in cable coatings and the copper damage due to copper ions could be prevented efficiently.

As to the ease of wrapping operation, tape appearance and gluing capacity, the HF-type adhesive tape (with anti-oxidizing agent and copper damage inhibitor) of Comparative Example 6 was judged as defective, the reason therefor being that it contained an excessive quantity of copper damage inhibitor. By comparison, the HF-type adhesive tapes (with anti-oxidizing agent and copper damage inhibitor) of Examples 26 to 30 were found good in ease of wrapping operation, tape appearance and gluing capacity, the reason for this being that they contained the anti-oxidizing agent and copper damage inhibitor in a suitable amount. The Examples of the invention were evaluated as globally good ("G").

(7) (Mixed cable bundle of PVC-type electrical cables and HF-type electrical cables) x PVC-type adhesive tape (with anti-oxidizing agent)

**Table 17** shows the results of the tests carried out with a (mixed cable bundle of PVC-type electrical cables and HF-type electrical cables) x PVC-type adhesive tape (with anti-oxidizing agent). As to the mandrel-winding test, cracks were found in the HF-type electrical cables in the wire harness (cable number ratio of 29:1, 20:10 and 1:29) of Prior Art W7, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very drastic. This may be caused by the fact that the plasticizer and the like contained in the cable coatings of PVC-type electrical cables moved into the coatings of HF-type electrical cables.

By comparison, the HF-type electrical cables in wire harnesses of Examples W31 to W35 did not form any crack by the mandrel-winding tests. In the above preparation, the PVC-type adhesive tapes (with anti-oxidizing agent) of Examples 1 to 5 were supplied with an adhesive adjuvant made of a low-reactivity specific resin hardly prone to bond with other atoms and molecules, so that the copper damage, due to the migration of adhesive adjuvant was at least prevented. Further, as the adhesive and tape base contains an anti-oxidizing agent in a suitable amount, the decrease of the anti-oxidizing agent in the cable coatings caused by the migration of adhesive-side deterioration accelerators and tape base-side deterioration accelerators, was prevented.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the anti-oxidizing agent in the PVC-type adhesive tape moved into the cable coatings of HF-type electrical cables, thereby supplying the anti-oxidizing agent to the cable coatings.

As to the ease of wrapping operation and gluing capacity, the PVC-type adhesive tape (with anti-oxidizing agent) of Comparative Example 1 was judged as defective, the reason for this deficiency being probably that it contained an excess amount of anti-oxidizing agent. By comparison, the PVC-type adhesive tapes (with anti-oxidizing agent) of Examples 1 to 5 were found good in ease of wrapping operation and gluing capacity, the reason for this being that they contained the anti-oxidizing agent in a suitable amount. The Examples of the invention were evaluated as globally good (indicated by "O" in Tables)

(8) (Mixed cable bundle of PVC-type electrical cables and HF-type electrical cables) x HF-type adhesive tape (with anti-oxidizing agent)

**Table 18** shows the results of the tests carried out with a (mixed cable bundle of PVC-type electrical cables and HF-type electrical cables) x HF-type adhesive tape (with anti-oxidizing agent). As to the mandrel-winding test, cracks were found in the HF-type electrical cables in the wire harness (cable number ratio of 29:1, 20:10 and 1:29) of Prior Art W8, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the coatings of HF-type electrical cables.

Further, the HF-type adhesive tape itself of Prior Art 2 formed cracks, and was judged defective. This cracking was caused by the fact that the adhesive-side deterioration accelerators moved into the tape base.

By comparison, the HF-type electrical cables in wire harnesses of Examples W36 to W40 did not form any crack by the mandrel-winding tests. In the above preparation, the HF-type adhesive tapes (with anti-oxidizing agent) of Examples 6 to 10 were supplied with an adhesive adjuvant made of a low-reactivity specific resin hardly prone to bond with other atoms and molecules, so that the copper damage, due to the migration of adhesive adjuvant, was at least prevented. Further, as the adhesive and tape base contains an anti-oxidizing agent in a suitable amount, the decrease of the anti-oxidizing agent in the cable coatings, caused by the migration of adhesive-side deterioration accelerators and tape base-side deterioration accelerators, was prevented.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the anti-oxidizing agent in the HF-type adhesive tape moved into the cable coatings of HF-type electrical cables, thereby supplying the anti-oxidizing agent to the cable coatings.

As to the ease of wrapping operation and gluing capacity, the HF-type adhesive tape (with anti-oxidizing agent) of Comparative Example 2 was judged as defective, the reason for this deficiency being probably that it contained an excess amount of anti-oxidizing agent. By comparison, the HF-type adhesive tapes (with anti-oxidizing agent) of Examples 6 to 10 were found good in ease of wrapping operation and gluing capacity, the reason for this being that they contained the anti-oxidizing agent in a suitable amount. The Examples of the invention were evaluated as globally good (indicated by "O" in Tables)

(9) (Mixed cable bundle of PVC-type electrical cables and HF-type electrical cables) x PVC-type adhesive tape (with copper damage inhibitor)

**Table 19** shows the results of the tests carried out with a (mixed cable bundle of PVC-type electrical cables and HF-type electrical cables) x PVC-type adhesive tape (with copper damage inhibitor). As to the mandrel-winding test, cracks were found in the HF-type electrical cables in the wire harness (cable number ratio of 29:1, 20:10 and 1: 29) of Prior Art W9, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the coatings of HF-type electrical cables.

By comparison, the HF-type electrical cables in wire harnesses of Examples W41 to W45 did not form any crack by the mandrel-winding tests. In the above preparation, the PVC-type adhesive tapes (with copper damage inhibitor) of Examples 11 to 15 were supplied with an adhesive adjuvant made of a low-reactivity specific resin hardly prone to bond with other atoms and molecules, so that the copper damage, due to the migration of adhesive adjuvant, was at least prevented. Further, the adhesive and tape base contained a copper damage inhibitor in a suitable amount. Accordingly, when the copper damage inhibitor was consumed by the migration of the adhesive-side deterioration accelerators and tape base-side deterioration accelerators other than the adhesive adjuvant, a fresh copper damage inhibitor was supplied from the adhesive tape to the cable coatings. The copper damage could thus be securely avoided.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the copper damage inhibitor in the PVC-type adhesive tape moved into the cable coatings of HF-type electrical cables, thereby supplying the copper damage inhibitor to the cable coatings.

As to the ease of wrapping operation, tape appearance and gluing capacity, the PVC-type adhesive tape (with copper damage inhibitor) of Comparative Example 3 was judged as defective, the reason for this deficiency being probably that it contained an excess amount of copper damage inhibitor. By comparison, the PVC-type adhesive tapes (with copper damage inhibitor) of Examples 11 to 15 were found good in ease of wrapping operation, tape appearance and gluing capacity, the reason for this being that they contained the copper damage inhibitor in a suitable amount. The Examples of the invention were evaluated as globally good (indicated by "O" in Tables).

(10) <u>(Mixed cable bundle of PVC-type electrical cables and HF-type electrical cables) x HF-type adhesive tare (with copper damage inhibitor)</u>

**Table 20** shows the results of the tests carried out with a (mixed cable bundle of PVC-type electrical cables and HF-type electrical cables) x HF-type adhesive tape (with copper damage inhibitor). As to the mandrel-winding test, cracks were found in the HF-type electrical cables in the wire harness (cable number ratio of 29:1, 20:10 and 1:29) of Prior Art W10, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the cable coatings of HF-type electrical cables.

Further, the HF-type adhesive tape itself of Prior Art 4 formed cracks, and was judged defective. This cracking was caused by the fact that the adhesive-side deterioration accelerators moved into the tape base.

By comparison, the HF-type electrical cables in wire harnesses of Examples W46 to W50 did not form any crack by the mandrel-winding tests. In the above preparation, the HF-type adhesive tapes (with copper damage inhibitor) of Examples 16 to 20 were supplied with an adhesive adjuvant made of a low-reactivity specific resin hardly prone to bond with other atoms and molecules, so that the copper damage, due to the migration of adhesive adjuvant, was at least prevented. Further, the adhesive and tape base contains a copper damage inhibitor in a suitable amount. Accordingly, when the copper damage inhibitor was consumed by the migration of the adhesive-side deterioration accelerators and tape base-side deterioration accelerators other than the adhesive adjuvant, a fresh copper damage inhibitor was supplied from the adhesive tape to the cable coatings. The copper damage could thus be securely avoided.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the copper damage inhibitor in the HF-type adhesive tape moved into the cable coatings of HF-type electrical cables, thereby supplying the copper damage inhibitor to the cable coatings.

As to the ease of wrapping operation, tape appearance and gluing capacity, the HF-type adhesive tape (with copper damage inhibitor) of Comparative Example 4 was judged as defective, the reason for this deficiency being probably that it contained an excess amount of copper damage inhibitor. By comparison, the HF-type adhesive tapes (with copper damage inhibitor) of Examples 16 to 20 were found good in ease of wrapping operation, tape appearance and gluing capacity, the reason for this being that they contained the copper damage inhibitor in a suitable amount. The Examples of the invention were evaluated as globally good (indicated by "O" in Tables).

(11) <u>(Mixed cable bundle of PVC-type electrical cables and HF-type electrical cables) x PVC-type adhesive tape (with anti-oxidizing agent and copper damage inhibitor)</u>

**Table 21** shows the results of the tests carried out with a (mixed cable bundle of PVC-type electrical cables and HF-type electrical cables) x PVC-type adhesive tape (with anti-oxidizing agent and copper damage inhibitor). As to the mandrel-winding test, cracks were found in the HF-type electrical cables in the wire harness (cable number ratio of 29:1, 20:10 and 1:29) of Prior Art W11, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the coatings of HF-type electrical cables.

By comparison, the HF-type electrical cables in wire harnesses of Examples W51 to W55 did not form any crack by the mandrel-winding tests. The use of a specific resin as adhesive adjuvant in the adhesive, as well as the presence of anti-oxidizing agent and copper damage inhibitor in the adhesive and tape base in a suitable amount, produced a synergic effect. In this manner, the decrease of the anti-oxidizing agent in cable coatings and the copper damage due to copper ions could be prevented efficiently.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the anti-oxidizing agent and copper damage inhibitor in the PVC-type adhesive tape moved into the cable coatings of HF-type electrical cables, thereby supplying the anti-oxidizing agent and copper damage inhibitor to the cable coatings.

As to the ease of wrapping operation, tape appearance and gluing capacity, the PVC-type adhesive tape (with anti-oxidizing agent and copper damage inhibitor) of Comparative Example 5 was judged as defective, the reason for this deficiency being probably that it contained an excess amount of copper damage inhibitor. By comparison, the PVC-type adhesive tapes (with anti-oxidizing agent and copper damage inhibitor) of Examples 21 to 25 were found good in ease of wrapping operation, tape appearance and gluing capacity, the reason for this being that they contained the anti-oxidizing agent and copper damage inhibitor in a suitable amount. The Examples of the invention were evaluated as globally good (indicated by "O" in Tables)

(12) (Mixed cable bundle of PVC-type electrical cables and HF-type electrical cables) x HF-type adhesive tape (with anti-oxidizing agent and cooper damage inhibitor)

**Table 22** shows the results of the tests carried out with a (mixed cable bundle of PVC-type electrical cables and HF-type electrical cables) x HF-type adhesive tape (with anti-oxidizing agent and copper damage inhibitor). As to the mandrel-winding test, cracks were found in the HF-type electrical cables in the wire harness (cable number ratio of 29:1, 20:10 and 1:29) of Prior Art W12, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the cable coatings of HF-type electrical cables.

Further, the HF-type adhesive tape itself of Prior Art 6 formed cracks, and was judged defective. This cracking was caused by the fact that the adhesive-side deterioration accelerators moved into the tape base.

By comparison, the HF-type electrical cables in wire harnesses of Examples W56 to W60 did not form any crack by the mandrel-winding tests. The use of a specific resin as adhesive adjuvant in the adhesive, as well as the presence of anti-oxidizing agent and copper damage inhibitor in the adhesive and tape base in a suitable amount, produced a synergic effect. In this manner, the decrease of the anti-oxidizing agent in cable coatings and the copper damage due to copper ions could be prevented efficiently.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the anti-oxidizing agent and copper damage inhibitor in the HF-type adhesive tape moved into the cable coatings of HF-type electrical cables, thereby supplying the anti-oxidizing agent and copper damage inhibitor to the cable coatings.

As to the ease of wrapping operation, tape appearance and gluing capacity, the HF-type adhesive tape (with anti-oxidizing agent and copper damage inhibitor) of Comparative Example 6 was judged as defective, the reason for this deficiency being probably that it contained an excess amount of copper damage inhibitor. By comparison, the HF-type adhesive tapes (with anti-oxidizing agent and copper damage inhibitor) of Examples 26 to 30 were found good in ease of wrapping operation, tape appearance and gluing capacity, the reason for this being that they contained the anti-oxidizing agent and copper damage inhibitor in a suitable amount. The Examples of the invention were evaluated as globally good (indicated by "O" in Tables).

(13) [Mixed cable bundle of PVC-type electrical cables (with anti-oxidizing agent) and HF-type electrical cables] x PVC-type adhesive tape (with anti-oxidizing agent)

**Table 23** shows the results of the tests carried out with a (mixed cable bundle of PVC-type electrical cables (with anti-oxidizing agent) and HF-type electrical cables) x PVC-type adhesive tape (with anti-oxidizing agent). As to the mandrel-winding test, cracks were found in the HF-type electrical cables in the wire harness (cable number ratio of 29:1, 20:10 and 1:29) of Prior Art W13, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

By comparison, the HF-type electrical cables in wire harnesses of Examples W61 to W65 did not form any crack by the mandrel-winding tests. In the above preparation, the PVC-type adhesive tapes (with anti-oxidizing agent) of Examples 1 to 5 were supplied with an adhesive adjuvant made of a low-reactivity specific resin hardly prone to bond with other atoms and molecules, so that the copper damage, due to the migration of adhesive adjuvant, was at least prevented. Further, as the adhesive and tape base contains an anti-oxidizing agent in a suitable amount, the decrease of the anti-oxidizing agent in the cable coatings, caused by the migration of adhesive-side deterioration accelerators and tape base-side deterioration accelerators, was prevented.

Moreover, in the present Examples, PVC-type electrical cables containing an anti-oxidizing agent were used. Accordingly, even if the plasticizers and the like contained in the cable coatings of PVC-type electrical cables moved into the cable coatings of HF-type electrical cables, the deterioration of the cable coatings of HF-type electrical cables, owing to the agent migration between the electrical cables, could be efficiently prevented.

As to the ease of wrapping operation and gluing capacity, the PVC-type adhesive tape (with anti-oxidizing agent) of Comparative Example 1 was judged as defective, the reason for this deficiency being probably that it contained an excess amount of anti-oxidizing agent. By comparison, the PVC-type adhesive tapes (with anti-oxidizing agent) of Examples 1 to 5 were found good in ease of wrapping operation and gluing capacity, the reason for this being that they contained the anti-oxidizing agent in a suitable amount. The Examples of the invention were evaluated as globally good (indicated by "O" in Tables).

(14) [Mixed cable bundle of PVC-type electrical cables (with anti-oxidizing agent) and HF-type electrical cables] x HF-type adhesive tape (with anti-oxidizing agent)

**Table 24** shows the results of the tests carried out with a (mixed cable bundle of PVC-type electrical cables (with anti-oxidizing agent) and HF-type electrical cables) x HF-type adhesive tape (with anti-oxidizing agent). As to the mandrel-winding test, cracks were found in the HF-type electrical cables in the wire harness (cable number ratio of 29: 1, 20:10 and 1:29) of Prior Art W14, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

Further, the HF-type adhesive tape itself of Prior Art 2 formed cracks, and was judged as failed. This cracking was caused by the migration of the adhesive-side deterioration accelerators into the tape base.

By comparison, the HF-type electrical cables in wire harnesses of Examples W66 to W70 did not form any crack by the mandrel-winding tests. In the above preparation, the HF-type adhesive tapes (with anti-oxidizing agent) of Examples 6 to 10 were supplied with an adhesive adjuvant made of a low-reactivity specific resin hardly prone to bond with other atoms and molecules, so that the copper damage, due to the migration of adhesive adjuvant, was at least prevented. Further, as the adhesive and tape base contains an anti-oxidizing agent in a suitable amount, the decrease of the anti-oxidizing agent in the cable coatings, caused by the migration of adhesive-side deterioration accelerators and tape base-side deterioration accelerators, was prevented.

Moreover, in the present Examples, PVC-type electrical cables containing an anti-oxidizing agent were used. Accordingly, even if the plasticizers and the like contained in the cable coatings of PVC-type electrical cables moved into the cable coatings of HF-type electrical cables, the deterioration of the cable coatings of HF-type electrical cables, owing to the agent migration between the electrical cables, could be efficiently prevented.

As to the ease of wrapping operation and gluing capacity, the HF-type adhesive tape (with anti-oxidizing agent) of Comparative Example 2 was judged as defective, the reason for this deficiency being probably that it contained an excess amount of anti-oxidizing agent. By comparison, the HF-type adhesive tapes (with anti-oxidizing agent) of Examples 6 to 10 were found good in ease of wrapping operation and gluing capacity, the reason for this being that they contained the anti-oxidizing agent in a suitable amount. The Examples of the invention were evaluated as globally good (indicated by "O" in Tables).

(15) [Mixed cable bundle of PVC-type electrical cables (with anti-oxidizing agent) and HF-type electrical cables] x PVC-type adhesive tape (with copper damage inhibitor)

**Table 25** shows the results of the tests carried out with a (mixed cable bundle of PVC-type electrical cables (with anti-oxidizing agent) and HF-type electrical cables) x PVC-type adhesive tape (with copper damage inhibitor). As to the mandrel-winding test, cracks were found in the HF-type electrical cables in the wire harness (cable number ratio of 29:1, 20:10 and 1:29) of Prior Art W15, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

By comparison, the HF-type electrical cables in wire harnesses of Examples W71 to W75 did not form any crack by the mandrel-winding tests. In the above preparation, the PVC-type adhesive tapes (with copper damage inhibitor) of Examples 11 to 15 were supplied with an adhesive adjuvant made of a low-reactivity specific resin hardly prone to bond with other atoms and molecules, so that the copper damage, due to the migration of adhesive adjuvant, was at least prevented. Further, the adhesive and tape base contains an anti-oxidizing agent in a suitable amount. Accordingly, when the copper damage inhibitor was consumed by the migration of the adhesive-side deterioration accelerators and tape base-side deterioration accelerators other than the adhesive adjuvant, a fresh copper damage inhibitor was supplied from the adhesive tape to the cable coatings. The copper damage could thus be securely avoided.

Moreover, in the present Examples, PVC-type electrical cables containing an anti-oxidizing agent were used. Accordingly, even if the plasticizers and the like contained in the cable coatings of PVC-type electrical cables moved into the cable coatings of HF-type electrical cables, the deterioration of the cable coatings of HF-type electrical cables, owing to the agent migration between the electrical cables, could be efficiently prevented.

As to the ease of wrapping operation, tape appearance and gluing capacity, the PVC-type adhesive tape (with copper damage inhibitor) of Comparative Example 3 was judged as defective, the reason for this deficiency being probably that it contained an excess amount of copper damage inhibitor. By comparison, the PVC-type adhesive tapes (with copper damage inhibitor) of Examples 11 to 15 were found good in ease of wrapping operation, tape appearance and gluing capacity, the reason therefor being that they contained the copper damage inhibitor in a suitable amount. The Examples of the invention were evaluated as globally good (indicated by "O" in Tables).

(16) [Mixed cable bundle of PVC-type electrical cables (with anti-oxidizing agent) and HF-type electrical cables] x HF-type adhesive tape (with copper damage inhibitor)

**Table 26** shows the results of the tests carried out with a (mixed cable bundle of PVC-type electrical cables (with anti-oxidizing agent) and HF-type electrical cables) x HF-type adhesive tape (with copper damage inhibitor). As to the mandrel-winding test, cracks were found in the HF-type electrical cables in the wire harness (cable number ratio of 29:1, 20:10 and 1:29) of Prior Art W16, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

The HF-type adhesive tape itself of Prior Art 4 formed cracks, and considered to be failed. This cracking was caused by the migration of the adhesive-side deterioration accelerators into the tape base.

By comparison, the HF-type electrical cables in wire harnesses of Examples W76 to W80 did not form any crack by the mandrel-winding tests. In the above preparation, the HF-type adhesive tapes (with copper damage inhibitor) of Examples 16 to 20 were supplied with an adhesive adjuvant made of a low-reactivity specific resin hardly prone to bond with other atoms and molecules, so that the copper damage, due to the migration of adhesive adjuvant, was at least prevented. Further, the adhesive and tape base contained an anti-oxidizing agent in a suitable amount. Accordingly, when the copper damage inhibitor was consumed by the migration of the adhesive-side deterioration accelerators and tape base-side deterioration accelerators other than the adhesive adjuvant, a fresh copper damage inhibitor was supplied from the adhesive tape to the cable coatings. The copper damage could thus be securely avoided.

Moreover, in the present Examples, PVC-type electrical cables containing an anti-oxidizing agent were used. Accordingly, even if the plasticizers and the like contained in the cable coatings of PVC-type electrical cables moved into the cable coatings of HF-type electrical cables, the deterioration of the cable coatings of HF-type electrical cables, owing to the agent migration between the electrical cables, could be efficiently prevented.

As to the ease of wrapping operation, tape appearance and gluing capacity, the HF-type adhesive tape (with copper damage inhibitor) of Comparative Example 4 was judged as defective, the reason for this failure being probably that it contained an excess amount of copper damage inhibitor. By comparison, the HF-type adhesive tapes (with copper damage inhibitor) of Examples 16 to 20 were found good in ease of wrapping operation, tape appearance and gluing capacity, the reason for this being that they contained the copper damage inhibitor in a suitable amount. The Examples of the invention were evaluated as globally good (indicated by "O" in Tables).

(17) [Mixed cable bundle of PVC-type electrical cables (with anti-oxidizing agent) and HF-type electrical cables] x PVC-type adhesive tape (with anti-oxidizing agent and copper damage inhibitor)

**Table 27** shows the results of the tests carried out with a [mixed cable bundle of PVC-type electrical cables (with anti-oxidizing agent) and HF-type electrical cables] x PVC-type adhesive tape (with anti-oxidizing agent and copper damage inhibitor). As to the mandrel-winding test, cracks were found in the HF-type electrical cables in the wire harness (cable number ratio of 29:1, 20:10 and 1:29) of Prior Art W17, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

By comparison, the HF-type electrical cables in wire harnesses of Examples W81 to W85 did not form any crack by the mandrel-winding tests. The use of a specific resin as adhesive adjuvant in the adhesive, as well as the presence of anti-oxidizing agent and copper damage inhibitor in the adhesive and tape base in a suitable amount, produced a synergic effect. In this manner, the decrease of the anti-oxidizing agent in cable coatings and the copper damage due to copper ions could be prevented efficiently.

Moreover, in the present Examples, PVC-type electrical cables containing an anti-oxidizing agent were used.

Accordingly, even if the plasticizers and the like contained in the cable coatings of PVC-type electrical cables moved into the cable coatings of HF-type electrical cables, the deterioration of the cable coatings of HF-type electrical cables, owing to the agent migration between the electrical cables, could be efficiently prevented.

As to the ease of wrapping operation, tape appearance and gluing capacity, the PVC-type adhesive tape (with anti-oxidizing agent and copper damage inhibitor) of Comparative Example 5 was judged as defective, the reason for this deficiency being probably that it contained an excess amount of copper damage inhibitor. By comparison, the PVC-type adhesive tapes (with anti-oxidizing agent and copper damage inhibitor) of Examples 21 to 25 were found good in ease of wrapping operation, tape appearance and gluing capacity, the reason for this being that they contained the anti-oxidizing agent and copper damage inhibitor in a suitable amount. The Examples of the invention were evaluated as globally good (indicated by "O" in Tables).

(18) [Mixed cable bundle of PVC-type electrical cables (with anti-oxidizing agent) and HF-type electrical cables] x HF-type adhesive tape (with anti-oxidizing agent and copper damage inhibitor)

**Table 28** shows the results of the tests carried out with a [mixed cable bundle of PVC-type electrical cables (with anti-oxidizing agent) and HF-type electrical cables] x HF-type adhesive tape (with anti-oxidizing agent and copper damage inhibitor). As to the mandrel-winding test, cracks were found in the HF-type electrical cables in the wire harness (cable number ratio of 29:1, 20:10 and 1:29) of Prior Art W18, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

The HF-type adhesive tape itself of Prior Art 6 formed cracks, and considered to be failed. This cracking was caused by the migration of the adhesive-side deterioration accelerators into the tape base.

By comparison, the HF-type electrical cables in wire harnesses of Examples W26 to W30 did not form any crack by the mandrel-winding tests. The use of a specific resin as adhesive adjuvant in the adhesive, as well as the presence of anti-oxidizing agent and copper damage inhibitor in the adhesive and tape base in a suitable amount, produced a synergic effect. In this manner, the decrease of the anti-oxidizing agent in cable coatings and the copper damage due to copper ions could be prevented efficiently.

Moreover, in the present Examples, PVC-type electrical cables containing an anti-oxidizing agent were used. Accordingly, even if the plasticizers and the like contained in the cable coatings of PVC-type electrical cables moved into the cable coatings of HF-type electrical cables, the deterioration of the cable coatings of HF-type electrical cables, owing to the agent migration between the electrical cables, could be efficiently prevented.

As to the ease of wrapping operation, tape appearance and gluing capacity, the HF-type adhesive tape (with anti-oxidizing agent and copper damage inhibitor) of Comparative Example 6 was judged as defective, the reason for this failure being probably that it contained an excess amount of copper damage inhibitor. By comparison, the HF-type adhesive tapes (with anti-oxidizing agent and copper damage inhibitor) of Examples 26 to 30 were found good in ease of wrapping operation, tape appearance and gluing capacity, the reason for this being that they contained the anti-oxidizing agent and copper damage inhibitor in a suitable amount. The Examples of the invention were evaluated as globally good (indicated by "O" in Tables).

The above embodiment was explained using a particular adhesive adjuvant made of specific resin, an anti-oxidizing agent, a copper damage inhibitor and/or a filler. However, the invention is not limited to the above particular compounds, and other additives may also be used.

In the above embodiment, a cable bundle containing PVC-type electrical cables only (PVC-type plain bundle) and the wire harness comprising this cable bundle were not specifically mentioned. However, the invention can also be applied to such cable bundle and wire harness.

According to the harness-protecting material of the invention, at least the copper damage, caused by the migration of the adhesive adjuvant, is prevented. Further, the copper damage caused by the migration of the adhesive-side and the tape base-side deterioration accelerators, as well as the decrease of the anti-oxidizing agent in the cable coatings, are efficiently prevented. As a result, when a wire harness comprises such a harness-protecting material e. g. in the form of a tape, the electrical cables contained in the cable bundles of wire harness, in particular, those coated with a HF-type resin, are protected from rapid degradation. Such a wire harness can produce a durable good quality.

When such a wire harness is used in severe environments, e.g. near the automobile motors, it shows a remarkable reliability, creating thus a great industrial advantage.

**Embodiment 2**

The compositions of the cable coatings for HF-type electrical cables and PVC-type electrical cables (Tables 1, 2 and 3), and the preparation methods for coated electrical cables, mentioned for Embodiment 1, are applied mutatis mutandis to Embodiment 2.

Adhesive tape as a harness-protecting material

The adhesive tape as harness-protecting material of the invention is explained hereunder. Six types of adhesive tape were prepared. The tape base and the adhesive have a thickness of, respectively, 0.11 mm and 0.02 mm.

**Table 29** shows the composition of a first type of adhesive tape. The first type comprises a PVC-type anti-oxidizing adhesive tape (Examples 1 to 6), in which the tape base was formed of a vinyl chloride resin containing an anti-oxidizing agent, one face of which was painted with an adhesive that contained an adhesive adjuvant made of a specific resin, and an anti-oxidizing agent.

The tape base comprised 60 parts by weight of di-octylphthalate (DOP) as plasticizer, 20 parts by weight of calcium carbonate as fillers, 5 parts by weight of stabilizer, 5 parts by weight of anti-oxidizing agent and, respectively, 1, 10 and 150 parts by weight of carbon black (Examples 1 to 3) or silica (Examples 4 to 6) as adsorbent, relative to 100 parts by weight of polyvinyl chloride (PVC; polymerisation degree: 1300). For the purpose of the invention, PVC in the above case was defined as "base polymer portion" of the tape base, and PVC and DOP as "base organic material portion" of the tape base, the both portions excluding the organic compounds used for anti-oxidizing agents and/or copper damage inhibitors.

The adhesive of Examples 1 to 6 comprised 70 parts by weight of styrene butadiene rubber, 30 parts by weight of natural rubber and 20 parts by weight of zinc white. The adhesive adjuvant made of a specific resin comprised 80 parts by weight of hydrogenated aromatic resin, 6 parts by weight of anti-oxidizing agent and, respectively, 1, 10 and 150 parts by weight of carbon black (Examples 1 to 3) or of silica (Examples 4 to 6) as adsorbent. In the above case, the base polymer portion of the adhesive was composed of styrene butadiene rubber and natural rubber, and the base organic material portion of the adhesive is composed of styrene butadiene rubber, natural rubber and hydrogenated aromatic resin.

In comparison with Examples 1 to 6, Table 29 comprises Comparative Example 1 in which carbon black was added in a proportion of 160 parts by weight, and Comparative Example 2 in which silica was added in a proportion of 160 parts by weight. Table 29 further comprises Prior Art 1, in which the tape base and adhesive contained no adsorbent and no anti-oxidizing agent, but contained, as adhesive adjuvant, a rosin-type resin instead of the foregoing specific resin.

A second type of the adhesive tape comprised a HF-type anti-oxidizing adhesive tape (Examples 7 to 12), in which the tape base was formed of a HF-type resin containing an adsorbent and an anti-oxidizing agent, one face of which was painted with an adhesive that contained an adhesive adjuvant made of a specific resin, and an adsorbent and an anti-oxidizing agent. **Table 30** shows the composition of the HF-type adhesive tapes of Examples 7 to 12.

The tape base comprised 3 parts by weight of bromine-type flame-retardant, 1.5 parts by weight of antimony trioxide, 3.5 parts by weight of anti-oxidizing agent and, respectively, 1, 10 and 150 parts by weight of carbon black (Examples 7 to 9) or silica (Examples 10 to 12) as adsorbent, relative to 100 parts by weight of polyolefin. In the above case, the base polymer portion of the tape base is composed of polyolefin, and the base organic material portion of the tape base was composed of polyolefin and bromine-type retardant.

The adhesive of Examples 7 to 12 comprised 70 parts by weight of styrene butadiene rubber, 30 parts by weight of natural rubber and 20 parts by weight of zinc white. The adhesive adjuvant made of a specific resin comprised 80 parts by weight of hydrogenated aromatic resin, 6 parts by weight of anti-oxidizing agent and, respectively, 1, 10 and 150 parts by weight of carbon black (Examples 7 to 9) or of silica (Examples 10 to 12) as adsorbent.

In comparison with Examples 7 to 12, Table 30 also comprised a Comparative Example 3, in which carbon black was added in a proportion of 160 parts by weight, and Comparative Example 4 in which silica was added in a proportion of 160 parts by weight. Table 30 further comprises Prior Art 2, in which the tape base and adhesive contained no adsorbent and no anti-oxidizing agent, but contained, as adhesive adjuvant, a rosin-type resin instead of the foregoing specific resin.

A third type of the adhesive tape comprised a PVC-type copper damage-preventing adhesive tape (Examples 13 to 18), in which the tape base was formed of a vinyl chloride resin containing an adsorbent and a copper damage inhibitor, one face of which was painted with an adhesive that contained an adhesive adjuvant made of a specific resin, and an adsorbent and a copper damage inhibitor. **Table 31** shows the composition of the PVC-type copper damage-preventing adhesive tapes of Examples 13 to 18.

The tape base comprised 60 parts by weight of DOP as plasticizer, 20 parts by weight of calcium carbonate as fillers, 5 parts by weight of stabilizer, 1.6 parts by weight of copper damage inhibitor and, respectively, 1, 10 and 150 parts by weight of carbon black (Examples 13 to 15) or of silica (Examples 16 to 18) as adsorbent, relative to 100 parts by weight of PVC (P: 1300).

The adhesive of Examples 13 to 18 comprised 70 parts by weight of styrene butadiene rubber, 30 parts by weight of natural rubber and 20 parts by weight of zinc white. Examples 13 to 18 further comprised, as adhesive adjuvant made of a specific resin, 80 parts by weight of hydrogenated aromatic resin, 1.8 parts by weight of copper damage inhibitor and, respectively, 1, 10 and 150 parts by weight of carbon black (Examples 13 to 15) or of silica (Examples 16 to 18).

Table 31 also comprises a Comparative Example 5 in which carbon black was added in a proportion of 160 parts by weight, and Comparative Example 6 in which silica was added in a proportion of 160 parts by weight. Table 31 further comprises Prior Art 3, in which the tape base and adhesive contained no adsorbent and no copper damage inhibitor, but contained, as adhesive adjuvant, a rosin-type resin instead of the foregoing specific resin.

A fourth type of the adhesive tape comprised a HF-type copper damage-preventing adhesive tape (Examples 19 to 24), in which the tape base was formed of a HF-type resin containing an adsorbent and a copper damage inhibitor, one face of which was painted with an adhesive that contained an adhesive adjuvant made of a specific resin, and an adsorbent and a copper damage inhibitor. **Table 32** shows the composition of the HF-type copper damage-preventing adhesive tapes of Examples 19 to 24.

The tape base comprised 3 parts by weight of bromine-type flame-retardant, 1.5 parts by weight of antimony trioxide, 1 part by weight of copper damage inhibitor and, respectively, 1, 10 and 150 parts by weight of carbon black (Examples 19 to 21) or of silica (Examples 22 to 24) as adsorbent, relative to 100 parts by weight of polyolefin.

The adhesive of Examples 19 to 24 comprised 70 parts by weight of styrene butadiene rubber, 30 parts by weight of natural rubber and 20 parts by weight of zinc white. Examples 19 to 24 further comprised, as adhesive adjuvant made of a specific resin, 80 parts by weight of hydrogenated aromatic resin, 1.8 parts by weight of copper damage inhibitor and, respectively, 1, 10 and 150 parts by weight of carbon black (Examples 19 to 21) or of silica (Examples 22 to 24).

Table 32 also comprises a Comparative Example 7 in which carbon black was added in a proportion of 160 parts by weight, and Comparative Example 8 in which silica was added in a proportion of 160 parts by weight. Table 32 further comprises Prior Art 4, in which the tape base and adhesive contained no adsorbent and no copper damage inhibitor, but contained, as adhesive adjuvant, a rosin-type resin instead of the foregoing specific resin.

A fifth type of the adhesive tape comprised a PVC-type, anti-oxidizing and copper damage inhibiting adhesive tape (Examples 25 to 30), in which the tape base was formed of a vinyl chloride resin containing an adsorbent, an anti-oxidizing agent and a copper damage inhibitor, one face of which was painted with an adhesive that contained an adhesive adjuvant made of a specific resin, and an adsorbent, an anti-oxidizing agent and a copper damage inhibitor. **Table 33** shows the composition of the PVC-type, anti-oxidizing and copper damage-inhibiting adhesive tapes of Examples 25 to 30.

The tape base comprised 60 parts by weight of DOP as plasticizer, 20 parts by weight of calcium carbonate as fillers, 5 parts by weight of stabilizer, 5 parts by weight of anti-oxidizing agent, 1.6 parts by weight of copper damage inhibitor and, respectively 1,10 and 150 parts by weight of carbon black (Examples 25 to 27) or of silica (Examples 28 to 30) as adsorbent, relative to 100 parts by weight of PVC (P: 1300).

The adhesive of Examples 25 to 30 comprised 70 parts by weight of styrene butadiene rubber, 30 parts by weight of natural rubber and 20 parts by weight of zinc white. Examples 25 to 30 further comprised, as adhesive adjuvant made of a specific resin, 80 parts by weight of hydrogenated aromatic resin, 6 parts by weight of anti-oxidizing agent and, respectively, 1, 10 and 150 parts by weight of carbon black (Examples 25 to 27) or of silica (Examples 28 to 30) as adsorbent.

Table 33 also comprises a Comparative Example 9 in which carbon black was added in a proportion of l6 parts by weight, and Comparative Example 10 in which silica was added in a proportion of 160 parts by weight. Table 33 further comprises Prior Art 5, in which the tape base and adhesive contained no adsorbent, no anti-oxidizing agent and no copper damage inhibitor, but contained, as adhesive adjuvant, a rosin-type resin instead of the foregoing specific resin.

A sixth type of the adhesive tape comprised a HF-type, anti-oxidizing and copper damage-inhibiting adhesive tape (Examples 31 to 36), in which the tape base was formed of a HF-type resin containing an adsorbent, an anti-oxidizing agent and a copper damage inhibitor, one face of which was painted with an adhesive that contained an adhesive adjuvant made of a specific resin, and an adsorbent, an anti-oxidizing agent and a copper damage inhibitor. **Table 34** shows the composition of the HF-type, anti-oxidizing and copper damage-inhibiting adhesive tapes of Examples 31 to 36.

The tape base comprised 3 parts by weight of bromine-type flame-retardant, 1.5 parts by weight of antimony trioxide, 3.5 parts by weight of anti-oxidizing agent, 1 part by weight of copper damage inhibitor and, respectively, 1, 10, and 150 parts by weight of carbon black (Examples 31 to 33) or of silica (Examples 34 to 36), relative to 100 parts by weight of polyolefin.

The adhesive of Examples 31 to 36 comprised 70 parts by weight of styrene butadiene rubber, 30 parts by weight of natural rubber and 20 parts by weight of zinc white. Examples 31 to 36 further comprised, as adhesive adjuvant made of a specific resin, 80 parts by weight of hydrogenated aromatic resin, 6 parts by weight of anti-oxidizing agent, 1.8 parts by weight of copper damage inhibitor, and, respectively, 1, 10 and 150 parts by weight of carbon black (Examples 31 to 33) or of silica (Examples 34 to 36) as adsorbent.

Table 34 also comprises a Comparative Example 11, in which carbon black was added in a proportion of 160 parts by weight, and Comparative Example 12 in which silica was added in a proportion of 160 parts by weight. Table 34 further comprises Prior Art 6, in which the tape base and adhesive contained no adsorbent, no anti-oxidizing agent and no copper damage inhibitor, but contained, as adhesive adjuvant, a rosin-type resin instead of the foregoing specific resin.

Table 4 shows the cable coatings and harness-protecting materials (adhesive tapes) used in the present invention, as well as manufactures of those products. Carbon black and silica have a specific surface of respectively 42 $m^2$/g and 210 $m^2$/g.

Cable bundles

The cable bundle, around which the adhesive tape as harness-protecting material was wrapped, comprised three types.

A first type relates to a HF-type plain electrical cable, in which 30 HF-type electrical cables were assembled into a cable bundle, and the latter was wrapped with the cable coatings referred to in Table 1.

A second type relates to a PVC- and HF-type mixed cable bundle, in which there were provided electrical cables wrapped with the cable coatings referred to in Table 1 and those wrapped with the cable coatings referred to in Table 2, and they were assembled in a given mixture ratio, i.e. PVC:HF (by number of cables) = 29:1; 20:10 and 1:29.

A third type relates to a mixed cable bundle of PVC-type anti-oxidizing electrical cables and HF-type electrical cables, in which PVC-type electrical cables covered with the cable coatings (containing an anti-oxidizing agent) referred to in Table 3, and HF-type electrical cables covered with the cable coatings referred to in Table 1 were mixed in a given ratio. The ratio of PVC-type anti-oxidizing electrical cables to HF-type electrical cables (by number of cables) was: 29:1, 20:10 and 1/29.

When, in the second and third types, only one electrical cable was different from the others, that electrical cable was assembled such that it was placed in contact with the adhesive of the adhesive tape. When the ratio was 20:10, the electrical cables of one type were assembled such that they were well mingled with the electrical cables of another type.

Wire harness

A wire harness was prepared by wrapping the electrical cables with the adhesive tape as a harness-protecting material of the invention. As 6 types of adhesive tape and 3 types of cable bundle were prepared, the wire harnesses produced included 18 sorts of combinations.

First, the HF-type plain cable bundles were wrapped with PVC-type adhesive tapes (with anti-oxidizing agent) of Examples 1 to 6, to prepare wire harnesses W1 to W6. Second, the HF-type plain cable bundles were wrapped with HF-type adhesive tapes (with anti-oxidizing agent) of Examples 7 to 12, to prepare wire harnesses W7 to W12. Third, the HF-type plain cable bundles were wrapped with PVC-type adhesive tapes (with copper damage inhibitor) of Examples 13 to 18, to prepare wire harnesses W13 to W18. Fourth, the HF-type plain cable bundles were wrapped with HF-type adhesive tapes (with copper damage inhibitor) of Examples 19 to 24, to prepare wire harnesses W19 to W24. Fifth, the HF-type plain cable bundles were wrapped with PVC-type adhesive tapes (with anti-oxidizing agent and copper damage inhibitor) of Examples 25 to 30, to prepare wire harnesses W25 to W30. Sixth, the HF-type plain cable bundles were wrapped with HF-type adhesive tapes (with anti-oxidizing agent and copper damage inhibitor) of Examples 31 to 36, to prepare wire harnesses W31 to W36. Further, the adhesive tapes of Comparative Examples 1 to 12 and of Prior Art 1 to 6 were wrapped around the HF-type plain cable bundles, to prepare the corresponding wire harnesses.

Likewise, firstly, the mixed cable bundles comprising PVC-type electrical cables and HF-type electrical cables were wrapped with PVC-type adhesive tapes (with anti-oxidizing agent) of Examples 1 to 6, to prepare wire harnesses W37 to W42. Second, the corresponding mixed cable bundles were wrapped with HF-type adhesive tapes (with anti-oxidizing agent) of Examples 7 to 12, to prepare wire harnesses W43 to W48. Third, the corresponding mixed cable bundles were wrapped with PVC-type adhesive tapes (with copper damage inhibitor) of Examples 13 to 18, to prepare wire harnesses W49 to W54. Fourth, the corresponding mixed cable bundles were wrapped with HF-type adhesive tapes (with copper damage inhibitor) of Examples 19 to 24, to prepare wire harnesses W55 to W60. Fifth, the corresponding mixed cable bundles were wrapped with PVC-type adhesive tapes (with anti-oxidizing agent and copper damage inhibitor) of Examples 25 to 30, to prepare wire harnesses W61 to W66. Sixth, the corresponding mixed cable bundles were wrapped with HF-type adhesive tapes (with anti-oxidizing agent and copper damage inhibitor) of Examples 31 to 36, to prepare wire harnesses W67 to W72. Further, the adhesive tapes of Comparative Examples 1 to 12 and of Prior Art 1 to 6 were wrapped around the mixed cable bundles, to prepare the corresponding wire harnesses.

Further, firstly, the mixed cable bundles comprising PVC-type electrical cables (with anti-oxidizing agent) and HF-type electrical cables were wrapped with PVC-type adhesive tapes (with anti-oxidizing agent) of Examples 1 to 6, to prepare wire harnesses W73 to W78. Second, the corresponding mixed cable bundles were wrapped with HF-type adhesive tapes (with anti-oxidizing agent) of Examples 7 to 12, to prepare wire harnesses W79 to W84. Third, the corresponding mixed cable bundles were wrapped with PVC-type adhesive tapes (with copper damage inhibitor) of Examples 13 to 18, to prepare wire harnesses W85 to W90. Fourth, the corresponding mixed cable bundles were wrapped with HF-type adhesive tapes (with copper damage inhibitor) of Examples 19 to 24, to prepare wire harnesses W91 to W96. Fifth, the corresponding mixed cable bundles were wrapped with PVC-type adhesive tapes (with anti-oxidizing agent and copper damage inhibitor) of Examples 25 to 30, to prepare wire harnesses W97 to W102. Sixth, the corresponding mixed cable bundles were wrapped with HF-type adhesive tapes (with anti-oxidizing agent and copper damage inhibitor) of Examples 31 to 36, to prepare wire harnesses W103 to W108. Further, the adhesive tapes of Comparative Examples 1 to 12 and of Prior Art 1 to 6 were wrapped around the mixed cable bundles, to prepare the corresponding wire harnesses.

Test methods

The wire harnesses thus prepared were subjected to various tests as follows. Each wire harness was allowed to stand in a thermostat at 150 °C for 96 hours. The wire harness was then withdrawn from the thermostat and the adhesive tape was stripped off the wire harness. The electrical cables in each cable bundle were wound around a mandrel of $\Phi$ 10 mm, and visually observed whether cracks were formed in the cable coatings. Likewise, when preparing wire harness, the adhesive tape was wrapped around the cable bundle and the ease of wrapping operation was evaluated. Further, when preparing the adhesive tape, the gluing capacity of the adhesive was evaluated. When the copper damage inhibitor was added to the adhesive tape, the appearance of the tape was also observed.

Test results

(1) HF-type plain cable bundle x PVC-type adhesive tape (with anti-oxidizing agent)

The HF-type plain cable bundle was wrapped with a PVC-type adhesive tape (with anti-oxidizing agent) to form a wire harness, which was indicated as "HF-type plain cable bundle x PVC-type adhesive tape (with anti-oxidizing agent)". The other wire harnesses were also indicated in the same manner, unless otherwise mentioned.

**Table 35** shows the results of the tests carried out with a HF-type plain cable bundle x PVC-type adhesive tape (with anti-oxidizing agent). As to the mandrel-winding test, cracks were found in the HF-type electrical cables in Prior Art W1 (wire harness), and the latter were evaluated as defective. It was understood that the adhesive-side deterioration accelerators and the tape base-side deterioration accelerators moved into the cable coatings of HF-type electrical cables, thereby causing the copper damage and decrease in anti-oxidizing agent in the cable coatings.

By comparison, the HF-type electrical cables in wire harnesses of Examples W1 to W6 did not form any crack by the mandrel-winding tests. In the PVC-type adhesive tapes (with anti-oxidizing agent) of Examples 1 to 6, the adhesive and tape base contained an adsorbent, so that the latter adsorbed the adhesive-side deterioration accelerators and tape base-side deterioration accelerators and prevented them from moving into the cable coatings. The presence of anti-oxidizing agent in the adhesive and tape base also produced a great effect.

As to the ease of wrapping operation and gluing capacity, the PVC-type adhesive tapes (with anti-oxidizing agent) of Comparative Examples 1 and 2 were judged as defective, the reason for this deficiency being probably that they contained an excess quantity of adsorbent. By comparison, the PVC-type adhesive tapes (with anti-oxidizing agent) of Examples 1 to 6 were found good in ease of wrapping operation and gluing capacity, the reason for this being probably that they contained the adsorbent in a suitable amount. The Examples of the invention were evaluated as globally good (indicated by "O" in Tables)

(2) HF-type plain cable bundle x HF-type adhesive tape (with anti-oxidizing agent).

**Table 36** shows the results of the tests effected with the HF-type plain cable bundle x HF-type adhesive tape (with anti-oxidizing agent). According to the mandrel-winding tests, the HF-type electrical cables in the wire harness of Prior Art W2 formed cracks and were found defective. It is probably because the adhesive-side deterioration accelerators and tape base-side deterioration accelerators moved into the cable coatings of HF-type electrical cables, thereby causing the copper damage and decrease in anti-oxidizing agent in the cable coatings.

The HF-type adhesive tape itself of Prior Art 2 formed cracks probably because the adhesive-side deterioration accelerators moved into the tape base. This adhesive tape was thus found defective.

The HF-type electrical cables in the wire harnesses of Examples W7 to W12 formed no crack by the mandrel-winding tests. In the HF-type adhesive tapes (with anti-oxidizing agent) of Examples 7 to 12, the adhesive and tape base contained an adsorbent, which adsorbed the adhesive-side deterioration accelerators and tape base-side deterioration accelerators and prevented them from moving into the cable coatings. The presence of anti-oxidizing agent in the adhesive and tape base also produced a great effect.

As to the ease of wrapping operation and gluing capacity, HF-type adhesive tapes (with anti-oxidizing agent) of Comparative Examples 3 and 4 were judged as defective, the reason for this being probably that they contained an excess of adsorbent. By comparison, the HF-type adhesive tapes (with anti-oxidizing agent) of Examples 7 to 12 were found good in ease of wrapping operation and gluing capacity, the reason for this being probably that they contained the adsorbent in a suitable amount. The Examples of the invention were evaluated as globally good ("O").

(3) <u>HF-type plain cable bundle x PVC-type adhesive tape (with copper damage inhibitor)</u>

**Table 37** shows the results of the tests effected with the HF-type plain cable bundle x PVC-type adhesive tape (with copper damage inhibitor). According to the mandrel-winding tests, the HF-type electrical cables in the wire harness of Prior Art W3 formed cracks and were found defective. It is probably because the adhesive-side deterioration accelerators and tape base-side deterioration accelerators moved into the cable coatings of HF-type electrical cables, thereby causing the copper damage and decrease in anti-oxidizing agent in the cable coatings.

The HF-type electrical cables in the wire harnesses of Examples W13 to W18 formed no crack by the mandrel-winding tests. In the PVC-type adhesive tapes (with copper damage inhibitor) of Examples 13 to 18, the adhesive and tape base contained an adsorbent, which adsorbed the adhesive-side deterioration accelerators and tape base-side deterioration accelerators and prevented them from moving into the cable coatings. The presence of copper damage inhibitor in the adhesive and tape base also produced a great effect.

As to the ease of wrapping operation and gluing capacity, the PVC-type adhesive tapes (with copper damage inhibitor) of Comparative Examples 5 and 6 were judged as defective, the reason for this being probably that they contained an excess of adsorbent. By comparison, the PVC-type adhesive tapes (with copper damage inhibitor) of Examples 13 to 18 were found good in ease of wrapping operation and gluing capacity, the reason for this being probably that they contained the adsorbent in a suitable amount. There was no particular problem for tape appearance. The Examples of the invention were evaluated as globally good ("O").

(4) <u>HF-type plain cable bundle x HF-type adhesive tape (with copper damage inhibitor)</u>

**Table 38** shows the results of the tests effected with the HF-type plain cable bundle x HF-type adhesive tape (with copper damage inhibitor). According to the mandrel-winding tests, the HF-type electrical cables in the wire harness of Prior Art W4 formed cracks and were found defective. It is probably because the adhesive-side deterioration accelerators and tape base-side deterioration accelerators moved into the cable coatings of HF-type electrical cables, thereby causing the copper damage and decrease in anti-oxidizing agent in the cable coatings.

The HF-type adhesive tape itself of Prior Art 4 formed cracks probably because the adhesive-side deterioration accelerators moved into the tape base. The adhesive tape was thus found defective.

The HF-type electrical cables in the wire harnesses of Examples W19 to W24 formed no crack by the mandrel-winding tests. In the HF-type adhesive tapes (with copper damage inhibitor) of Examples 19 to 24, the adhesive and tape base contained an adsorbent, which adsorbed the adhesive-side deterioration accelerators and tape base-side deterioration accelerators and prevented them from moving into the cable coatings. The presence of copper damage inhibitor in the adhesive and tape base also produced an important effect.

As to the ease of wrapping operation and gluing capacity, the HF-type adhesive tapes (with copper damage inhibitor) of Comparative Examples 7 and 8 were judged as defective, the reason for this being probably that they contained an excess of adsorbent. By comparison, the HF-type adhesive tapes (with copper damage inhibitor) of Examples 19 to 24 were found good in ease of wrapping operation and gluing capacity, the reason for this being probably that they contained the adsorbent in a suitable amount. There was no particular problem of tape appearance. The Examples of the invention were evaluated as globally good ("O").

(5) <u>HF-type plain cable bundle x PVC-type adhesive tape (with anti-oxidizing agent and copper damage inhibitor)</u>

**Table 39** shows the results of the tests effected with the HF-type plain cable bundle x PVC-type adhesive tape (with anti-oxidizing agent and copper damage inhibitor). According to the mandrel-winding tests, the HF-type electrical cables in the wire harness of Prior Art W5 formed cracks and were found defective. It is probably because the adhesive-side deterioration accelerators and tape base-side deterioration accelerators moved into the cable coatings of HF-type electrical cables, thereby causing the copper damage and decrease in anti-oxidizing agent of the cable coatings.

The HF-type electrical cables in the wire harnesses of Examples W25 to W30 formed no crack by the mandrel-winding tests. The presence of adsorbent in the adhesive and tape base, the use of a specific resin as adhesive adjuvant in the adhesive and the presence of anti-oxidizing agent and copper damage inhibitor in the adhesive and tape base produced a synergic effect.

As to the ease of wrapping operation and gluing capacity, the PVC-type adhesive tapes (with anti-oxidizing agent and copper damage inhibitor) of Comparative Examples 9 and 10 were judged as defective, the reason for this being probably that they contained an excess of adsorbent. By comparison, the PVC-type adhesive tapes (with anti-oxidizing agent and copper damage inhibitor) of Examples 25 to 30 were found good in ease of wrapping operation and gluing capacity, the reason for this being that they contained the adsorbent in a suitable amount. There was no particular problem for tape appearance. The Examples of the invention were evaluated as globally good ("O").

(6) <u>HF-type plain cable bundle x HF-type adhesive tape (with anti-oxidizing agent and copper damage inhibitor)</u>

**Table 40** shows the results of the tests effected with the HF-type plain cable bundle x HF-type adhesive tape (with anti-oxidizing agent and copper damage inhibitor). According to the mandrel-winding tests, the HF-type electrical cables in the wire harness of Prior Art W6 formed cracks and were found defective. It is because the adhesive-side deterioration accelerators and tape base-side deterioration accelerators moved into the cable coatings of HF-type electrical cables, thereby causing the copper damage and decrease in anti-oxidizing agent in the cable coatings.

The HF-type adhesive tape itself of Prior Art 6 formed cracks, because the adhesive-side deterioration accelerators moved into the tape base.

The HF-type electrical cables in the wire harnesses of Examples W31 to W36 formed no crack by the mandrel-winding tests. The presence of adsorbent in the adhesive and tape base, the use of a specific resin as adhesive adjuvant in the adhesive, as well as the presence of anti-oxidizing agent and copper damage inhibitor in the adhesive and tape base, apparently produced a synergic effect.

As to the ease of wrapping operation and gluing capacity, the HF-type adhesive tapes (with anti-oxidizing agent and copper damage inhibitor) of Comparative Examples 11 and 12 were judged as defective, the reason therefor being that they contained an excessive quantity of adsorbent. By comparison, the HF-type adhesive tapes (with anti-oxidizing agent and copper damage inhibitor) of Examples 31 to 36 were found good in ease of wrapping operation and gluing capacity, the reason for this being that they contained the adsorbent in a suitable amount. There was no particular problem for tape appearance The Examples of the invention were evaluated as globally good ("O").

(7) <u>(Mixed cable bundle of PVC-type electrical cables and HF-type electrical cables) x PVC-type adhesive tape (with anti-oxidizing agent)</u>

**Table 41** shows the results of the tests carried out with a (mixed cable bundle of PVC-type electrical cables and HF-type electrical cables) x PVC-type adhesive tape (with anti-oxidizing agent). As to the mandrel-winding test, cracks were found in the HF-type electrical cables in the wire harness (cable number ratio of 29:1, 20:10 and 1:29) of Prior Art W7, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very drastic. This may be caused by the fact that the plasticizer and the like contained in the cable coatings of PVC-type electrical cables moved into the coatings of HF-type electrical cables.

By comparison, the HF-type electrical cables in wire harnesses of Examples W37 to W42 did not form any crack by the mandrel-winding tests. In the PVC-type adhesive tapes (with anti-oxidizing agent) of Examples 1 to 6, the adhesive and tape base contain an adsorbent, which adsorbed the adhesive-side deterioration accelerators and tape base-side deterioration accelerators and prevented them from moving into the cable coatings. The presence of anti-oxidizing agent in the adhesive and tape base also produced a great effect.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the anti-oxidizing agent in the PVC-type adhesive tape moved into the cable coatings of HF-type electrical cables, thereby supplying the anti-oxidizing agent to the cable coatings.

As to the ease of wrapping operation and gluing capacity, the PVC-type adhesive tapes (with anti-oxidizing agent) of Comparative Examples 1 and 2 were judged as defective, the reason for this deficiency being probably that they contained an excess amount of adsorbent. By comparison, the PVC-type adhesive tapes (with anti-oxidizing agent) of Examples 1 to 6 were found good in ease of wrapping operation and gluing capacity, the reason for this being that they contained the adsorbent in a suitable amount. The Examples of the invention were evaluated as globally good (indicated by "O" in Tables)

(8) (Mixed cable bundle of PVC-type electrical cables and HF-type electrical cables) x HF-type adhesive tape (with anti-oxidizing agent)

**Table 42** shows the results of the tests carried out with a (mixed cable bundle of PVC-type electrical cables and HF-type electrical cables) x HF-type adhesive tape (with anti-oxidizing agent). As to the mandrel-winding test, cracks were found in the HF-type electrical cables in the wire harness (cable number ratio of 29:1, 20:10 and 1:29) of Prior Art W8, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This' may be caused by the fact that the plasticizer and the like contained in the cable coatings of PVC-type electrical cables moved into the coatings of HF-type electrical cables.

Further, the HF-type adhesive tape itself of Prior Art 2 formed cracks, and was judged defective. This cracking was caused by the fact that the adhesive-side deterioration accelerators moved into the tape base.

By comparison, the HF-type electrical cables in wire harnesses of Examples W43 to W48 did not form any crack by the mandrel-winding tests. In the HF-type adhesive tapes (with anti-oxidizing agent) of Examples 7 to 12, the adhesive and tape base contained an adsorbent, which adsorbed the adhesive-side deterioration accelerators and tape base-side deterioration accelerators and prevented them from moving into the cable coatings. The presence of anti-oxidizing agent in the adhesive and tape base also produced a great effect.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the anti-oxidizing agent in the HF-type adhesive tape moved into the cable coatings of HF-type electrical cables, thereby supplying the anti-oxidizing agent to the cable coatings.

As to the ease of wrapping operation and gluing capacity, the HF-type adhesive tapes (with anti-oxidizing agent) of Comparative Examples 3 and 4 were judged as defective, the reason for this deficiency being probably that they contained an excess amount of adsorbent. By comparison, the HF-type adhesive tapes (with anti-oxidizing agent) of Examples 7 to 12 were found good in ease of wrapping operation and gluing capacity, the reason for this being that they contained the adsorbent in a suitable amount. The Examples of the invention were evaluated as globally good (indicated by "O" in Tables)

(9) Mixed cable bundle of PVC-type electrical cables and HF-type electrical cables) x PVC-type adhesive tape (with cooper damage inhibitor)

**Table 43** shows the results of the tests carried out with a (mixed cable bundle of PVC-type electrical cables and HF-type electrical cables) x PVC-type adhesive tape (with copper damage inhibitor). As to the mandrel-winding test, cracks were found in the HF-type electrical cables in the wire harness (cable number ratio of 29:1, 20:10 and 1: 29) of Prior Art W9, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the coatings of HF-type electrical cables.

By comparison, the HF-type electrical cables in wire harnesses of Examples W49 to W54 did not form any crack by the mandrel-winding tests. In the PVC-type adhesive tapes (with copper damage inhibitor) of Examples 13 to 18, the adhesive and tape base contained an adsorbent, which adsorbed the adhesive-side deterioration accelerators and tape base-side deterioration accelerators and prevented them from moving into the cable coatings. The presence of copper damage inhibitor in the adhesive and tape base also produced a great effect.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the copper damage inhibitor in the PVC-type adhesive tape moved into the cable coatings of HF-type electrical cables, thereby supplying the copper damage inhibitor to the cable coatings.

As to the ease of wrapping operation and gluing capacity, the PVC-type adhesive tapes (with copper damage inhibitor) of Comparative Examples 5 and 6 were judged as defective, the reason for this deficiency being probably that they contained an excess amount of adsorbent. By comparison, the PVC-type adhesive tapes (with copper damage inhibitor) of Examples 13 to 18 were found good in ease of wrapping operation and gluing capacity, the reason therefor being that they contained the adsorbent in a suitable amount. There was no particular problem of tape appearance. The Examples of the invention were evaluated as globally good (indicated by "O" in Tables).

(10) (Mixed cable bundle of PVC-type electrical cables and HF-type electrical cables) x HF-type adhesive tape (with copper damage inhibitor)

**Table 44** shows the results of the tests carried out with a (mixed cable bundle of PVC-type electrical cables and HF-type electrical cables) x HF-type adhesive tape (with copper damage inhibitor). As to the mandrel-winding test, cracks were found in the HF-type electrical cables in the wire harness (cable number ratio of 29:1, 20:10 and 1:29) of Prior Art W10, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the cable coatings of HF-type electrical cables.

Further, the HF-type adhesive tape itself of Prior Art 4 formed cracks, and was judged defective. This cracking was caused by the fact that the adhesive-side deterioration accelerators moved into the tape base.

By comparison, the HF-type electrical cables in wire harnesses of Examples W55 to W60 did not form any crack by the mandrel-winding tests. In the HF-type adhesive tapes (with copper damage inhibitor) of Examples 19 to 24, the adhesive and tape base contained an adsorbent, which adsorbed the adhesive-side deterioration accelerators and tape base-side deterioration accelerators and prevented them from moving into the cable coatings. The presence of copper damage inhibitor in the adhesive and tape base also produced a great effect.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the copper damage inhibitor in the HF-type adhesive tape moved into the cable coatings of HF-type electrical cables, thereby supplying the copper damage inhibitor to the cable coatings.

As to the ease of wrapping operation and gluing capacity, the HF-type adhesive tapes (with copper damage inhibitor) of Comparative Examples 7 and 8 were judged as defective, the reason for this deficiency being probably that they contained an excess amount of adsorbent. By comparison, the HF-type adhesive tapes (with copper damage inhibitor) of Examples 19 to 24 were found good in ease of wrapping operation and gluing capacity, the reason for this being that they contained the adsorbent in a suitable amount. There was no particular problem of tape appearance. The Examples of the invention were evaluated as globally good (indicated by "O" in Tables).

(11) (Mixed cable bundle of PVC-type electrical cables and HF-type electrical cables) x PVC-type adhesive tape (with anti-oxidizing agent and copper damage inhibitor)

**Table 45** shows the results of the tests carried out with a (mixed cable bundle of PVC-type electrical cables and HF-type electrical cables) x PVC-type adhesive tape (with anti-oxidizing agent and copper damage inhibitor). As to the mandrel-winding test, cracks were found in the HF-type electrical cables in the wire harness (cable number ratio of 29:1, 20:10 and 1:29) of Prior Art W11, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the coatings of HF-type electrical cables.

By comparison, the HF-type electrical cables in wire harnesses of Examples W61 to W66 did not form any crack by the mandrel-winding tests. The presence of an adsorbent in the adhesive and tape base, the use of a specific resin as adhesive adjuvant in the adhesive, as well as the presence of an anti-oxidizing agent and copper damage inhibitor in the adhesive and tape base, apparently produced a synergic effect.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the anti-oxidizing agent and copper damage inhibitor in the PVC-type adhesive tape moved into the cable coatings of HF-type electrical cables, thereby supplying the anti-oxidizing agent and copper damage inhibitor to the cable coatings.

As to the ease of wrapping operation and gluing capacity, the PVC-type adhesive tapes (with anti-oxidizing agent and copper damage inhibitor) of Comparative Examples 9 and 10 were judged as defective, the reason for this deficiency being probably that they contained an excess amount of adsorbent. By comparison, the PVC-type adhesive tapes (with anti-oxidizing agent and copper damage inhibitor) of Examples 25 to 30 were found good in ease of wrapping operation and gluing capacity, the reason for this being that they contained the adsorbent in a suitable amount. There was no particular problem for tape appearance. The Examples of the invention were evaluated as globally good (indicated by "O" in Tables)

(12) (Mixed cable bundle of PVC-type electrical cables and HF-type electrical cables) x HF-type adhesive tape (with anti-oxidizing agent and copper damage inhibitor)

**Table 46** shows the results of the tests carried out with a (mixed cable bundle of PVC-type electrical cables and HF-type electrical cables) x HF-type adhesive tape (with anti-oxidizing agent and copper damage inhibitor). As to the mandrel-winding test, cracks were found in the HF-type electrical cables in the wire harness (cable number ratio of 29:1, 20:10 and 1:29) of Prior Art W12, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

In particular, when the cable number ratio of PVC-type electrical cables and HF-type electrical cables was 29:1, the deterioration of the HF-type electrical cable tended to be very strong. This may be caused by the fact that the plasticizer and the like contained in the cable coatings of PVC-type electrical cables moved into the cable coatings of HF-type electrical cables.

Further, the HF-type adhesive tape itself of Prior Art 6 formed cracks, and was judged defective. This cracking was caused by the fact that the adhesive-side deterioration accelerators moved into the tape base.

By comparison, the HF-type electrical cables in wire harnesses of Examples W67 to W72 did not form any crack by the mandrel-winding tests. The presence of an adsorbent in the adhesive and tape base, the use of a specific resin as adhesive adjuvant in the adhesive, as well as the presence of an anti-oxidizing agent and copper damage inhibitor in the adhesive and tape base, apparently produced a synergic effect.

However, in this case also, the plasticizers and the like contained in the cable coatings of PVC-type electrical cables may move into the cable coatings of HF-type electrical cables, thereby causing the deterioration of the HF-type electrical cables due to the agent migration between the electrical cables. The fact that this did not happen in the Examples of the invention indicates that the anti-oxidizing agent and copper damage inhibitor in the HF-type adhesive tape moved into the cable coatings of HF-type electrical cables, thereby supplying the anti-oxidizing agent and copper damage inhibitor to the cable coatings.

As to the ease of wrapping operation and gluing capacity, the HF-type adhesive tapes (with anti-oxidizing agent and copper damage inhibitor) of Comparative Examples 11 and 12 were judged as defective, the reason for this deficiency being probably that they contained an excess amount of adsorbent. By comparison, the HF-type adhesive tapes (with anti-oxidizing agent and copper damage inhibitor) of Examples 31 to 36 were found good in ease of wrapping operation and gluing capacity, the reason therefor being that they contained the adsorbent in a suitable amount. There was no particular problem of tape appearance. The Examples of the invention were evaluated as globally good (indicated by "O" in Tables).

(13) [Mixed cable bundle of PVC-tyke electrical cables (with anti-oxidizing agent) and HF-type electrical cables] x PVC-type adhesive tape (with anti-oxidizing agent)

**Table 47** shows the results of the tests carried out with a [mixed cable bundle of PVC-type electrical cables (with anti-oxidizing agent) and HF-type electrical cables] x PVC-type adhesive tape (with anti-oxidizing agent). As to the mandrel-winding test, cracks were found in the HF-type electrical cables in the wire harness (cable number ratio of 29:1, 20:10 and 1:29) of Prior Art W13, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

By comparison, the HF-type electrical cables in wire harnesses of Examples W73 to W78 did not form any crack by the mandrel-winding tests. In the PVC-type adhesive tapes (with anti-oxidizing agent) of Examples 1 to 6, the adhesive and tape base contained an adsorbent, which adsorbed the adhesive-side deterioration accelerators and tape base-side deterioration accelerators and prevented them from moving into the cable coatings. The presence of anti-oxidizing agent in the adhesive and tape base also produced a great effect.

Moreover, in the present Examples, PVC-type electrical cables containing an anti-oxidizing agent were used. Accordingly, even if the plasticizers and the like contained in the cable coatings of PVC-type electrical cables moved into the cable coatings of HF-type electrical cables, the deterioration of the cable coatings of HF-type electrical cables, owing to the agent migration between the electrical cables, could be efficiently prevented.

As to the ease of wrapping operation and gluing capacity, the PVC-type adhesive tapes (with anti-oxidizing agent) of Comparative Examples 1 and 2 were judged as defective, the reason for this deficiency being probably that they contained an excess amount of adsorbent. By comparison, the PVC-type adhesive tapes (with anti-oxidizing agent) of Examples 1 to 6 were found good in ease of wrapping operation and gluing capacity, the reason for this being that they contained the adsorbent in a suitable amount. The Examples of the invention were evaluated as globally good (indicated by "O" in Tables).

(14) (Mixed cable bundle of PVC-type electrical cables (with anti-oxidizing agent) and HF-type electrical cables) x HF-type adhesive tape (with anti-oxidizing agent)

**Table 48** shows the results of the tests carried out with a [mixed cable bundle of PVC-type electrical cables (with anti-oxidizing agent) and HF-type electrical cables] x HF-type adhesive tape (with anti-oxidizing agent). As to the mandrel-winding test, cracks were found in the HF-type electrical cables in the wire harness (cable number ratio of 29:1, 20:10 and 1:29) of Prior Art W14, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

Further, the HF-type adhesive tape itself of Prior Art 2 formed cracks, and was judged as failed. This cracking was caused by the migration of the adhesive-side deterioration accelerators into the tape base.

By comparison, the HF-type electrical cables in wire harnesses of Examples W79 to W84 did not form any crack by the mandrel-winding tests. In the HF-type adhesive tapes (with anti-oxidizing agent) of Examples 7 to 12, the adhesive and tape base contained an adsorbent, which adsorbed the adhesive-side deterioration accelerators and tape base-side deterioration accelerators and prevented them from moving into the cable coatings. The presence of anti-oxidizing agent in the adhesive and tape base also produced a great effect.

Moreover, in the present Examples, PVC-type electrical cables containing an anti-oxidizing agent were used. Accordingly, even if the plasticizers and the like contained in the cable coatings of PVC-type electrical cables move into the cable coatings of HF-type electrical cables, the deterioration of the cable coatings of HF-type electrical cables, owing to the agent migration between the electrical cables, could be efficiently prevented.

As to the ease of wrapping operation and gluing capacity, the HF-type adhesive tapes (with anti-oxidizing agent) of Comparative Examples 3 and 4 were judged as defective, the reason for this deficiency being probably that they contained an excess amount of adsorbent. By comparison, the HF-type adhesive tapes (with anti-oxidizing agent) of Examples 7 to 12 were found good in ease of wrapping operation and gluing capacity, the reason for this being that they contained the adsorbent in a suitable amount. The Examples of the invention were evaluated as globally good (indicated by "O" in Tables).

(15) [Mixed cable bundle of PVC-type electrical cables (with anti-oxidizing agent) and HF-type electrical cables] x PVC-type adhesive tape (with copper damage inhibitor)

**Table 49** shows the results of the tests carried out with a [mixed cable bundle of PVC-type electrical cables (with anti-oxidizing agent) and HF-type electrical cables] x PVC-type adhesive tape (with copper damage inhibitor). As to the mandrel-winding test, cracks were found in the HF-type electrical cables in the wire harness (cable number ratio of 29:1, 20:10 and 1:29) of Prior Art W15, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

By comparison, the HF-type electrical cables in wire harnesses of Examples W85 to W90 did not form any crack by the mandrel-winding tests. In the PVC-type adhesive tapes (with copper damage inhibitor) of Examples 13 to 18, the adhesive and tape base contained an adsorbent, which adsorbed the adhesive-side deterioration accelerators and tape base-side deterioration accelerators and prevented them from moving into the cable coatings. The presence of copper damage inhibitor in the adhesive and tape base also produced a great effect.

Moreover, in the present Examples, PVC-type electrical cables containing an anti-oxidizing agent were used. Accordingly, even if the plasticizers and the like contained in the cable coatings of PVC-type electrical cables move into the cable coatings of HF-type electrical cables, the deterioration of the cable coatings of HF-type electrical cables, owing to the agent migration between the electrical cables, could be efficiently prevented.

As to the ease of wrapping operation and gluing capacity, the PVC-type adhesive tapes (with copper damage inhibitor) of Comparative Examples 5 and 6 were judged as defective, the reason for this deficiency being probably that they contained an excess amount of adsorbent. By comparison, the PVC-type adhesive tapes (with copper damage inhibitor) of Examples 13 to 18 were found good in ease of wrapping operation and gluing capacity, the reason for this being that they contained the adsorbent in a suitable amount. There was no particular problem for tape appearance. The Examples of the invention were evaluated as globally good (indicated by "O" in Tables).

(16) [Mixed cable bundle of PVC-type electrical cables (with anti-oxidizing agent) and HF-type electrical cables] x HF-type adhesive tape (with copper damage inhibitor)

**Table 50** shows the results of the tests carried out with a [mixed cable bundle of PVC-type electrical cables (with anti-oxidizing agent) and HF-type electrical cables] x HF-type adhesive tape (with copper damage inhibitor). As to the mandrel-winding test, cracks were found in the HF-type electrical cables in the wire harness (cable number ratio of 29:1, 20:10 and 1:29) of Prior Art W16, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.
The HF-type adhesive tape itself of Prior Art 4 formed cracks, and considered to be failed. This cracking was caused by the migration of the adhesive-side deterioration accelerators into the tape base.
By comparison, the HF-type electrical cables in wire harnesses of Examples W91 to W96 did not form any crack by the mandrel-winding tests. In the HF-type adhesive tapes (with copper damage inhibitor) of Examples 19 to 24, the adhesive and tape base contained an adsorbent, which adsorbed the adhesive-side deterioration accelerators and tape base-side deterioration accelerators and prevented them from moving into the cable coatings. The presence of copper damage inhibitor in the adhesive and tape base also produced a great effect.
Moreover, in the present Examples, PVC-type electrical cables containing an anti-oxidizing agent are used. Accordingly, even if the plasticizers and the like contained in the cable coatings of PVC-type electrical cables migrate into the cable coatings of HF-type electrical cables, the deterioration of the cable coatings of HF-type electrical cables caused by the agent migration between the electrical cables could be efficiently prevented.
As to the ease of wrapping operation and gluing capacity, the HF-type adhesive tapes (with copper damage inhibitor) of Comparative Examples 7 and 8 were judged as defective, the reason for this failure being probably that they contained an excess amount of adsorbent. By comparison, the HF-type adhesive tapes (with copper damage inhibitor) of Examples 19 to 24 were found good in ease of wrapping operation and gluing capacity, the reason therefor being that they contained the adsorbent in a suitable amount. There was no particular problem of tape appearance. The Examples of the invention were evaluated as globally good (indicated by "O" in Tables).

(17) [Mixed cable bundle of PVC-type electrical cables (with anti-oxidizing agent) and HF-type electrical cables] x PVC-type adhesive tape (with anti-oxidizing agent and copper damage inhibitor)

**Table 51** shows the results of the tests carried out with a [mixed cable bundle of PVC-type electrical cables (with anti-oxidizing agent) and HF-type electrical cables] x PVC-type adhesive tape (with anti-oxidizing agent and copper damage inhibitor). As to the mandrel-winding test, cracks were found in the HF-type electrical cables in the wire harness (cable number ratio of 29:1, 20:10 and 1:29) of Prior Art W17, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.
By comparison, the HF-type electrical cables in wire harnesses of Examples W97 to W102 did not form any crack by the mandrel-winding tests. The presence of adsorbent in the adhesive and tape base, the use of a specific resin as adhesive adjuvant in the adhesive, as well as the presence of anti-oxidizing agent and copper damage inhibitor in the adhesive and tape base, apparently produced a synergic effect.
Moreover, in the present Examples, PVC-type electrical cables containing an anti-oxidizing agent were used. Accordingly, even if the plasticizers and the like contained in the cable coatings of PVC-type electrical cables move into the cable coatings of HF-type electrical cables, the deterioration of the cable coatings of HF-type electrical cables, owing to the agent migration between the electrical cables, could be efficiently prevented.
As to the ease of wrapping operation and gluing capacity, the PVC-type adhesive tapes (with anti-oxidizing agent and copper damage inhibitor) of Comparative Examples 9 and 10 were judged as defective, the reason for this deficiency being probably that they contained an excess amount of adsorbent. By comparison, the PVC-type adhesive tapes (with anti-oxidizing agent and copper damage inhibitor) of Examples 25 to 30 were found good in ease of wrapping operation and gluing capacity, the reason therefor being that they contained the adsorbent in a suitable amount. There was no particular problem of tape appearance. The Examples of the invention were evaluated as globally good (indicated by "O" in Tables).

(18) [Mixed cable bundle of PVC-type electrical cables (with anti-oxidizing agent) and HF-type electrical cables] x HF-type adhesive tape (with anti-oxidizing agent and copper damage inhibitor)

**Table 52** shows the results of the tests carried out with a [mixed cable bundle of PVC-type electrical cables (with anti-oxidizing agent) and HF-type electrical cables] x HF-type adhesive tape (with anti-oxidizing agent and copper damage inhibitor). As to the mandrel-winding test, cracks were found in the HF-type electrical cables in the wire harness (cable number ratio of 29:1, 20:10 and 1:29) of Prior Art W18, and the latter was evaluated as defective. It was understood that the adhesive-side deterioration accelerators and the tape base-side deterioration accelerators moved into the cable coatings of HF-type electrical cables, thereby causing the copper damage and decrease of anti-oxidizing agent in the cable coatings.

The HF-type adhesive tape itself of Prior Art 6 formed cracks, and considered to be failed. This cracking was caused by the migration of the adhesive-side deterioration accelerators into the tape base.

By comparison, the HF-type electrical cables in wire harnesses of Examples W103 to W108 did not form any crack by the mandrel-winding tests. The presence of adsorbent in the adhesive and tape base, the use of a specific resin as adhesive adjuvant in the adhesive, as well as the presence of anti-oxidizing agent and copper damage inhibitor in the adhesive and tape base, apparently produced a synergic effect.

Moreover, in the present Examples, PVC-type electrical cables containing an anti-oxidizing agent were used. Accordingly, even if the plasticizers and the like contained in the cable coatings of PVC-type electrical cables move into the cable coatings of HF-type electrical cables, the deterioration of the cable coatings of HF-type electrical cables, owing to the migration of the agent between the electrical cables, could be efficiently prevented.

As to the ease of wrapping operation and gluing capacity, the HF-type adhesive tapes (with anti-oxidizing agent and copper damage inhibitor) of Comparative Examples 11 and 12 were judged as defective, the reason for this failure being probably that they contained an excess amount of adsorbent. By comparison, the HF-type adhesive tapes (with anti-oxidizing agent and copper damage inhibitor) of Examples 31 to 36 were found good in ease of wrapping operation and gluing capacity, the reason for this being that they contained the adsorbent in a suitable amount. There was no particular problem of tape appearance. The Examples of the invention were evaluated as globally good (indicated by "O" in Tables).

The above embodiment was explained using a particular adsorbent, adhesive adjuvant made of specific resin, an anti-oxidizing agent, a copper damage inhibitor and/or a filler. However, the invention is not limited to the above particular compounds, and other additives may also be used.

In the above embodiment, a cable bundle containing PVC-type electrical cables only (PVC-type plain bundle) and the wire harness comprising this cable bundle were not specifically mentioned. However, the invention can also be applied to such a cable bundle and wire harness.

According to the harness-protecting material of the invention, the copper damage caused by the migration of the adhesive-side and the tape base-side deterioration accelerators, as well as the decrease of the anti-oxidizing agent in the cable coatings, are efficiently prevented. As a result, when a wire harness comprises such a harness-protecting material e.g. in the form of a tape, the electrical cables contained in the cable bundles of wire harness, in particular, those coated with a HF-type resin, are protected from rapid deterioration. Such a wire harness can provide a durable good quality.

When such a wire harness is used in severe environments, e.g. near the automobile engines, it shows a remarkable reliability, creating thus a great industrial advantage.


**Embodiment 3**

There were provided 5 types of cable bundle coated with the harness-protecting material of the invention. A first type relates to a HF-type plain cable bundle containing 30 units of HF-type electrical cables referred to in Table 1. The other 4 types relate to a mixed cable bundle composed of HF-type electrical cables referred to in Table 1 and PVC-type electrical cables referred to in Table 2 or PVC-type anti-oxidizing electrical cables referred to in Table 3. Each type of cable bundles contained 30 electrical cables in total. In the mixed cable bundles, the cable number ratio of PVC-type electrical cables to HF-type electrical cables was 25:5, 20:10, 10:20 and 5:25, respectively.

Adhesive tapes were used as harness-protecting material for the following embodiment. The tape base was formed of PVC resin containing an adsorbent, one whole face of the tape base was coated with an adhesive made of acrylic acid resin emulsion containing an adsorbent, so as to prepare a PVC-type adhesive tape. **Tables 53, 54 and 55** show Experiments 1 to 3, which comprise the compositions of the PVC-type adhesive tapes thus prepared and test results effected with these tapes. In Experiment 1, the adhesive and tape base of the PVC-type adhesive tape contained, inter alia, an anti-oxidizing agent In Experiment 2, the adhesive and tape base contained, inter alia, a copper damage inhibitor. In Experiment 3, the adhesive and tape base contained, inter alia, an anti-oxidizing agent and a copper damage inhibitor. In all cases, the adhesive had a thickness of 0.02 mm, and the adhesive and tape base had a total thickness of 0.13 mm.

As to the adhesive of the PVC-type adhesive tapes of Experiment 1 referred to in **Table 53**, Prior Art Example contained 70 parts by weight of styrene butadiene rubber (SBR), 30 parts by weight of natural rubber (NR), 20 parts by weight of zinc white and 80 parts by weight of rosin-type resin. Examples 1-1 to 1-6 contained 100 parts by weight of acrylic acid resin emulsion, 1, 10 or 150 parts by weight (suitable amount) of adsorbent (carbon black or silica) and 3 parts by weight of anti-oxidizing agent. Comparative Examples 1-1 and 1-2 contained 100 parts by weight of acrylic acid resin emulsion, 160 parts by weight (excessive amount) of adsorbent (carbon black or silica) and 3 parts by weight of anti-oxidizing agent.

As to the tape base, Prior Art Example contained 100 parts by weight of PVC (P: 1300), 60 parts by weight of DOP as plasticizer, 20 parts by weight of calcium carbonate as fillers and 5 parts by weight of zinc-calcium-type compound as stabilizer. Compared to this, Examples 1-1 to 1-6 further contained 1, 10 or 150 parts by weight (suitable amount) of adsorbent (carbon black or silica) and 5 parts by weight of anti-oxidizing agent. Likewise, Comparative Examples 1-1 and 1-2 further contained, compared to Prior Art Example, 160 parts by weight (excessive amount) of adsorbent (carbon black or silica) and 5 parts by weight of anti-oxidizing agent.

As to the adhesive of the PVC-type adhesive tapes of Experiment 2 referred to in **Table 54**, Prior Art Example contained 70 parts by weight of styrene butadiene rubber (SBR), 30 parts by weight of natural rubber (NR), 20 parts by weight of zinc white and 80 parts by weight of rosin-type resin. Examples 1-1 to 1-6 contained 100 parts by weight of acrylic acid resin emulsion, 1, 10 or 150 parts by weight (suitable amount) of adsorbent (carbon black or silica) and 1 part by weight of copper damage inhibitor. Comparative Examples 2-1 and 2-2 contained 100 parts by weight of acrylic acid resin emulsion, 160 parts by weight (excessive amount) of adsorbent (carbon black or silica) and 1 part by weight of copper damage inhibitor.

As to the tape base, Prior Art Example contained 100 parts by weight of PVC (P: 1300), 60 parts by weight of DOP as plasticizer, 20 parts by weight of calcium carbonate as fillers and 5 parts by weight of zinc-calcium-type compound as stabilizer. Compared to this, Examples 2-1 to 2-6 further contained 1, 10 or 150 parts by weight (suitable amount) of adsorbent (carbon black or silica) and 1.6 parts by weight of copper damage inhibitor. Likewise, Comparative Examples 2-1 and 2-2 further contained, compared to Prior Art Example, 160 parts by weight (excessive amount) of adsorbent (carbon black or silica) and 1.6 parts by weight of copper damage inhibitor.

As to the adhesive of the PVC-type adhesive tapes of Experiment 3 referred to in **Table 55**, Prior Art Example contained 70 parts by weight of styrene butadiene rubber (SBR), 30 parts by weight of natural rubber (NR), 20 parts by weight of zinc white and 80 parts by weight of rosin-type resin. Examples 3-1 to 3-6 contained 100 parts by weight of acrylic acid resin emulsion, 1, 10 or 150 parts by weight (suitable amount) of adsorbent (carbon black or silica), 3 parts by weight of anti-oxidizing agent and 1 part by weight of copper damage inhibitor. Comparative Examples 3-1 and 3-2 contained 100 parts by weight of acrylic acid resin emulsion, 160 parts by weight (excessive amount) of adsorbent (carbon black or silica), 3 parts by weight of anti-oxidizing agent and 1 part by weight of copper damage inhibitor.

As to the tape base, Prior Art Example contained 100 parts by weight of PVC (P: 1300), 60 parts by weight of DOP as plasticizer, 20 parts by weight of calcium carbonate as fillers and 5 parts by weight of zinc-calcium-type compound as stabilizer. Compared to this, Examples 3-1 to 3-6 further contained 1, 10 or 150 parts by weight (suitable amount) of adsorbent (carbon black or silica), 5 parts by weight of anti-oxidizing agent and 1.6 parts by weight of copper damage inhibitor. Likewise, Comparative Examples 3-1 and 3-2 further contained, compared to Prior Art Example, 160 parts by weight (excessive amount) of adsorbent (carbon black or silica), 5 parts by weight of anti-oxidizing agent and 1.6 parts by weight of copper damage inhibitor.

In other words, in Experiments 1 to 3 referred to in Tables 53 to 55, the adhesive of the PVC-type adhesive tapes contained, in common, an emulsion-type acrylic acid resin and an adsorbent, whereas the tape base thereof contained an adsorbent in common. Experiment 2 corresponded to Experiment 1 in which the anti-oxidizing agent was replaced by the copper damage inhibitor. Likewise, Experiment 3 corresponded to Experiment 1 (or Experiment 2) in which the anti-oxidizing agent (or copper damage inhibitor) was replaced by the anti-oxidizing agent and copper damage inhibitor.

In Experiments 1 and 3, the anti-oxidizing agent was added in a proportion of about 3 parts by weight relative to 100 parts by weight of resin component, which is equivalent to the ratio used for HF-type electrical cables referred to in Table 1. Accordingly, for the adhesive, the addition of anti-oxidizing agent was designed to be 3 parts by weigh relative to 100 parts by weight of base organic material portion (acrylic acid resin emulsion), whereas, for the tape base, it was added in a proportion of 5 parts by weight relative to 160 parts by weight of base organic material portion (PVC + DOP), so that the weight ratio becomes 3.12:100. Likewise, in Experiments 2 and 3, the copper damage inhibitor was added in a proportion of about 1 part by weight relative to 100 parts by weight of base organic material portion, which is equivalent to the ratio used for HF-type electrical cables referred to in Table 1. Accordingly, for the adhesive, the addition of copper damage inhibitor was designed to be 1 part by weight relative to 100 parts by weight of base organic material portion (acrylic acid resin emulsion), whereas, for the tape base, it was added in a proportion of 1.6 parts by weight relative to 160 parts by weight of resin component (PVC + DOP), so that the weight ratio becomes 1:100.

The Prior Art Examples, Examples and Comparative Examples prepared according to the compositions referred to in Tables 53 to 55 were subjected to the tests and the evaluations of the results obtained.

One face of each of PVC tape base was painted with the adhesive, and the adhesive-painted face was wrapped around 5 types of cable bundles i.e. HF-type plain cable bundles and mixed cable bundles (see Fig.2(c)). The prepared samples were allowed to stand for 96 hours in a thermostatically controlled environment at 150 °C. The HF-type electrical cables were then taken out from the thermostat and wound around a mandrel of Φ 10 mm. The cable coatings were subjected to observations on whether cracks were formed and on the winding ease.

The test results mentioned in Tables 53 to 55 were only classified as a function of the resin composition, but not of the type of cable bundle, since the type of cable bundle or its mixture ratio did not affect the test results. According to these results, Prior Art Example of the PVC-type tape whose one face is painted with the adhesive showed a good operational ease on winding, but formed cracks in the HF-type electrical cables (indicated "X" as bad result). Comparative Examples 1-1, 1-2, 2-1, 2-2, 3-1 and 3-2 formed no crack in the HF-type electrical cables, but showed difficulty in winding operation, and were judged as failed. Examples 1-1 to 1-6, 2-1 to 2-6 and 3-1 to 3-6 formed no crack and enabled an easy winding operation, and were therefore judged as globally good ("O"). The test results did not differ between the taped portion A of the cable bundle and its non-taped portion B (Fig.2).

As mentioned above, the adhesive comprised an acrylic acid resin emulsion, an adsorbent, and an anti-oxidizing agent and/or a copper damage inhibitor, and the tape base was formed of a PVC resin material comprising an adsorbent, and an anti-oxidizing agent and/or a copper damage inhibitor. The adhesive was then painted on one whole face of the tape base, so as to prepare an adhesive tape. When this adhesive tape was wound around a HF-type plain cable bundle or a HF-type mixed cable bundle (cable: soft copper wires), the formed HF-type electrical cables formed no crack, and their anti-hot oxidation property was prevented from degradation.

The reasons for such improved results can be explained as follows.

First, the emulsion-type acrylic acid resin used as main component of the adhesive has a molecular weight far larger than the commonly used materials, and is comparatively less mobile and less prone to shift. As its molecular chain is long, its adhesive capacity is high, so that the adhesive made therefrom does not require the addition of plasticizers. Accordingly, the phenomenon of plasticizer migration, observed in the adhesive, can be suppressed.

Secondly, because of its long molecular chain and high viscosity, the emulsion-type acrylic acid resin used in the adhesive blocks the plasticizers in the tape base and prevents them from moving into the cable bundles.

Third, the emulsion-type acrylic acid resin and plasticizers contained in the adhesive-painted tape (PVC protector material) are adsorbed by an adsorbent, so that they are prevented from moving into the HF-type electrical cables. In the adhesive itself, the emulsion-type acrylic acid resin, already not so mobile, is adsorbed by an adsorbent, and is rendered further less mobile.

Fourth, by virtue to the immobilization of the emulsion-type acrylic acid resin and plasticizers, the plasticizers cannot dissolve the anti-oxidizing agent and copper damage inhibitor initially contained in the HF-type electrical cables, and carry them into the PVC protector material.

Fifth, the PVC protector material (adhesive-painted tape) contains an anti-oxidizing agent and/or a copper damage inhibitor in a suitable amount, so that their amount ratio in the PVC protector material is about the same as the ratio initially maintained in the HF-type electrical cables. Accordingly, there forms little concentration gradient of the anti-oxidizing agent and/or copper damage inhibitor between the HF-type electrical cables and the PVC protector material, so that the agents are prevented from diffusing from the HF-type electrical cables into the PVC protector material.

Sixth, the immobilization of the emulsion-type acrylic acid resin and plasticizers and the non-diffusion of the anti-oxidizing agent and/or copper damage inhibitor produce a synergic effect.

The tape base was formed of a HF resin containing an adsorbent, one whole face of the tape base was coated with an adhesive made of acrylic acid resin emulsion containing an adsorbent, so as to prepare a HF-type adhesive-painted tape. **Tables 56, 57 and 58** show Experiments 4 to 6, which comprise the compositions of the HF-type adhesive tapes thus prepared and test results effected with these tapes. In Experiment 4, the adhesive and tape base of the HF-type adhesive tape contained, inter alia, an anti-oxidizing agent In Experiment 5, the adhesive and tape base contained, inter alia, a copper damage inhibitor. In Experiment 6, the adhesive and tape base contained, inter alia, an anti-oxidizing agent and a copper damage inhibitor. In all cases, the adhesive had a thickness of 0.02 mm, and the adhesive and tape base had a total thickness of 0.13 mm.

As to the adhesive of the HF-type adhesive tapes of Experiment 4 referred to in **Table 56**, Prior Art Example contained 70 parts by weight of styrene butadiene rubber (SBR), 30 parts by weight of natural rubber (NR), 20 parts by weight of zinc white and 80 parts by weight of rosin-type resin. Examples 4-1 to 4-6 contained 100 parts by weight of acrylic acid resin emulsion, 1, 10 or 150 parts by weight (suitable amount) of adsorbent (carbon black or silica) and 3 parts by weight of anti-oxidizing agent. Comparative Examples 4-1 and 4-2 contained 100 parts by weight of acrylic acid resin emulsion, 160 parts by weight (excessive amount) of adsorbent (carbon black or silica) and 3 parts by weight of anti-oxidizing agent.

As to the tape base, Prior Art Example contained 100 parts by weight of polyolefin-type resin, 3 parts by weight of bromine-type flame-retardant and 1.5 parts by weight of antimony trioxide. Compared to this, Examples 4-1 to 4-6 further contained 1, 10 or 150 parts by weight (suitable amount) of adsorbent (carbon black or silica) and 3.5 parts by weight of anti-oxidizing agent. Likewise, Comparative Examples 4-1 and 4-2 further contained, compared to Prior Art Example, 160 parts by weight (excessive amount) of adsorbent (carbon black or silica) and 3.5 parts by weight of anti-oxidizing agent.

As to the adhesive of the HF-type adhesive tapes of Experiment 5 referred to in **Table 57**, Prior Art Example contained 70 parts by weight of styrene butadiene rubber (SBR), 30 parts by weight of natural rubber (NR), 20 parts by weight of zinc white and 80 parts by weight of rosin-type resin. Examples 5-1 to 5-6 contained 100 parts by weight of acrylic acid resin emulsion, 1, 10 or 150 parts by weight (suitable amount) of adsorbent (carbon black or silica) and 1 part by weight of copper damage inhibitor. Comparative Examples 5-1 and 5-2 contained 100 parts by weight of acrylic acid resin emulsion, 160 parts by weight (excessive amount) of adsorbent (carbon black or silica) and 1 part by weight of copper damage inhibitor.

As to the tape base, Prior Art Example contained 100 parts by weight of polyolefin-type resin, 3 parts by weight of bromine-type flame-retardant and 1.5 parts by weight of antimony trioxide. Compared to this, Examples 5-1 to 5-6 further contained 1, 10 or 150 parts by weight (suitable amount) of adsorbent (carbon black or silica) and 1 part by weight of copper damage inhibitor. Likewise, Comparative Examples 5-1 and 5-2 further contained, compared to Prior Art Example, 160 parts by weight (excessive amount) of adsorbent (carbon black or silica) and 1 part by weight of copper damage inhibitor.

As to the adhesive of the HF-type adhesive tapes of Experiment 6 referred to in **Table 58**, Prior Art Example contained 70 parts by weight of styrene butadiene rubber (SBR), 30 parts by weight of natural rubber (NR), 20 parts by weight of zinc white and 80 parts by weight of rosin-type resin. Examples 6-1 to 6-6 contained 100 parts by weight of acrylic acid resin emulsion, 1, 10 or 150 parts by weight (suitable amount) of adsorbent (carbon black or silica), 3 parts by weight of anti-oxidizing agent and 1 part by weight of copper damage inhibitor. Comparative Examples 6-1 and 6-2 contained 100 parts by weight of acrylic acid resin emulsion, 160 parts by weight (excessive amount) of adsorbent (carbon black or silica), 3 parts by weight of anti-oxidizing agent and 1 part by weight of copper damage inhibitor.

As to the tape base, Prior Art Example contained 100 parts by weight of polyolefin-type resin, 3 parts by weight of bromine-type flame-retardant and 1.5 parts by weight of antimony trioxide. Compared to this, Examples 6-1 to 6-6 further contained 1, 10 or 150 parts by weight (suitable amount) of adsorbent (carbon black or silica), 3.5 parts by weight of anti-oxidizing agent and 1 part by weight of copper damage inhibitor. Likewise, Comparative Examples 6-1 and 6-2 further contained, compared to Prior Art Example, 160 parts by weight (excessive amount) of adsorbent (carbon black or silica), 3.5 parts by weight of anti-oxidizing agent and 1 part by weight of copper damage inhibitor.

In other words, in Experiments 4 to 6 referred to in Tables 56 to 58, the adhesive of the HF-type adhesive tapes contained, in common, an emulsion-type acrylic acid resin and an adsorbent, whereas the tape base thereof contained an adsorbent in common. Experiment 5 corresponded to Experiment 4 in which the anti-oxidizing agent was replaced by the copper damage inhibitor. Likewise, Experiment 6 corresponded to Experiment 4 (or Experiment 5) in which the anti-oxidizing agent (or copper damage inhibitor) was replaced by the anti-oxidizing agent and copper damage inhibitor.

In Experiments 4 and 6, the anti-oxidizing agent was added in a proportion of about 3 parts by weight relative to 100 parts by weight of base organic material portion, which is equivalent to the ratio used for HF-type electrical cables referred to in Table 1. Accordingly, for the adhesive, the addition of anti-oxidizing agent was designed to be 3 parts by weigh relative to 100 parts by weight of base organic material portion (acrylic acid resin emulsion) whereas, for the tape base, it was added in a proportion of 3.5 parts by weight relative to 100 parts by weight of base organic material portion (polyolefin, the flame-retardant being disregarded). Likewise, in Experiments 5 and 6, the copper damage inhibitor was added in a proportion of about 1 part by weight relative to 100 parts by weight of base organic material portion, which is equivalent to the ratio used for HF-type electrical cables referred to in Table 1. Accordingly, for the adhesive, the addition of copper damage inhibitor was designed to be 1 part by weigh relative to 100 parts by weight of base organic material portion (acrylic acid resin emulsion) whereas, for the tape base, it was added in a proportion of 1 part by weight relative to 100 parts by weight of base organic material portion (polyolefin, the flame-retardant being disregarded).

The Prior Art Examples, Examples and Comparative Examples prepared according to the compositions referred to in Tables 56 to 58 were subjected to the tests and the evaluations of the results obtained.

One face of each of HF tape base was painted with the adhesive, and the adhesive-painted face was wrapped around 5 types of cable bundles i.e. HF-type plain cable bundles and mixed cable bundles (see Fig.2(c)). The prepared samples were allowed to stand for 96 hours in a thermostat at 150 °C. The HF-type electrical cables were then taken out from the thermostatically controlled environment and wound around a mandrel of Φ 10 mm. The cable coatings were subjected to observations as to whether cracks were formed and on the winding ease.

The test results mentioned in Tables 56 to 58 were only classified as a function of the resin composition, but not of the type of cable bundle, since the type of cable bundle or its mixture ratio did not affect the test results. According to these results, Prior Art Example of the HF-type tape, of which one face was painted with the adhesive, showed a good operational ease of winding, but formed cracks in the HF-type electrical cables (indicated "X" as bad result). Comparative Examples 4-1, 4-2, 5-1, 5-2, 6-1 and 6-2 formed no crack in the HF-type electrical cables, but showed difficulty in winding operation, and were judged as failed. Examples 4-1 to 4-6, 5-1 to 5-6 and 6-1 to 6-6 formed no crack and enabled an easy winding operation, and were therefore judged as globally good ("O"). The test results did not differ between the taped portion A of the cable bundle and its non-taped portion B (Fig.2).

As mentioned above, the adhesive comprises an acrylic acid resin emulsion, an adsorbent, and an anti-oxidizing agent and/or a copper damage inhibitor, and the tape base is formed of a polyolefin-type HF resin material comprising an adsorbent, and an anti-oxidizing agent and/or a copper damage inhibitor. The adhesive is then painted on one whole face of the tape base, so as to prepare an adhesive tape. When this adhesive tape is wound around a HF-type plain cable bundle or a HF-type mixed cable bundle (cable: soft copper wires), the formed HF-type electrical cables formed no crack, and their anti-hot oxidizing property was prevented from degradation.

As in the cases of Experiments 1 to 3, the reasons for such improved results can be explained as follows.

First, the emulsion-type acrylic acid resin used as main component of the adhesive has a molecular weight far larger than the commonly used materials, and is comparatively less mobile and less prone to shift. As its molecular chain is long, its adhesive capacity is high, so that the adhesive made therefrom does not require the addition of plasticizers. Accordingly, the phenomenon of plasticizer migration, observed in the adhesive, can be suppressed.

Secondly, because of its long molecular chain and high viscosity, the emulsion-type acrylic acid resin used in the adhesive prevents the plasticizers in the tape base from moving into the cable bundles.

Third, the emulsion-type acrylic acid resin and plasticizers contained in the adhesive-painted HF tape (HF protector material) are adsorbed by an adsorbent, so that they are prevented from moving into the HF-type electrical cables. In the adhesive itself, the emulsion-type acrylic acid resin, already not so mobile, is adsorbed by an adsorbent, and is rendered even less mobile.

Fourth, the HF protector material (adhesive-painted tape) contains an adsorbent, which may improve the anti-hot oxidizing property of the HF protector material. Carbon black used as an adsorbent improves the durability of the HF protector material, whilst silica used as an adsorbent improves the heat resistance and acid resistance of the HF protector material. As a result, the anti-hot oxidizing property of HF electrical cables is rendered durable.

Fifth, the adsorbent contained in the HF protector material (adhesive-painted tape) prevents the plasticizers in the PVC electrical cables from moving into the HF protector material. This occurs especially when a mixed cable bundle is used.

Sixth, the anti-oxidizing agent and copper damage inhibitor contained in the HF protector material (adhesive-painted tape) render the latter a kind of barrier, and protect from the effects of water in the air and of the adhesive. As a result, the anti-hot oxidizing property of HF electrical cables is prevented from degradation.

Seventh, the PVC protector material (adhesive-painted tape) contains an anti-oxidizing agent and/or a copper damage inhibitor in a suitable amount, so that their amount ratio in the PVC protector material is about the same as the ratio initially maintained in the HF-type electrical cables. Accordingly, there forms little concentration gradient of the anti-oxidizing agent and/or copper damage inhibitor between the HF-type electrical cables and the PVC protector material, so that the agents are prevented from diffusing from the HF-type electrical cables into the PVC protector material.

Eighth, the immobilization of the emulsion-type acrylic acid resin and plasticizers and the non-diffusion of the anti-oxidizing agent and/or copper damage inhibitor produce a synergic effect.

Although the above embodiment is explained using a harness-protecting material made of PVC-type resin or polyolefin-type resin, the resin composition of the invention is not limited to the above resin.

The invention relates to a harness-protecting material, e.g. tape painted with an adhesive, and the adhesive containing an acrylic acid resin. In such case, when HF-type electrical cables are used alone, or they are used in a mixture with PVC-type electrical cables, the HF-type electrical cables and harness-protecting material can avoid the degrading effect of the PVC-type electrical cables. The electrical cables in the wire harness thus maintain a good and stable quality, and secure a long and durable use.

In the above harness-protecting material, the adhesive painted on the surface of the tape base contains an acrylic acid-type resin as base polymer portion which is less prone to move, and the harness-protecting material can maintain a good anti-hot oxidizing property. As a result, the insulated HF electrical cables are prevented from the deterioration of its anti-hot oxidizing property.

In the above harness-protecting material, the tape base and/or adhesive contain(s) an adsorbent. When the tape base is formed of a PVC-type resin, the adsorbent adsorbs the plasticizer and the acrylic acid resin. When the tape base is formed of a HF-type resin, the adsorbent improves the durability, heat resistance and acid resistance of the harness-protecting material. Accordingly, the harness-protecting material can maintain its good anti-hot oxidizing property. As a result, the insulated HF electrical cables are protected from the degradation of its anti-hot oxidizing quality.

In the above harness-protecting material, the tape base and/or adhesive further contain(s) an anti-oxidizing agent and/or a copper damage inhibitor. The presence of these agent(s) in the tape base and/or adhesive prevents those contained in the cable coatings of insulated HF electrical cables from diffusing into the harness-protecting material. As a result, the insulated HF electrical cables are protected from the degradation of its anti-hot oxidizing quality.

In the wire harness of the invention, a cable bundle made of insulated HF-type electrical cables alone, or a mixture of them with insulated PVC-type electrical cables, is wrapped with a harness-protecting material of the invention. The electrical cables in the wire harness thus maintain a high anti-hot oxidizing quality, and secure a long and durable use.

Table 1

| Composition of the cable coating for HF-type electrical cables | |
|---|---|
| composition | content (parts by weight) |
| polypropylene | 100 |
| magnesium hydroxide | 80 |
| anti-oxidizing agent (AA) | 3 |
| AA/100 parts by weight of base organic material portion | 3 |
| copper damage inhibitor | 1 |
| total (parts by weight) | 184 |

Table 2

| Composition of the cable coating for PVC-type electrical cables | |
|---|---|
| composition | content (parts by weight) |
| polyvinyl chloride (PVC) polymerization rate 1300 | 100 |
| diisononyl phthalate (DINP) | 40 |
| calcium carbonate | 20 |
| stabilizer | 5 |
| total (parts by weight) | 165 |

Table 3

| Composition of the cable coating for PVC-type electrical cables (containing an anti-oxidizingagent) | |
|---|---|
| composition | content (parts by weight) |
| polyvinyl chloride (PVC) P: 1300 | 100 |
| diisononyl phthalate | 40 |
| calcium carbonate | 20 |
| stabilizer | 5 |
| anti-oxidizing agent (AA) | 4.5 |
| AA/100 parts by weight of base organic material portion | 3.2 |
| total (parts by weight) | 169.5 |

Table 4

| Common components and their manufacturers | |
|---|---|
| reagents | manufacturer and trade marks |
| polyvinyl chloride (PVC), P: 1300 | Tosoh Co. Ltd.. |
| polypropylene | Idemitsu Petrochemicals "RB610A" |
| polyolefin | Sun Aroma Co. Ltd., "Q200F" |
| styrene butadiene rubber (SBR) | JSR Co. Ltd., "1013N" |
| natural rubber (NR) | RSS, "No.2" |
| rosin type resin | Arakawa Chemical Industries Co. Ltd., "Ester Gum H" |
| hydrogenated terpene-type resin | Yasuhara Chemicals Co. Ltd., "clearon P115" |
| hydrogenated aromatic resin | Arakawa Chemical Industries Co. Ltd., "Alcon P100" |
| hydrogenated aliphatic resin | Maruzen Petrochemicals Co. Ltd.,"Marukarets H505" |
| cumarone-indene type resin | Morimura Sangyo "Kona cumarone # 900" |
| phenol type resin | Gun-ei Chemical Industries Co. Ltd., "PS 2768" |
| magnesium hydroxide (flame retardant) | Kyowa Chemical Industries Co. Ltd., " Kisma 5" |
| bromine-type flame retardant | Teijin Chemicals Co. Ltd. "FG3100" |
| antimony trioxide | Chugoku Kogyo Co. Ltd. |
| calcium carbonate (filler) | Maruo Calcium Co. Ltd., " Super #1700" |
| zinc white # 3 | Sakai Chemical Industries Co. Ltd. |
| stabilizer | Asahi Denka Industries Co. Ltd., "Rup 110" |
| diisononyl phthalate (DINP) | Daihachi Chemical Industries Co. Ltd. |
| dioctyl phthalate (DOP) | Daihachi Chemicals Industries Co. Ltd. |
| anti-oxidizing agent | Chiba Specialty Chemicals Co. Ltd., "Irganox 1010" |
| copper damage inhibitor (for cable coatings) | Asahi Denka Industries Co. Ltd., "CDA-1" |
| copper damage inhibitor (for harness-protecting materials) | Asahi Denka Industries Co. Ltd., "ZS27" |
| carbon black | Tokai Carbon Co. Ltd. "Seast SO" |
| silica | Nippon Silica Industries Co. Ltd. "Nipsil AQ" |
| emulsion type acrylic acid resin | Nippon Carbide Industries Co. Ltd. "L-145" |

Table 5

| Tape base thickness : 0.11 mm: Adhesive thickness : 0.02mm | | | | | | | |
|---|---|---|---|---|---|---|---|
| Composition of PVC-type adhesive tapes (containing an anti-oxidizing agent) | | | | | | | |
| composition of the tape base | Prior Art 1 | Comparative Example 1 | Example 1 | Example 2 | Example 3 | Example 4 | Example 5 |
| PVC(P: 1300) | 100 | 100 | 100 | 100 | 100 | 100 | 100 |
| DOP | 60 | 60 | 60 | 60 | 60 | 60 | 60 |
| calcium carbonate | 20 | 20 | 20 | 20 | 20 | 20 | 20 |
| stabilizer | 5 | 5 | 5 | 5 | 5 | 5 | 5 |

Table 5   (continued)

| Composition of PVC-type adhesive tapes (containing an anti-oxidizing agent) | | | | | | | |
|---|---|---|---|---|---|---|---|
| **composition of the tape base** | Prior Art 1 | Comparative Example 1 | Example 1 | Example 2 | Example 3 | Example 4 | Example 5 |
| anti-oxidizing agent (AA) | - | 30 | 0.5 | 5 | 7.5 | 12.5 | 25 |
| AA/100 wt parts of base org. mat. portion | (-) | (18.8) | (0.3) | (3.1) | (4.7) | (7.8) | (15.6) |
| total (parts by weight) | 185 | 215 | 185.5 | 190 | 192.5 | 197.5 | 210 |
| **composition of the adhesive** | | | | | | | |
| SBR | 70 | 70 | 70 | 70 | 70 | 70 | 70 |
| natural rubber | 30 | 30 | 30 | 30 | 30 | 30 | 30 |
| zinc white # 3 | 20 | 20 | 20 | 20 | 20 | 20 | 20 |
| rosin-type resin | 80 | - | - | - | - | - | - |
| hydrogenated terpene-type resin | - | - | 80 | - | - | - | - |
| Hydrogenated aromatic resin | - | - | - | 80 | - | - | - |
| hydrogenated aliphatic resin | - | - | - | - | 80 | - | - |
| cumarone-indene type resin | - | - | - | - | - | 80 | - |
| phenol-type resin | - | 80 | - | - | - | - | 80 |
| anti-oxidizing agent(AA) | - | 36 | 0.6 | 6 | 9 | 14 | 28 |
| AA/100 wt parts of base org. mat. portion | (-) | (20) | (0.3) | (3.3) | (5) | (7.8) | (15.5) |
| total (parts by weight) | 200 | 236 | 200.6 | 206 | 209 | 214 | 228 |

Table 6

| Tape base thickness : 0.11 mm: Adhesive thickness : 0.02mm | | | | | | | |
|---|---|---|---|---|---|---|---|
| **Composition of HF-type adhesive tapes (containing an anti-oxidizing agent)** | | | | | | | |
| **composition of the tape base** | Prior Art 2 | Comparative Example 2 | Example 6 | Example 7 | Example 8 | Example 9 | Example 10 |
| polyolefin | 100 | 100 | 100 | 100 | 100 | 100 | 100 |
| bromine-type flame retardant | 3 | 3 | 3 | 3 | 3 | 3 | 3 |
| antimony trioxide | 1.5 | 1.5 | 1.5 | 1.5 | 1.5 | 1.5 | 1.5 |
| anti-oxidizing agent (AA) | - | 20 | 0.4 | 3.5 | 5.5 | 8 | 16 |
| AA/100 wt parts of base org. mat. portion | (-) | (19.4) | (0.4) | (3.4) | (5.3) | (7.8) | (15.5) |
| total (parts by weight) | 104.5 | 124.5 | 104.9 | 108 | 110 | 112.5 | 120.5 |
| **composition of the adhesive** | | | | | | | |
| SBR | 70 | 70 | 70 | 70 | 70 | 70 | 70 |
| natural rubber | 30 | 30 | 30 | 30 | 30 | 30 | 30 |
| zinc white # 3 | 20 | 20 | 20 | 20 | 20 | 20 | 20 |
| rosin-type resin | 80 | - | - | - | - | - | - |
| hydrogenated terpene-type resin | - | - | 80 | - | - | - | - |
| hydrogenated aromatic resin | - | - | - | 80 | - | - | - |
| hydrogenated aliphatic resin | - | - | - | - | 80 | - | - |
| coumarone-indene type resin | - | - | - | - | - | 80 | - |
| phenol-type resin | - | 80 | - | - | - | - | 80 |
| anti-oxidizing agent (AA) | - | 36 | 0.6 | 6 | 9 | 14 | 28 |
| AA/100 wt parts of base org. mat. portion | (-) | (20) | (0.3) | (3.3) | (5) | (7.8) | (15.5) |
| total (parts by weight) | 200 | 236 | 200.6 | 206 | 209 | 214 | 228 |

Table 7

| Tape base thickness : 0.11 mm: Adhesive thickness : 0.02mm | | | | | | | |
|---|---|---|---|---|---|---|---|
| **Composition of PVC-type adhesive tapes (containing a copper damage inhibitor)** | | | | | | | |
| **composition of the tape base** | Prior Art 3 | Comparative Example 3 | Example 11 | Example 12 | Example 13 | Example 14 | Example 15 |
| PVC (P: 1300) | 100 | 100 | 100 | 100 | 100 | 100 | 100 |
| DOP | 60 | 60 | 60 | 60 | 60 | 60 | 60 |
| calcium carbonate | 20 | 20 | 20 | 20 | 20 | 20 | 20 |
| stabilizer | 5 | 5 | 5 | 5 | 5 | 5 | 5 |
| copper damage inhibitor | - | 11.2 | 0.002 | 0.016 | 1.6 | 4.8 | 8 |
| total (parts by weight) | 185 | 196.2 | 185.002 | 185.016 | 186.6 | 189.8 | 193 |
| **composition of the adhesive** | | | | | | | |
| SBR | 70 | 70 | 70 | 70 | 70 | 70 | 70 |
| natural rubber | 30 | 30 | 30 | 30 | 30 | 30 | 30 |
| zinc white # 3 | 20 | 20 | 20 | 20 | 20 | 20 | 20 |
| rosin-type resin | 80 | - | - | - | - | - | - |
| hydrogenated terpene-type resin | - | - | 80 | - | - | - | - |
| hydrogenated aromatic resin | - | - | - | 80 | - | - | - |
| hydrogenated aliphatic resin | - | - | - | - | 80 | - | - |
| coumarone-indene type resin | - | - | - | - | - | 80 | - |
| phenol-type resin | - | 80 | - | - | - | - | 80 |
| copper damage inhibitor | - | 12.6 | 0.002 | 0.02 | 1.8 | 4.8 | 9 |
| total (parts by weight) | 200 | 212.6 | 200.002 | 200.02 | 201.8 | 204.8 | 209 |

Table 8

| Tape base thickness : 0.11 mm: Adhesive thickness : 0.02mm | | | | | | | |
|---|---|---|---|---|---|---|---|
| **Composition of HF-type adhesive tapes (containing a copper damage inhibitor)** | | | | | | | |
| **composition of the tape base** | Prior Art 4 | Comparative Example 4 | Example 16 | Example 17 | Example 18 | Example 19 | Example 20 |
| polyolefin | 100 | 100 | 100 | 100 | 100 | 100 | 100 |
| bromine-type flame retardant | 3 | 3 | 3 | 3 | 3 | 3 | 3 |
| antimony trioxide | 1.5 | 1.5 | 1.5 | 1.5 | 1.5 | 1.5 | 1.5 |
| copper damage-preventing agent | - | 7.2 | 0.001 | 0.01 | 1 | 3.1 | 5.2 |
| total (parts by weight) | 104.5 | 111.7 | 104.501 | 104.51 | 105.5 | 107.6 | 109.7 |
| **composition of the adhesive** | | | | | | | |
| SBR | 70 | 70 | 70 | 70 | 70 | 70 | 70 |
| natural rubber | 30 | 30 | 30 | 30 | 30 | 30 | 30 |
| zinc white # 3 | 20 | 20 | 20 | 20 | 20 | 20 | 20 |
| rosin-type resin | 80 | - | - | - | - | - | - |
| hydrogenated terpene-type resin | - | - | 80 | - | - | - | - |
| hydrogenated aromatic resin | - | - | - | 80 | - | - | - |
| hydrogenated aliphatic resin | - | - | - | - | 80 | - | - |
| coumarone-indene type resin | - | - | - | - | - | 80 | - |
| phenol-type resin | - | 80 | - | - | - | - | 80 |
| copper damage inhibitor | - | 12.6 | 0.002 | 0.02 | 1.8 | 4.8 | 9 |
| total (parts by weight) | 200 | 212.6 | 200.002 | 200.02 | 201.8 | 204.8 | 209 |

Table 9

| Tape base thickness : 0.11 mm: Adhesive thickness : 0.02mm | | | | | | | |
|---|---|---|---|---|---|---|---|
| **Composition of PVC-type adhesive tapes (containing an anti-oxidizing agent and a copper damage inhibitor)** | | | | | | | |
| **composition of the tape base** | Prior Art 5 | Comparative Example 5 | Example 21 | Example 22 | Example 23 | Example 24 | Example 25 |
| PVC (P:1300) | 100 | 100 | 100 | 100 | 100 | 100 | 100 |
| DOP | 60 | 60 | 60 | 60 | 60 | 60 | 60 |
| calcium carbonate | 20 | 20 | 20 | 20 | 20 | 20 | 20 |
| stabilizer | 5 | 5 | 5 | 5 | 5 | 5 | 5 |
| anti-oxidizing agent (AA) | - | 5 | 5 | 5 | 5 | 5 | 5 |
| AA/100 wt parts of base org. mat. portion | (-) | (3.1) | (3.1) | (3.1) | (3.1) | (3.1) | (3.1) |
| copper damage inhibitor | - | 11.2 | 0.002 | 0.016 | 1.6 | 4.8 | 8 |
| total (parts by weight) | 185 | 201.2 | 190.002 | 190.016 | 191.6 | 194.8 | 198 |
| **composition of the adhesive** | | | | | | | |
| SBR | 70 | 70 | 70 | 70 | 70 | 70 | 70 |
| natural rubber | 30 | 30 | 30 | 30 | 30 | 30 | 30 |
| zinc white # 3 | 20 | 20 | 20 | 20 | 20 | 20 | 20 |
| rosin-type resin | 80 | - | - | - | - | - | - |
| hydrogenated terpene-type resin | - | - | 80 | - | - | - | - |
| aromatic-type hydrolysed resin | - | - | - | 80 | - | - | - |
| hydrogenated aliphatic resin | - | - | - | - | 80 | - | - |
| coumarone-indene type resin | - | - | - | - | - | 80 | - |
| phenol-type resin | - | 80 | - | - | - | - | 80 |
| anti-oxidizing agent (AA) | - | 6 | 6 | 6 | 6 | 6 | 6 |

Table 9   (continued)

| Tape base thickness : 0.11 mm: Adhesive thickness : 0.02mm | | | | | | |
|---|---|---|---|---|---|---|
| **Composition of PVC-type adhesive tapes (containing an anti-oxidizing agent and a copper damage inhibitor)** | | | | | | |
| **composition of the adhesive** | | | | | | |
| AA/100 wt parts of base org. mat. portion | (-) | (3.3) | (3.3) | (3.3) | (3.3) | (3.3) | (3.3) |
| copper damage inhibitor | - | 12.6 | 0.002 | 0.02 | 1.8 | 4.8 | 9 |
| total (parts by weight) | 200 | 218.6 | 206.002 | 206.02 | 207.8 | 210.8 | 215 |

Table 10

| Tape base thickness : 0.11mm: Adhesive thickness : 0.02 mm | | | | | | |
|---|---|---|---|---|---|---|
| **Composition of HF-type adhesive tapes (containing an anti-oxidizing agent and a copper damage inhibitor)** | | | | | | |
| **composition of the tape base** | Prior Art 6 | Comparative Example 6 | Example 26 | Example 27 | Example 28 | Example 29 | Example 30 |
| polyolefin | 100 | 100 | 100 | 100 | 100 | 100 | 100 |
| bromine-type flame retardant | 3 | 3 | 3 | 3 | 3 | 3 | 3 |
| antimony trioxide | 1.5 | 1.5 | 1.5 | 1.5 | 1.5 | 1.5 | 1.5 |
| anti-oxidizing agent (AA) | - | 3.5 | 3.5 | 3.5 | 3.5 | 3.5 | 3.5 |
| AA/100 wt parts of base org. mat. portion | (-) | (3.4) | (3.4) | (3.4) | (3.4) | (3.4) | (3.4) |
| copper damage inhibitor | - | 7.2 | 0.001 | 0.01 | 1 | 3.1 | 5.2 |
| total (parts by weight) | 104.5 | 115.2 | 108.001 | 108.01 | 109 | 111.1 | 113.2 |
| **composition of the adhesive** | | | | | | |
| SBR | 70 | 70 | 70 | 70 | 70 | 70 | 70 |
| natural rubber | 30 | 30 | 30 | 30 | 30 | 30 | 30 |
| zinc white # 3 | 20 | 20 | 20 | 20 | 20 | 20 | 20 |

Table 10   (continued)

| Composition of HF-type adhesive tapes (containing an anti-oxidizing agent and a copper damage inhibitor) | | | | | | | |
|---|---|---|---|---|---|---|---|
| composition of the adhesive | | | | | | | |
| rosin-type resin | 80 | - | - | - | - | - | - |
| hydrogenated terpene-type resin | - | - | 80 | - | - | - | - |
| hydrogenated aromatic resin | - | - | - | 80 | - | - | - |
| hydrogenated aliphatic resin | - | - | - | - | 80 | - | - |
| coumarone-indene type resin | - | - | - | - | - | 80 | - |
| phenol-type resin | - | 80 | - | - | - | - | 80 |
| anti-oxidizing agent (AA) | - | 6 | 6 | 6 | 6 | 6 | 6 |
| AA/100 wt parts of base org. mat. portion | (-) | (3.3) | (3.3) | (3.3) | (3.3) | (3.3) | (3.3) |
| copper damage inhibitor | - | 12.6 | 0.002 | 0.02 | 1.8 | 4.8 | 9 |
| total (parts by weight) | 200 | 218.6 | 206.002 | 206.02 | 207.8 | 210.8 | 215 |

Table 11

| HF-type plain cable bundle x PVC-type adhesive tape (containing an anti-oxidizing agent) | | | | | | | |
|---|---|---|---|---|---|---|---|
| | type of wire harness | | | | | | |
| | Prior Art W1 | Comparative Example W1 | Example W1 | Example W2 | Example W3 | Example W4 | Example W5 |
| cable bundle | HF-type plain cable bundle (30 electrical cables) | | | | | | |
| type of adhesive tape | Prior Art 1 | Comparative Example 1 | Example 1 | Example 2 | Example 3 | Example 4 | Example 5 |
| | experimental results | | | | | | |
| 150°C, 96hr, 10φ mandrel-winding | X (cable) | O (cable) | O (cable) | O (cable) | O (cable) | O (cable) | O (cable) |

Table 11 (continued)

| HF-type plain cable bundle x PVC-type adhesive tape (containing an anti-oxidizing agent) | | | | | | |
|---|---|---|---|---|---|---|
| experimental results | | | | | | |
| wrapping operation | O | X | O | O | O | O | O |
| gluing capacity | O | X | O | O | O | O | O |
| global evaluation | X | X | O | O | O | O | O |
| **[Note]** O: good, or no crack formed; X: bad, or cracks formed (in all the tables). | | | | | | |

Table 12

| HF-type plain cable bundle x HF-type adhesive tape (containing an anti-oxidizing agent) | | | | | | | |
|---|---|---|---|---|---|---|---|
| | type of wire harness | | | | | | |
| | Prior Art W2 | Comparative Example W2 | Example W6 | Example W7 | Example W8 | Example W9 | Example W10 |
| cable bundle | HF-type plain cable bundle (30 electrical cables) | | | | | | |
| type of adhesive tape | Prior Art 2 | Comparative Example 2 | Example 6 | Example 7 | Example 8 | Example 9 | Example 10 |
| experimental results | | | | | | | |
| 150°C, 96hr, 10φ mandrel-winding | X (cable) | O (cable) | O (cable) | O (cable) | O (cable) | O (cable) | O (cable) |
| | X (tape) | O (tape) | O (tape) | O (tape) | O (tape) | O (tape) | O (tape) |
| wrapping operation | O | X | O | O | O | O | O |
| gluing capacity | O | X | O | O | O | O | O |
| global evaluation | X | X | O | O | O | O | O |

Table 13

| HF-type plain cable bundle x PVC-type adhesive tape (containing a copper damage inhibitor) | | | | | | | |
|---|---|---|---|---|---|---|---|
| | type of wire harness | | | | | | |
| | Prior Art W3 | Comparative Example W3 | Example W11 | Example W12 | Example W13 | Example W14 | Example W15 |
| cable bundle | HF-type plain cable bundle (30 electrical cables) | | | | | | |
| type of adhesive tape | Prior Art 3 | Comparative Example 3 | Example 11 | Example 12 | Example 13 | Example 14 | Example 15 |
| experimental results | | | | | | | |
| 150°C, 96hr, 10φ mandrel-winding | X (cable) | O (cable) | O (cable) | O (cable) | O (cable) | O (cable) | O (cable) |
| wrapping operation | O | X | O | O | O | O | O |
| appearance | O | X | O | O | O | O | O |
| gluing capacity | O | X | O | O | O | O | O |
| global evaluation | X | X | O | O | O | O | O |

Table 14

| HF-type plain cable bundle x HF-type adhesive tape (containing a copper damage inhibitor) | | | | | | | |
|---|---|---|---|---|---|---|---|
| | type of wire harness | | | | | | |
| | Prior Art W4 | Comparative Example W4 | Example W16 | Example W17 | Example W18 | Example W19 | Example W20 |
| cable bundle | HF-type plain cable bundle (30 electrical cables) | | | | | | |
| type of adhesive tape | Prior Art 4 | Comparative Example 4 | Example 16 | Example 17 | Example 18 | Example 19 | Example 20 |
| experimental results | | | | | | | |
| 150°C, 96hr, 10φ mandrel-winding | X (cable) | O (cable) | O (cable) | O (cable) | O (cable) | O (cable) | O (cable) |
| | X (tape) | O (tape) | O (tape) | O (tape) | O (tape) | O (tape) | O (tape) |
| wrapping operation | O | X | O | O | O | O | O |
| appearance | O | X | O | O | O | O | O |
| gluing capacity | O | X | O | O | O | O | O |
| global evaluation | X | X | O | O | O | ○ | O |

Table 15

| | type of wire harness | | | | | | |
|---|---|---|---|---|---|---|---|
| **HF-type plain cable bundle x PVC-type adhesive tape (containing an anti-oxidizing agent and a copper damage inhibitor)** | | | | | | | |
| | Prior Art W5 | Comparative Example W5 | Example W21 | Example W22 | Example W23 | Example W24 | Example W25 |
| cable bundle | HF-type plain cable bundle (30 electrical cables) | | | | | | |
| type of adhesive tape | Prior Art 5 | Comparative Example 5 | Example 21 | Example 22 | Example 23 | Example 24 | Example 25 |
| | experimental results | | | | | | |
| 150°C, 96hr, 10φ mandrel-winding | X (cable) | O (cable) | O (cable) | O (cable) | O (cable) | O (cable) | O (cable) |
| wrapping operation | O | X | O | O | O | O | O |
| appearance | O | X | O | O | O | O | O |
| gluing capacity | O | X | O | O | O | O | O |
| global evaluation | X | X | O | O | O | O | O |

Table 16

| | type of wire harness | | | | | | |
|---|---|---|---|---|---|---|---|
| **HF-type plain cable bundle x HF-type adhesive tape (containing an anti-oxidizing agent and a copper-poisoning preventing agent)** | | | | | | | |
| | Prior Art W6 | Comparative Example W6 | Example W26 | Example W27 | Example W28 | Example W29 | Example W30 |
| cable bundle | HF-type plain cable bundle (30 electrical cables) | | | | | | |
| type of adhesive tape | Prior Art 6 | Comparative Example 6 | Example 26 | Example 27 | Example 28 | Example 29 | Example 30 |
| | experimental results | | | | | | |
| 150°C, 96hr, 10φ mandrel-winding | X (cable) | O (cable) | O (cable) | O (cable) | O (cable) | O (cable) | O (cable) |
| | X (tape) | O (tape) | O (tape) | O (tape) | O tape) | O (tape) | O (tape) |
| wrapping operation | O | X | O | O | O | O | O |
| appearance | O | X | O | O | O | O | O |
| gluing capacity | O | X | O | O | O | O | O |
| global evaluation | X | X | O | O | O | O | O |

Table 17

| (Mixed cable bundle of PVC-type electrical cables and HF-type electrical cables) x PVC-type adhesive tape (containing an anti-oxidizing agent) | | | | | | | | | | | | | | | | | | | | | |
|---|---|---|---|---|---|---|---|---|---|---|---|---|---|---|---|---|---|---|---|---|---|
| | type of wire harness | | | | | | | | | | | | | | | | | | | | |
| | Prior Art W7 | | | Comparative Example W7 | | | Example W31 | | | Example W32 | | | Example W33 | | | Example W34 | | | Example W35 | | |
| number ratio of PVC-type cables: HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 1 | | | Comparative Example 1 | | | Example 1 | | | Example 2 | | | Example 3 | | | Example 4 | | | Example 5 | | |
| experimental results | | | | | | | | | | | | | | | | | | | | | |
| 150°C, 96hr, 10φmandrel-winding | X (cable) | | | O (cable) | | | O (cable) | | | O (cable) | | | O (cable) | | | O (cable) | | | O (cable) | | |
| wrapping operation | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

Table 18

| | Prior Art W8 | | | Comparative Example W8 | | | Example W36 | | | Example W37 | | | Example W38 | | | Example W39 | | | Example W40 | | |
|---|---|---|---|---|---|---|---|---|---|---|---|---|---|---|---|---|---|---|---|---|---|
| **(Mixed cable bundle of PVC-type electrical cables and HF-type electrical cables) x HF-type adhesive tape (containing an anti-oxidizing agent)** | | | | | | | | | | | | | | | | | | | | | |
| type of wire harness | | | | | | | | | | | | | | | | | | | | | |
| number ratio of PVC-type cables: HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 2 | | | Comparative Example 2 | | | Example 6 | | | Example 7 | | | Example 8 | | | Example 9 | | | Example 10 | | |
| experimental results | | | | | | | | | | | | | | | | | | | | | |
| 150°C, 96hr, 10ϕ mandrel-winding | X (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | |
| wrapping operation | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

Table 19

| (Mixed cable bundle of PVC-type electrical cables and HF-type electrical cables) x PVC-type adhesive tape (containing a copper damage inhibitor) | | | | | | | | | | | | | | | | | | | | | |
|---|---|---|---|---|---|---|---|---|---|---|---|---|---|---|---|---|---|---|---|---|---|
| | type of wire harness | | | | | | | | | | | | | | | | | | | | |
| | Prior Art W9 | | | Comparative Example W9 | | | Example W41 | | | Example W42 | | | Example W43 | | | Example W44 | | | Example W45 | | |
| number ratio of PVC-type cables: HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 3 | | | Comparative Example 3 | | | Example 11 | | | Example 12 | | | Example 13 | | | Example 14 | | | Example 15 | | |
| | experimental results | | | | | | | | | | | | | | | | | | | | |
| 150°C, 96hr, 10φ mandrel-winding | X (cable) | | | O (cable) | | | O (cable) | | | O (cable) | | | O (cable) | | | O (cable) | | | O (cable) | | |
| wrapping operation | O | | | X | | | O | | | O | | | O | | | O | | | O | | |
| appearance | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

Table 20

| (Mixed cable bundle of PVC-type electrical cables and HF-type electrical cables) x HF- type adhesive tape (containing a copper damage inhibitor) | | | | | | | | | | | | | | | | | | | | | |
|---|---|---|---|---|---|---|---|---|---|---|---|---|---|---|---|---|---|---|---|---|---|
| | type of wire harness | | | | | | | | | | | | | | | | | | | | |
| | Prior Art W10 | | | Comparative Example W10 | | | Example W46 | | | Example W47 | | | Example W48 | | | Example W49 | | | Example W50 | | |
| number ratio of PVC-type cables: HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 4 | | | Comparative Example 4 | | | Example 16 | | | Example 17 | | | Example 18 | | | Example 19 | | | Example 20 | | |
| experimental results | | | | | | | | | | | | | | | | | | | | | |
| 150°C, 96hr, 10$\phi$ mandrel-winding | X (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | |
| wrapping operation | O | | | X | | | O | | | O | | | O | | | O | | | O | | |
| appearance | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

Table 21

| (Mixed cable bundle of PVC-type electrical cables and HF-type electrical cables) x PVC-type adhesive tape (containing an anti-oxidizing agent and a copper damage inhibitor) | | | | | | | | | | | | | | | | | | | | | |
|---|---|---|---|---|---|---|---|---|---|---|---|---|---|---|---|---|---|---|---|---|---|
| | type of wire harness | | | | | | | | | | | | | | | | | | | | |
| | Prior Art W11 | | | Comparative Example W11 | | | Example W51 | | | Example W52 | | | Example W53 | | | Example W54 | | | Example W55 | | |
| number ratio of PVC-type cables: HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 5 | | | Comparative Example 5 | | | Example 21 | | | Example 22 | | | Example 23 | | | Example 24 | | | Example 25 | | |
| | experimental results | | | | | | | | | | | | | | | | | | | | |
| 150°C, 96hr, 10φ mandrel-winding | X (cable) | | | O (cable) | | | O (cable) | | | O (cable) | | | O (cable) | | | O (cable) | | | O (cable) | | |
| wrapping operation | O | | | X | | | O | | | O | | | O | | | O | | | O | | |
| appearance | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

EP 1 329 491 A2

61

Table 22

| | (Mixed cable bundle of PVC-type electrical cables and HF-type electrical cables) x PVC-type adhesive tape (containing an anti-oxidizing agent and a copper damage inhibitor) | | | | | | | | | | | | | | | | | | | | |
|---|---|---|---|---|---|---|---|---|---|---|---|---|---|---|---|---|---|---|---|---|---|
| | type of wire harness | | | | | | | | | | | | | | | | | | | | |
| | Prior Art W12 | | | Comparative Example W12 | | | Example W56 | | | Example W57 | | | Example W58 | | | Example W59 | | | Example W60 | | |
| number ratio of PVC-type cables: HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 6 | | | Comparative Example 6 | | | Example 26 | | | Example 27 | | | Example 28 | | | Example 29 | | | Example 30 | | |
| | experimental results | | | | | | | | | | | | | | | | | | | | |
| 150°C, 96hr, 10φ mandrel-winding | X (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | |
| wrapping operation | O | | | X | | | O | | | O | | | O | | | O | | | O | | |
| appearance | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

EP 1 329 491 A2

62

Table 23

| [Mixed cable bundle of PVC-type electrical cables (containing an anti-oxidizing agent) and HF-type electrical cables] x PVC-type adhesive tape (containing an anti-oxidizing agent) | | | | | | | | | | | | | | | | | | | | | |
|---|---|---|---|---|---|---|---|---|---|---|---|---|---|---|---|---|---|---|---|---|---|
| | type of wire harness | | | | | | | | | | | | | | | | | | | | |
| | Prior Art W13 | | | Comparative Example W13 | | | Example W61 | | | Example W62 | | | Example W63 | | | Example W64 | | | Example W65 | | |
| number ratio of PVC-type cables (containing an anti-oxidizing agent): HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 1 | | | Comparative Example 1 | | | Example 1 | | | Example 2 | | | Example 3 | | | Example 4 | | | Example 5 | | |
| | experimental results | | | | | | | | | | | | | | | | | | | | |
| 150°C, 96hr, 10$\phi$ mandrel-winding | X (cable) | | | O (cable) | | | O (cable) | | | O (cable) | | | O (cable) | | | O (cable) | | | O (cable) | | |
| wrapping operation | O | | | X | | | O | | | O | | | O | | | O | | | O | | |
| gluing capacity | O | | | X | | | O | | | O | | | O | | | O | | | O | | |

Table 23   (continued)

| [Mixed cable bundle of PVC-type electrical cables (containing an anti-oxidizing agent) and HF-type electrical cables] x PVC-type adhesive tape (containing an anti-oxidizing agent) | | | | | | |
|---|---|---|---|---|---|---|
| experimental results | | | | | | |
| global evaluation | X | X | O | O | O | O | O |

Table 24

| [Mixed cable bundle of PVC-type electrical cables (containing an anti-oxidizing agent) and HF-type electrical cables] x HF-type adhesive tape (containing an anti-oxidizing agent) | | | | | | | | | | | | | | | | | | | | |
|---|---|---|---|---|---|---|---|---|---|---|---|---|---|---|---|---|---|---|---|---|
| | type of wire harness | | | | | | | | | | | | | | | | | | | | |
| | Prior Art W14 | | | Comparative Example W14 | | | Example W66 | | | Example W67 | | | Example W68 | | | Example W69 | | | Example W70 | | |
| number ratio of PVC-type cables (containing an anti-oxidizing agent): HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 2 | | | Comparative Example 2 | | | Example 6 | | | Example 7 | | | Example 8 | | | Example 9 | | | Example 10 | | |
| | experimental results | | | | | | | | | | | | | | | | | | | | |
| 150°C, 96hr, 10$\phi$ mandrel-winding | X (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | |
| wrapping operation | O | | | X | | | O | | | O | | | O | | | O | | | O | | |
| gluing capacity | O | | | X | | | O | | | O | | | O | | | O | | | O | | |

Table 24   (continued)

| [Mixed cable bundle of PVC-type electrical cables (containing an anti-oxidizing agent) and HF-type electrical cables] x HF-type adhesive tape (containing an anti-oxidizing agent) | | | | | | |
|---|---|---|---|---|---|---|
| experimental results | | | | | | |
| global evaluation | X | X | O | O | O | O | O |

Table 25

| | [Mixed cable bundle of PVC-type electrical cables (containing an anti-oxidizing agent) and HF-type electrical cables] x PVC-type adhesive tape (containing a copper damage inhibitor) | | | | | | | | | | | | | | | | | | | | | |
|---|---|---|---|---|---|---|---|---|---|---|---|---|---|---|---|---|---|---|---|---|---|---|
| | type of wire harness | | | | | | | | | | | | | | | | | | | | | |
| | Prior Art W15 | | | Comparative Example W15 | | | Example W71 | | | Example W72 | | | Example W73 | | | Example W74 | | | Example W75 | | |
| number ratio of PVC-type cables (containing an anti-oxidizing agent): HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 3 | | | Comparative Example 3 | | | Example 11 | | | Example 12 | | | Example 13 | | | Example 14 | | | Example 15 | | |
| | experimental results | | | | | | | | | | | | | | | | | | | | | |
| 150°C, 96hr, 10φ mandrel-winding | X (cable) | | | O (cable) | | | O (cable) | | | O (cable) | | | O (cable) | | | O (cable) | | | O (cable) | | |
| wrapping operation | O | | | X | | | O | | | O | | | O | | | O | | | O | | |
| appearance | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

EP 1 329 491 A2

67

Table 26

| [Mixed cable bundle of PVC-type electrical cables (containing an anti-oxidizing agent) and HF-type electrical cables] x (HF-type adhesive tape (containing a copper damage inhibitor) | | | | | | | | | | | | | | | | | | | | | |
|---|---|---|---|---|---|---|---|---|---|---|---|---|---|---|---|---|---|---|---|---|---|
| type of wire harness | | | | | | | | | | | | | | | | | | | | | |
| | Prior Art W16 | | | Comparative Example W16 | | | Example W76 | | | Example W77 | | | Example W78 | | | Example W79 | | | Example W80 | | |
| number ratio of PVC-type cables (containing an anti-oxidizing agent): HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 4 | | | Comparative Example 4 | | | Example 16 | | | Example 17 | | | Example 18 | | | Example 19 | | | Example 20 | | |
| experimental results | | | | | | | | | | | | | | | | | | | | | |
| 150°C, 96hr, 10φ mandrel-winding | X (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | |
| wrapping operation | O | | | X | | | O | | | O | | | O | | | O | | | O | | |
| appearance | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

EP 1 329 491 A2

68

Table 27

| | [Mixed cable bundle of PVC-type electrical cables (containing an anti-oxidizing agent) and HF-type electrical cables] x PVC-type adhesive tape (containing an anti-oxidizing agent and a copper damage inhibitor) | | | | | | | | | | | | | | | | | | | | | |
|---|---|---|---|---|---|---|---|---|---|---|---|---|---|---|---|---|---|---|---|---|---|---|
| | type of wire harness | | | | | | | | | | | | | | | | | | | | | |
| | Prior Art W17 | | | Comparative Example W17 | | | Example W81 | | | Example W82 | | | Example W83 | | | Example W84 | | | Example W85 | | |
| number ratio of PVC-type cables (containing an anti-oxidizing agent): HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 5 | | | Comparative Example 5 | | | Example 21 | | | Example 22 | | | Example 23 | | | Example 24 | | | Example 25 | | |
| | experimental results | | | | | | | | | | | | | | | | | | | | | |
| 150°C, 96hr, 10φ mandrel-winding | X (cable) | | | O (cable) | | | O (cable) | | | O (cable) | | | O (cable) | | | O (cable) | | | O (cable) | | |
| wrapping operation | O | | | X | | | O | | | O | | | O | | | O | | | O | | |
| appearance | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

EP 1 329 491 A2

Table 28

| | type of wire harness | | | | | | | | | | | | | | | | | | | | |
|---|---|---|---|---|---|---|---|---|---|---|---|---|---|---|---|---|---|---|---|---|---|
| **[Mixed cable bundle of PVC-type electrical cables (containing an anti-oxidizing agent) and HF-type electrical cables] x HF-type adhesive tape (containing an anti- oxidizing agent and a copper damage inhibitor)** | | | | | | | | | | | | | | | | | | | | | |
| | Prior Art W18 | | | Comparative Example W18 | | | Example W86 | | | Example W87 | | | Example W88 | | | Example W89 | | | Example W90 | | |
| number ratio of PVC-type cables (containing an anti-oxidizing agent): HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 6 | | | Comparative Example 6 | | | Example 26 | | | Example 27 | | | Example 28 | | | Example 29 | | | Example 30 | | |
| experimental results | | | | | | | | | | | | | | | | | | | | | |
| 150°C, 96hr, 10ϕ mandrel-winding | X (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | |
| wrapping operation | O | | | X | | | O | | | O | | | O | | | O | | | O | | |
| appearance | O | | | X | | | O | | | O | | | O | | | O | | | O | | |
| gluing capacity | O | | | X | | | O | | | O | | | O | | | O | | | O | | |
| global evaluation | X | | | X | | | O | | | O | | | O | | | O | | | O | | |

EP 1 329 491 A2

| Tape base thickness : 0.11mm: Adhesive thickness : 0.02mm | | | | | | | | | |
|---|---|---|---|---|---|---|---|---|---|
| **Composition of PVC-type adhesive tapes (containing an anti-oxidizing agent)** | | | | | | | | | |
| composition | Prior Art 1 | C.E. 1 | C.E. 2 | E. 1 | E. 2 | E. 3 | E. 4 | E. 5 | E. 6 |
| **tape base** | | | | | | | | | |
| PVC (P: 1300) | 100 | 100 | 100 | 100 | 100 | 100 | 100 | 100 | 100 |
| DOP | 60 | 60 | 60 | 60 | 60 | 60 | 60 | 60 | 60 |
| calcium carbonate | 20 | 20 | 20 | 20 | 20 | 20 | 20 | 20 | 20 |
| stabilizer | 5 | 5 | 5 | 5 | 5 | 5 | 5 | 5 | 5 |
| anti-oxidizing agent (AA) | - | 5 | 5 | 5 | 5 | 5 | 5 | 5 | 5 |
| AA/100 wt parts of base org. mat. portion | (-) | (3.1) | (3.1) | (3.1) | (3.1) | (3.1) | (3.1) | (3.1) | (3.1) |
| carbon black | - | 160 | - | 1 | 10 | 150 | - | - | - |
| silica | - | - | 160 | - | - | - | 1 | 10 | 150 |
| total (parts by weight) | 185 | 350 | 350 | 191 | 200 | 340 | 191 | 200 | 340 |
| **adhesive** | | | | | | | | | |
| SBR | 70 | 70 | 70 | 70 | 70 | 70 | 70 | 70 | 70 |
| natural rubber | 30 | 30 | 30 | 30 | 30 | 30 | 30 | 30 | 30 |
| zinc white # 3 | 20 | 20 | 20 | 20 | 20 | 20 | 20 | 20 | 20 |
| rosin-type resin | 80 | - | - | - | - | - | - | - | - |
| hydrogenated aromatic resin | - | 80 | 80 | 80 | 80 | 80 | 80 | 80 | 80 |
| anti-oxidizing agent (AA) | - | 6 | 6 | 6 | 6 | 6 | 6 | 6 | 6 |
| AA/100 wt parts of base org. mat. portion | (-) | (3.3) | (3.3) | (3.3) | (3.3) | (3.3) | (3.3) | (3.3) | (3.3) |
| carbon black | - | 160 | - | 1 | 10 | 150 | - | - | - |
| silica | - | - | 160 | - | - | - | 1 | 10 | 150 |
| total (parts by weight) | 200 | 366 | 366 | 207 | 216 | 356 | 207 | 216 | 356 |
| **[Note]:** in Tables 29 to 58, Comparative Examples and Examples are indicated respectively by "C.E." and "E.". | | | | | | | | | |

| Tape base thickness : 0.11 mm: Adhesive thickness :0.02 mm | | | | | | | | | |
|---|---|---|---|---|---|---|---|---|---|
| **Composition of HF-type adhesive tapes (containing an anti-oxidizing agent)** | | | | | | | | | |
| composition | Prior Art 2 | C. E. 3 | C. E. 4 | E.7 | E. 8 | E. 9 | E. 10 | E. 11 | E. 12 |
| **tape base** | | | | | | | | | |
| polyolefin | 100 | 100 | 100 | 100 | 100 | 100 | 100 | 100 | 100 |
| bromine-type flame retardant | 3 | 3 | 3 | 3 | 3 | 3 | 3 | 3 | 3 |
| antimony trioxide | 1.5 | 1.5 | 1.5 | 1.5 | 1.5 | 1.5 | 1.5 | 1.5 | 1.5 |
| anti-oxidizing agent (AA) | - | 3.5 | 3.5 | 3.5 | 3.5 | 3.5 | 3.5 | 3.5 | 3.5 |
| AA/100 wt parts of base org. mat. portion | (-) | (3.4) | (3.4) | (3.4) | (3.4) | (3.4) | (3.4) | (3.4) | (3.4) |
| carbon black | - | 160 | - | 1 | 10 | 150 | - | - | - |
| silica | - | - | 160 | - | - | - | 1 | 10 | 150 |

(continued)

| Composition of HF-type adhesive tapes (containing an anti-oxidizing agent) | | | | | | | | | |
|---|---|---|---|---|---|---|---|---|---|
| composition | Prior Art 2 | C. E. 3 | C. E. 4 | E.7 | E. 8 | E. 9 | E. 10 | E. 11 | E. 12 |
| **tape base** | | | | | | | | | |
| total (parts by weight) | 104.5 | 268 | 268 | 109 | 118 | 258 | 109 | 118 | 258 |
| **adhesive** | | | | | | | | | |
| SBR | 70 | 70 | 70 | 70 | 70 | 70 | 70 | 70 | 70 |
| natural rubber | 30 | 30 | 30 | 30 | 30 | 30 | 30 | 30 | 30 |
| zinc white #3 | 20 | 20 | 20 | 20 | 20 | 20 | 20 | 20 | 20 |
| rosin-type resin | 80 | - | - | - | - | - | - | - | - |
| hydrogenated aromatic resin | - | 80 | 80 | 80 | 80 | 80 | 80 | 80 | 80 |
| anti-oxidizing agent (AA) | - | 6 | 6 | 6 | 6 | 6 | 6 | 6 | 6 |
| AA/100 wt parts of base org. mat. portion | (-) | (3.3) | (3.3) | (3.3) | (3.3) | (3.3) | (3.3) | (3.3) | (3.3) |
| carbon black | - | 160 | - | 1 | 10 | 150 | - | - | - |
| silica | - | - | 160 | - | - | - | 1 | 10 | 150 |
| total (parts by weight) | 200 | 366 | 366 | 207 | 216 | 356 | 207 | 216 | 356 |

| Tape base thickness : 0.11 mm: Adhesive thickness :0.02 mm | | | | | | | | | |
|---|---|---|---|---|---|---|---|---|---|
| Composition of PVC-type adhesive tapes (containing a copper damage inhibitor) | | | | | | | | | |
| composition | Prior Art 3 | C. E.5 | C. E. 6 | E.13 | E. 14 | E. 15 | E. 16 | E. 17 | E. 18 |
| **tape base** | | | | | | | | | |
| PVC (P: 1300) | 100 | 100 | 100 | 100 | 100 | 100 | 100 | 100 | 100 |
| DOP | 60 | 60 | 60 | 60 | 60 | 60 | 60 | 60 | 60 |
| calcium carbonate | 20 | 20 | 20 | 20 | 20 | 20 | 20 | 20 | 20 |
| stabilizer | 5 | 5 | 5 | 5 | 5 | 5 | 5 | 5 | 5 |
| copper damage inhibitor | - | 1.6 | 1.6 | 1.6 | 1.6 | 1.6 | 1.6 | 1.6 | 1.6 |
| carbon black | - | 160 | - | 1 | 10 | 150 | - | - | - |
| silica | - | - | 160 | - | - | - | 1 | 10 | 150 |
| total (parts by weight) | 185 | 346.6 | 346.6 | 187.6 | 196.6 | 336.6 | 187.6 | 196.6 | 336.6 |
| **adhesive** | | | | | | | | | |
| SBR | 70 | 70 | 70 | 70 | 70 | 70 | 70 | 70 | 70 |
| natural rubber | 30 | 30 | 30 | 30 | 30 | 30 | 30 | 30 | 30 |
| zinc white # 3 | 20 | 20 | 20 | 20 | 20 | 20 | 20 | 20 | 20 |
| rosin-type resin | 80 | - | - | - | - | - | - | - | - |
| hydrogenated aromatic resin | - | 80 | 80 | 80 | 80 | 80 | 80 | 80 | 80 |
| copper damage inhibitor | - | 1.8 | 1.8 | 1.8 | 1.8 | 1.8 | 1.8 | 1.8 | 1.8 |
| carbon black | - | 160 | - | 1 | 10 | 150 | - | - | - |
| silica | - | - | 160 | - | - | - | 1 | 10 | 150 |

(continued)

| Composition of PVC-type adhesive tapes (containing a copper damage inhibitor) | | | | | | | | | |
|---|---|---|---|---|---|---|---|---|---|
| composition | Prior Art 3 | C. E.5 | C. E. 6 | E.13 | E. 14 | E. 15 | E. 16 | E. 17 | E. 18 |
| **adhesive** | | | | | | | | | |
| total (parts by weight) | 200 | 361.8 | 361.8 | 202.8 | 211.8 | 351.8 | 202.8 | 211.8 | 351.8 |

| Tape base thickness : 0.11 mm: Adhesive thickness :0.02 mm | | | | | | | | | |
|---|---|---|---|---|---|---|---|---|---|
| Composition of HF-type adhesive tapes (containing a copper damage inhibitor) | | | | | | | | | |
| composition | Prior Art 4 | C. E. 7 | C. E. 8 | E.19 | E. 20 | E. 21 | E. 22 | E. 23 | E. 24 |
| **tape base** | | | | | | | | | |
| polyolefin | 100 | 100 | 100 | 100 | 100 | 100 | 100 | 100 | 100 |
| bromine-type flame retardant | 3 | 3 | 3 | 3 | 3 | 3 | 3 | 3 | 3 |
| antimony trioxide | 1.5 | 1.5 | 1.5 | 1.5 | 1.5 | 1.5 | 1.5 | 1.5 | 1.5 |
| copper damage inhibitor | - | 1 | 1 | 1 | 1 | 1 | 1 | 1 | 1 |
| carbon black | - | 160 | - | 1 | 10 | 150 | - | - | - |
| silica | - | - | 160 | - | - | - | 1 | 10 | 150 |
| total (parts by weight) | 104.5 | 265.5 | 265.5 | 106.5 | 115.5 | 255.5 | 106.5 | 115.5 | 255.5 |
| **adhesive** | | | | | | | | | |
| SBR | 70 | 70 | 70 | 70 | 70 | 70 | 70 | 70 | 70 |
| natural rubber | 30 | 30 | 30 | 30 | 30 | 30 | 30 | 30 | 30 |
| zinc white # 3 | 20 | 20 | 20 | 20 | 20 | 20 | 20 | 20 | 20 |
| rosin-type resin | 80 | - | - | - | - | - | - | - | - |
| hydrogenated aromatic resin | - | 80 | 80 | 80 | 80 | 80 | 80 | 80 | 80 |
| copper damage inhibitor | - | 1.8 | 1.8 | 1.8 | 1.8 | 1.8 | 1.8 | 1.8 | 1.8 |
| carbon black | - | 160 | - | 1 | 10 | 150 | - | - | - |
| silica | - | - | 160 | - | - | - | 1 | 10 | 150 |
| total (parts by weight) | 200 | 361 | 361 | 202.8 | 211.8 | 351.8 | 202.8 | 211.8 | 351.8 |

| Tape base thickness : 0.11mm: Adhesive thickness : 0.02mm | | | | | | | | | |
|---|---|---|---|---|---|---|---|---|---|
| Composition of PVC-type adhesive tapes (containing an anti-oxidizing agent and a copper damage inhibitor) | | | | | | | | | |
| composition | Prior Art 5 | C. E. 9 | C. E. 10 | E.25 | E. 26 | E. 27 | E. 28 | E. 29 | E. 30 |
| **tape base** | | | | | | | | | |
| PVC (P: 1300) | 100 | 100 | 100 | 100 | 100 | 100 | 100 | 100 | 100 |
| DOP | 60 | 60 | 60 | 60 | 60 | 60 | 60 | 60 | 60 |
| calcium carbonate | 20 | 20 | 20 | 20 | 20 | 20 | 20 | 20 | 20 |
| stabilizer | 5 | 5 | 5 | 5 | 5 | 5 | 5 | 5 | 5 |
| anti-oxidizing agent (AA) | - | 5 | 5 | 5 | 5 | 5 | 5 | 5 | 5 |

(continued)

| Composition of PVC-type adhesive tapes (containing an anti-oxidizing agent and a copper damage inhibitor) | | | | | | | | | |
|---|---|---|---|---|---|---|---|---|---|
| composition | Prior Art 5 | C. E. 9 | C. E. 10 | E.25 | E. 26 | E. 27 | E. 28 | E. 29 | E. 30 |
| **tape base** | | | | | | | | | |
| AA/100 wt parts of base org. mat. portion | (-) | (3.1) | (3.1) | (3.1) | (3.1) | (3.1) | (3.1) | (3.1) | (3.1) |
| copper damage inhibitor | - | 1.6 | 1.6 | 1.6 | 1.6 | 1.6 | 1.6 | 1.6 | 1.6 |
| carbon black | - | 160 | - | 1 | 10 | 150 | - | - | - |
| silica | - | - | 160 | - | - | - | 1 | 10 | 150 |
| total (parts by weight) | 185 | 351.6 | 351.6 | 192.6 | 201.6 | 341.6 | 192.6 | 201.6 | 341.6 |
| **adhesive** | | | | | | | | | |
| SBR | 70 | 70 | 70 | 70 | 70 | 70 | 70 | 70 | 70 |
| natural rubber | 30 | 30 | 30 | 30 | 30 | 30 | 30 | 30 | 30 |
| zinc white # 3 | 20 | 20 | 20 | 20 | 20 | 20 | 20 | 20 | 20 |
| rosin-type resin | 80 | - | - | - | - | - | - | - | - |
| hydrogenated aromatic resin | - | 80 | 80 | 80 | 80 | 80 | 80 | 80 | 80 |
| anti-oxidizing agent (AA) | - | 6 | 6 | 6 | 6 | 6 | 6 | 6 | 6 |
| AA/100 wt parts of base org. mat. portion | (-) | (3.3) | (3.3) | (3.3) | (3.3) | (3.3) | (3.3) | (3.3) | (3.3) |
| copper damage inhibitor | - | 1.8 | 1.8 | 1.8 | 1.8 | 1.8 | 1.8 | 1.8 | 1.8 |
| carbon black | - | 160 | - | 1 | 10 | 150 | - | - | - |
| silica | - | - | 160 | - | - | - | 1 | 10 | 150 |
| total (parts by weight) | 200 | 367.8 | 367.8 | 208.8 | 217.8 | 357.8 | 208.8 | 217.8 | 357.8 |

| Tape base thickness : 0.11mm: Adhesive thickness : 0.02mm | | | | | | | | | |
|---|---|---|---|---|---|---|---|---|---|
| Composition of HF-type adhesive tapes (containing an anti-oxidizing agent and a copper damage inhibitor) | | | | | | | | | |
| composition | Prior Art 6 | C. E. 11 | C. E. 12 | E.31 | E. 32 | E. 33 | E. 34 | E. 35 | E. 36 |
| **tape base** | | | | | | | | | |
| polyolefin | 100 | 100 | 100 | 100 | 100 | 100 | 100 | 100 | 100 |
| bromine-type flame retardant | 3 | 3 | 3 | 3 | 3 | 3 | 3 | 3 | 3 |
| antimony trioxide | 1.5 | 1.5 | 1.5 | 1.5 | 1.5 | 1.5 | 1.5 | 1.5 | 1.5 |
| anti-oxidizing agent (AA) | - | 3.5 | 3.5 | 3.5 | 3.5 | 3.5 | 3.5 | 3.5 | 3.5 |
| AA/100 wt parts of base org. mat. portion | (-) | (3.4) | (3.4) | (3.4) | (3.4) | (3.4) | (3.4) | (3.4) | (3.4) |
| copper damage inhibitor | - | 1 | 1 | 1 | 1 | 1 | 1 | 1 | 1 |
| carbon black | - | 160 | - | 1 | 10 | 150 | - | - | - |
| silica | - | - | 160 | - | - | - | 1 | 10 | 150 |

(continued)

| Composition of HF-type adhesive tapes (containing an anti-oxidizing agent and a copper damage inhibitor) | | | | | | | | | |
|---|---|---|---|---|---|---|---|---|---|
| composition | Prior Art 6 | C. E. 11 | C. E. 12 | E.31 | E. 32 | E. 33 | E. 34 | E. 35 | E. 36 |
| **tape base** | | | | | | | | | |
| total (parts by weight) | 104.5 | 269 | 269 | 110 | 119 | 259 | 110 | 119 | 259 |
| **adhesive** | | | | | | | | | |
| SBR | 70 | 70 | 70 | 70 | 70 | 70 | 70 | 70 | 70 |
| natural rubber | 30 | 30 | 30 | 30 | 30 | 30 | 30 | 30 | 30 |
| zinc white # 3 | 20 | 20 | 20 | 20 | 20 | 20 | 20 | 20 | 20 |
| rosin-type resin | 80 | - | - | - | - | - | - | - | - |
| hydrogenated aromatic resin | - | 80 | 80 | 80 | 80 | 80 | 80 | 80 | 80 |
| anti-oxidizing agent (AA) | - | 6 | 6 | 6 | 6 | 6 | 6 | 6 | 6 |
| AA/100 wt parts of base org. mat. portion | (-) | (3.3) | (3.3) | (3.3) | (3.3) | (3.3) | (3.3) | (3.3) | (3.3) |
| copper damage inhibitor | - | 1.8 | 1.8 | 1.8 | 1.8 | 1.8 | 1.8 | 1.8 | 1.8 |
| carbon black | - | 160 | - | 1 | 10 | 150 | - | - | - |
| silica | - | - | 160 | - | - | - | 1 | 10 | 150 |
| total (parts by weight) | 200 | 367.8 | 367.8 | 208.8 | 217.8 | 357.8 | 208.8 | 217.8 | 357.8 |

Table 35

| HF-type plain cable bundle x PVC-type adhesive tape (containing an anti-oxidizing agent) | | | | | | | | | |
|---|---|---|---|---|---|---|---|---|---|
| | type of wire harness | | | | | | | | |
| | Prior Art W1 | C. E. W1 | C.E. W2 | E. W1 | E. W2 | E. W3 | E. W4 | E. W5 | E. W6 |
| | HF-type plain cable bundle (30 electrical cables) | | | | | | | | |
| type of adhesive tape | Prior Art 1 | C. E. 1 | C.E. 2 | E. 1 | E. 2 | E. 3 | E. 4 | E. 5 | E. 6 |
| | experimental results | | | | | | | | |
| 150°C, 96hr, 10φ mandrel-winding | X (cable) | O (cable) | O (cable) | O (cable) | O (cable) | O (cable) | O (cable) | O (cable) | O (cable) |
| wrapping operation | O | X | X | O | O | O | O | O | O |
| gluing capacity | O | X | X | O | O | O | O | O | O |
| global evaluation | X | X | X | O | O | O | O | O | O |

Table 36

| **HF-type plain cable bundle x HF-type adhesive tape (containing an anti-oxidizing agent)** | | | | | | | | | |
|---|---|---|---|---|---|---|---|---|---|
| | type of wire harness | | | | | | | | |
| | Prior Art W21 | C. E. W3 | C.E. W4 | E. W7 | E. W8 | E. W9 | E. W10 | E. W11 | E. W12 |
| HF-type plain cable bundle (30 electrical cables) | | | | | | | | | |
| type of adhesive tape | Prior Art 2 | C. E. 3 | CE. 4 | E. 7 | E. 8 | E. 9 | E. 10 | E. 11 | E. 12 |
| experimental results | | | | | | | | | |
| 150°C, 96hr, 10$\phi$ mandrel-winding | X (cable) | O (cable) | O (cable) | O (cabl e) | O (cable) | O (cable) | O (cable) | O (cable) | O (cable) |
| | X (tape) | O (tape) | O (tape) | O (tape) | O (tape) | O (tape) | O (tape) | O (tape) | O (tape) |
| wrapping operation | O | X | X | O | O | O | O | O | O |
| gluing capacity | O | X | X | O | O | O | O | O | O |
| global evaluation | X | X | X | O | O | O | O | O | O |

Table 37

| HF-type plain cable bundle x PVC-type adhesive tape (containing a copper damage inhibitor) | | | | | | | | | |
|---|---|---|---|---|---|---|---|---|---|
| | type of wire harness | | | | | | | | |
| | Prior Art W3 | C.E. W5 | C.E. W6 | E. W13 | E. W14 | E. W15 | E. W16 | E. W17 | E. W18 |
| HF-type plain cable bundle (30 electrical cables) | | | | | | | | | |
| type of adhesive tape | Prior Art 3 | C. E. 5 | C.E. 6 | E. 13 | E. 14 | E. 15 | E. 16 | E. 17 | E. 18 |
| experimental results | | | | | | | | | |
| 150°C, 96hr, 10$\phi$ mandrel-winding | X (cable) | O (cable) | O (cable) | O (cable) | O (cable) | O (cable) | O (cable) | O (cable) | O (cable) |
| wrapping operation | O | X | X | O | O | O | O | O | O |
| appearance | O | O | O | O | O | O | O | O | O |
| gluing capacity | O | X | X | O | O | O | O | O | O |
| global evaluation | X | X | X | O | O | O | O | O | O |

Table 38

| HF-type plain cable bundle x HF-type adhesive tape (containing a copper damage inhibitor) | | | | | | | | | |
|---|---|---|---|---|---|---|---|---|---|
| | type of wire harness | | | | | | | | |
| | Prior Art W4 | C. E. W7 | C.E. W8 | E. W19 | E. W20 | E. W21 | E. W22 | E. W23 | E. W24 |
| | HF-type plain cable bundle (30 electrical cable) | | | | | | | | |
| type of adhesive tape | Prior Art 4 | C. E. 7 | C.E. 8 | E. 19 | E. 20 | E. 21 | E. 22 | E. 23 | E. 24 |
| | experimental results | | | | | | | | |
| 150°C, 96hr, 10$\phi$ mandrel-winding | X (cable) | O (cable) | O (cable) | O (cable) | O (cable) | O (cable) | O (cable) | O (cable) | O (cable) |
| | X (tape) | O (tape) | O (tape) | O (tape) | O (tape) | O (tape) | O (tape) | O (tape) | O (tape) |
| wrapping operation | O | X | X | O | O | O | O | O | O |
| appearance | O | O | O | O | O | O | O | O | O |
| gluing capacity | O | X | X | O | O | O | O | O | O |
| global evaluation | X | X | X | O | O | O | O | O | O |

Table 39

| HF-type plain cable bundle x PVC-type adhesive tape (containing an anti-oxidizing agent and a copper damage inhibitor) | | | | | | | | | |
|---|---|---|---|---|---|---|---|---|---|
| | type of wire harness | | | | | | | | |
| | Prior Art W5 | C. E. W9 | C.E. W10 | E. W25 | E. W26 | E. W27 | E. W28 | E. W29 | E. W30 |
| | HF-type plain cable bundle (30 electrical cables) | | | | | | | | |
| type of adhesive tape | Prior Art 5 | C. E. 9 | C.E. 10 | E. 25 | E. 26 | E. 27 | E. 28 | E. 29 | E. 30 |
| | experimental results | | | | | | | | |
| 150°C, 96hr, 10$\phi$ mandrel-winding | X (cable) | O (cable) | O (cable) | O (cable) | O (cable) | O (cable) | O (cable) | O (cable) | O (cable) |
| wrapping operation | O | X | X | O | O | O | O | O | O |
| appearance | O | O | O | O | O | O | O | O | O |
| gluing capacity | O | X | X | O | O | O | O | O | O |
| global evaluation | X | X | X | O | O | O | O | O | O |

Table 40

| HF-type plain cable bundle x HF-type adhesive tape (containing an anti-oxidizing agent and a copper damage inhibitor) | | | | | | | | | |
|---|---|---|---|---|---|---|---|---|---|
| | type of wire harness | | | | | | | | |
| | Prior Art W6 | C.E. W11 | C.E. W12 | E. W31 | E. W32 | E. W33 | E. W34 | E. W35 | E. W36 |
| | HF-type plain cable bundle (30 electrical cables) | | | | | | | | |
| type of adhesive tape | Prior Art 6 | C. E. 11 | C.E. 12 | E. 31 | E. 32 | E. 33 | E. 34 | E. 35 | E. 36 |
| | experimental results | | | | | | | | |
| 150°C, 96hr, 10φ mandrel-winding | X (cable) | O (cable) | O (cable) | O (cable) | O (cable) | O (cable) | O (cable) | O (cable) | O (cable) |
| | X (tape) | O (tape) | O (tape) | O (tape) | O (tape) | O (tape) | O (tape) | O (tape) | O (tape) |
| wrapping operation | O | X | X | O | O | O | O | O | O |
| appearance | O | O | O | O | O | O | O | O | O |
| gluing capacity | O | X | X | O | O | O | O | O | O |
| global evaluation | X | X | X | O | O | O | O | O | O |

## Table 41

## (Mixed cable bundle of PVC-type electrical cables and HF-type electrical cables ) x PVC-type adhesive tape (containing an anti-oxidizing agent)

| | | Prior Art W7 | | | C. E. W13 | | | C. E.W14 | | | E. W37 | | | E. W38 | | | E. W39 | | | E. W40 | | | E. W41 | | | E. W42 | | |
|---|---|---|---|---|---|---|---|---|---|---|---|---|---|---|---|---|---|---|---|---|---|---|---|---|---|---|---|---|---|
| number ratio of PVC-type cables:HF-type cables | | 29 .. 1 | 20 . 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | | Prior Art 1 | | | C. E. 1 | | | C.E. 2 | | | E. 1 | | | E. 2 | | | E. 3 | | | E. 4 | | | E. 5 | | | E. 6 | | |
| 150°C, 96hr, 10φ mandrel-winding | | X (cable) | | | O (cable) | | | O (cable) | | | O (cable) | | | O (cable) | | | O (cable) | | | O (cable) | | | O (cable) | | | O (cable) | | |
| wrapping operation | | O | | | X | | | X | | | O | | | O | | | O | | | O | | | O | | | O | | |
| gluing capacity | | O | | | X | | | X | | | O | | | O | | | O | | | O | | | O | | | O | | |
| global evaluation | | X | | | X | | | X | | | O | | | O | | | O | | | O | | | O | | | O | | |

## Table 42
### (Mixed cable bundle of PVC-type electrical cables and HF-type electrical cables ) x HF-type adhesive tape (containing an anti-oxidizing agent)

| | Prior Art W8 | | | C. E. W15 | | | C. E.W16 | | | E. W43 | | | E. W44 | | | E. W45 | | | E. W46 | | | E. W47 | | | E. W48 | | |
|---|---|---|---|---|---|---|---|---|---|---|---|---|---|---|---|---|---|---|---|---|---|---|---|---|---|---|
| Number ratio of PVC-type cable:HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 2 | | | C. E. 3 | | | C.E. 4 | | | E. 7 | | | E. 8 | | | E. 9 | | | E. 10 | | | E. 11 | | | E. 12 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | | O (tape) | | | O (tape) | | |
| wrapping operation | O | | | X | | | X | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

## Table 43
## (Mixed cable bundle of PVC-type electrical cables and HF-type electrical cables ) x PVC-type adhesive tape (containing a copper damage inhibitor)

| | Prior Art W9 | | | C. E. W17 | | | C. E.W18 | | | E. W49 | | | E. W50 | | | E. W51 | | | E. W52 | | | E. W53 | | | E. W54 | | |
|---|---|---|---|---|---|---|---|---|---|---|---|---|---|---|---|---|---|---|---|---|---|---|---|---|---|---|---|
| Number ratio of PVC-type cables:HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 3 | | | C. E. 5 | | | C.E. 6 | | | E. 13 | | | E. 14 | | | E. 15 | | | E. 16 | | | E. 17 | | | E. 18 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| wrapping operation | O | | | X | | | X | | | O | | | O | | | O | | | O | | | O | | | O | | |
| appearance | O | | | O | | | O | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

## Table 44

**(Mixed cable bundle of PVC-type electrical cables and HF-type electrical cables ) x HF-type adhesive tape (containing a copper damage inhibitor)**

| | Prior Art W10 | | | C. E. W19 | | | C. E.W20 | | | E. W55 | | | E. W56 | | | E. W57 | | | E. W58 | | | E. W59 | | | E. W60 | | |
|---|---|---|---|---|---|---|---|---|---|---|---|---|---|---|---|---|---|---|---|---|---|---|---|---|---|---|---|
| Number ratio of PVC-type cables:HF-type cables | 29..1 | 20..10 | 1..29 | 29..1 | 20..10 | 1..29 | 29..1 | 20..10 | 1..29 | 29..1 | 20..10 | 1..29 | 29..1 | 20..10 | 1..29 | 29..1 | 20..10 | 1..29 | 29..1 | 20..10 | 1..29 | 29..1 | 20..10 | 1..29 | 29..1 | 20..10 | 1..29 |
| type of adhesive tape | Prior Art 4 | | | C. E. 7 | | | C.E. 8 | | | E. 19 | | | E. 20 | | | E. 21 | | | E. 22 | | | E. 23 | | | E. 24 | | |
| 150°C, 96hr, 10$\phi$ mandrel-winding | X (cable) | | | O (cable) | | | O (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | | O (tape) | | | O (tape) | | |
| wrapping operation | O | | | X | | | X | | | O | | | O | | | O | | | O | | | O | | | O | | |
| appearance | O | | | O | | | O | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

## Table 45

### (Mixed cable bundle of PVC-type electrical cables and HF-type electrical cables ) x PVC-type adhesive tape (containing an anti-oxidizing agent and a copper damage inhibitor)

| | Prior Art W11 | | | C. E. W21 | | | C. E.W22 | | | E. W61 | | | E. W62 | | | E. W63 | | | E. W64 | | | E. W65 | | | E. W66 | | |
|---|---|---|---|---|---|---|---|---|---|---|---|---|---|---|---|---|---|---|---|---|---|---|---|---|---|---|---|
| number ratio of PVC-type cables:HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 5 | | | C. E. 9 | | | C.E. 10 | | | E. 25 | | | E. 26 | | | E. 27 | | | E. 28 | | | E. 29 | | | E. 30 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| wrapping operation | O | | | X | | | X | | | O | | | O | | | O | | | O | | | O | | | O | | |
| appearance | O | | | O | | | O | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

EP 1 329 491 A2

## Table 46
(Mixed cable bundle of PVC-type electrical cables and HF-type electrical cables ) x HF-type adhesive tape (containing an anti-oxidizing agent and a copper damage inhibitor)

| | Prior Art W12 | | | C. E. W23 | | | C. E.W24 | | | E. W67 | | | E. W68 | | | E. W69 | | | E. W70 | | | E. W71 | | | E. W72 | | |
|---|---|---|---|---|---|---|---|---|---|---|---|---|---|---|---|---|---|---|---|---|---|---|---|---|---|---|---|
| number ratio of PVC-type cables:HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 6 | | | C. E. 11 | | | C.E. 12 | | | E. 31 | | | E. 32 | | | E. 33 | | | E. 34 | | | E. 35 | | | E. 36 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | | O (tape) | | | O (tape) | | |
| wrapping operation | O | | | X | | | X | | | O | | | O | | | O | | | O | | | O | | | O | | |
| appearance | O | | | O | | | O | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

EP 1 329 491 A2

84

## Table 47

**[Mixed cable bundle of PVC-type electrical cables (containing an anti-oxidizing agent) and HF-type electrical cables] x PVC-type adhesive tape (containing an anti-oxidizing agent)**

| | Prior Art W13 | | | C. E. W25 | | | C. E.W26 | | | E. W73 | | | E. W74 | | | E. W75 | | | E. W76 | | | E. W77 | | | E. W78 | | |
|---|---|---|---|---|---|---|---|---|---|---|---|---|---|---|---|---|---|---|---|---|---|---|---|---|---|---|---|
| number ratio of PVC-type cables (containing an anti-oxidizing agent):HF-type cables | 29 ·· 1 | 20 ·· 10 | 1 ·· 29 | 29 ·· 1 | 20 ·· 10 | 1 ·· 29 | 29 ·· 1 | 20 ·· 10 | 1 ·· 29 | 29 ·· 1 | 20 ·· 10 | 1 ·· 29 | 29 ·· 1 | 20 ·· 10 | 1 ·· 29 | 29 ·· 1 | 20 ·· 10 | 1 ·· 29 | 29 ·· 1 | 20 ·· 10 | 1 ·· 29 | 29 ·· 1 | 20 ·· 10 | 1 ·· 29 | 29 ·· 1 | 20 ·· 10 | 1 ·· 29 |
| type of adhesive tape | Prior Art 1 | | | C. E. 1 | | | C.E. 2 | | | E. 1 | | | E. 2 | | | E. 3 | | | E. 4 | | | E. 5 | | | E. 6 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| wrapping operation | O | | | X | | | X | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

## Table 48
### [Mixed cable bundle of PVC-type electrical cables (containing an anti-oxidizing agent) and HF-type electrical cables] x HF-type adhesive tape (containing an anti-oxidizing agent)

| | Prior Art W14 | | | C. E. W27 | | | C. E.W28 | | | E. W79 | | | E. W80 | | | E. W81 | | | E. W82 | | | E. W83 | | | E. W84 | | |
|---|---|---|---|---|---|---|---|---|---|---|---|---|---|---|---|---|---|---|---|---|---|---|---|---|---|---|---|
| number ratio of PVC-type cables (containing an anti-oxidizing agent):HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 2 | | | C. E. 3 | | | C.E. 4 | | | E. 7 | | | E. 8 | | | E. 9 | | | E. 10 | | | E. 11 | | | E. 12 | | |
| 150°C, 96hr, 10ϕ mandrel-winding | X (cable) | | | O (cable) | | | O (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | | O (tape) | | | O (tape) | | |
| wrapping operation | O | | | X | | | X | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

## Table 49

**[Mixed cable bundle of PVC-type electrical cables (containing an anti-oxidizing agent) and HF-type electrical cables] x PVC-type adhesive tape (containing a copper damage inhibitor)**

| | Prior Art W15 | | | C. E. W29 | | | C. E.W30 | | | E. W85 | | | E. W86 | | | E. W87 | | | E. W88 | | | E. W89 | | | E. W90 | | |
|---|---|---|---|---|---|---|---|---|---|---|---|---|---|---|---|---|---|---|---|---|---|---|---|---|---|---|---|
| number ratio of PVC-type cables (containing an anti-oxidizing agent): HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| adhesive tape type | Prior Art 3 | | | C. E. 5 | | | C.E. 6 | | | E. 13 | | | E. 14 | | | E. 15 | | | E. 16 | | | E. 17 | | | E. 18 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| wrapping operation | O | | | X | | | X | | | O | | | O | | | O | | | O | | | O | | | O | | |
| appearance | O | | | O | | | O | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

87

## Table 50

### [Mixed cable bundle of PVC-type electrical cables (containing an anti-oxidizing agent) and HF-type electrical cables] x HF-type adhesive tape (containing a copper damage inhibitor)

| | Prior Art W16 | | | C. E. W31 | | | C. E.W32 | | | E. W91 | | | E. W92 | | | E. W93 | | | E. W94 | | | E. W95 | | | E. W96 | | |
|---|---|---|---|---|---|---|---|---|---|---|---|---|---|---|---|---|---|---|---|---|---|---|---|---|---|---|---|
| number ratio of PVC-type cables (containing an anti-oxidizing agent):HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 4 | | | C. E. 7 | | | C.E. 8 | | | E. 19 | | | E. 20 | | | E. 21 | | | E. 22 | | | E. 23 | | | E. 24 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | | O (tape) | | | O (tape) | | |
| wrapping operation | O | | | X | | | X | | | O | | | O | | | O | | | O | | | O | | | O | | |
| appearance | O | | | O | | | O | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

## Table 51

**[Mixed cable bundle of PVC-type electrical cables (containing an anti-oxidizing agent) and HF-type electrical cables] x PVC-type adhesive tape (containing an anti-oxidizing agent and a copper damage inhibitor)**

| | Prior Art W17 | | | C. E. W33 | | | C. E.W34 | | | E. W97 | | | E. W98 | | | E. W99 | | | E. W100 | | | E. W101 | | | E. W102 | | |
|---|---|---|---|---|---|---|---|---|---|---|---|---|---|---|---|---|---|---|---|---|---|---|---|---|---|---|---|
| number ratio of PVC-type cables (containing an anti-oxidizing agent):HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 5 | | | C. E. 9 | | | C.E. 10 | | | E. 25 | | | E. 26 | | | E. 27 | | | E. 28 | | | E. 29 | | | E. 30 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| wrapping operation | O | | | X | | | X | | | O | | | O | | | O | | | O | | | O | | | O | | |
| appearance | O | | | O | | | O | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

EP 1 329 491 A2

## Table 52

**[Mixed cable bundle of PVC-type electrical cables (containing an anti-oxidizing agent) and HF-type electrical cables] x HF-type adhesive tape (containing an anti-oxidizing agent and a copper damage inhibitor)**

| | Prior Art W18 | | | C. E. W35 | | | C. E.W36 | | | E. W103 | | | E. W104 | | | E. W105 | | | E. W106 | | | E. W107 | | | E. W108 | | |
|---|---|---|---|---|---|---|---|---|---|---|---|---|---|---|---|---|---|---|---|---|---|---|---|---|---|---|---|
| number ratio of PVC-type cables (containing an anti-oxidizing agent):HF-type cables | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 | 29 .. 1 | 20 .. 10 | 1 .. 29 |
| type of adhesive tape | Prior Art 6 | | | C. E. 11 | | | C.E. 12 | | | E. 31 | | | E. 32 | | | E. 33 | | | E. 34 | | | E. 35 | | | E. 36 | | |
| 150°C, 96hr, 10φ mandrel-winding | X (cable) | | | O (cable) | | | O (cable) | | | O (cable) | | | O (cable) | | | O (cable) | | | O (cable) | | | O (cable) | | | O (cable) | | |
| | X (tape) | | | O (tape) | | | O (tape) | | | O (tape) | | | O (tape) | | | O (tape) | | | O (tape) | | | O (tape) | | | O (tape) | | |
| wrapping operation | O | | | X | | | X | | | O | | | O | | | O | | | O | | | O | | | O | | |
| appearance | O | | | O | | | O | | | O | | | O | | | O | | | O | | | O | | | O | | |
| gluing capacity | O | | | X | | | X | | | O | | | O | | | O | | | O | | | O | | | O | | |
| global evaluation | X | | | X | | | X | | | O | | | O | | | O | | | O | | | O | | | O | | |

Table 53

| composition (parts by weight) | Prior Art | E. 1-1 | E. 1-2 | E. 1-3 | E. 1-4 | E. 1-5 | E. 1-6 | C. E. 1-1 | C. E. 1-2 |
|---|---|---|---|---|---|---|---|---|---|
| **Experiment 1: PVC-type tapes (tape base: adsorbent + anti-oxidizing agent; adhesive: acrylic acid resin + adsorbent + anti-oxidizing agent)** | | | | | | | | | |
| **PVC tape base** | | | | | | | | | |
| PVC(P: 1300) | 100 | 100 | 100 | 100 | 100 | 100 | 100 | 100 | 100 |
| DOP | 60 | 60 | 60 | 60 | 60 | 60 | 60 | 60 | 60 |
| calcium carbonate | 20 | 20 | 20 | 20 | 20 | 20 | 20 | 20 | 20 |
| stabilizer | 5 | 5 | 5 | 5 | 5 | 5 | 5 | 5 | 5 |
| anti-oxidizing agent | - | 5 | 5 | 5 | 5 | 5 | 5 | 5 | 5 |
| carbon black | - | 1 | 10 | 150 | - | - | - | 160 | - |
| silica | - | - | - | - | 1 | 10 | 150 | - | 160 |
| total (parts by weight) | 185 | 191 | 200 | 340 | 191 | 200 | 340 | 350 | 350 |
| **adhesive** | | | | | | | | | |
| SBR | 70 | - | - | - | - | - | - | - | - |
| natural rubber | 30 | - | - | - | - | - | - | - | - |
| zinc white # 3 | 20 | - | - | - | - | - | - | - | - |
| rosin-type resin | 80 | - | - | - | - | - | - | - | - |
| emulsion-type acrylic acid resin | - | 100 | 100 | 100 | 100 | 100 | 100 | 100 | 100 |
| anti-oxidizing agent | - | 3 | 3 | 3 | 3 | 3 | 3 | 3 | 3 |
| carbon black | - | 1 | 10 | 150 | - | - | - | 160 | - |
| silica | - | - | - | - | 1 | 10 | 150 | - | 160 |
| total (parts by weight) | 200 | 104 | 113 | 253 | 104 | 113 | 253 | 263 | 263 |
| experimental results | | | | | | | | | |
| 150°C, 96hr, 10ϕ mandrel-winding | X (cabl e) | O (cable ) | O (cable ) | O (cable ) | O (cable ) | O (cable ) | O (cable ) | O (cable) | O (cable ) |

Table 53   (continued)

| Experiment 1: PVC-type tapes (tape base: adsorbent + anti-oxidizing agent; adhesive: acrylic acid resin + adsorbent + anti-oxidizing agent) | | | | | | | | |
|---|---|---|---|---|---|---|---|---|
| experimental results | | | | | | | | |
| wrapping operation | O | O | O | O | O | O | O | X | X |
| global evaluation | X | O | O | O | O | O | O | X | X |

Table 54

| Experiment 2 : PVC-type tapes (tape base: adsorbent + copper damage inhibitor; adhesive: acrylic acid resin + adsorbent + copper damage inhibitor) | | | | | | | | | |
|---|---|---|---|---|---|---|---|---|---|
| composition (parts by weight) | Prior Art | E.2-1 | E. 2-2 | E.2-3 | E. 2-4 | E. 2-5 | E. 2-6 | C. E. 2-1 | C. E. 2-2 |
| **PVC tape base** | | | | | | | | | |
| PVC (P: 1300) | 100 | 100 | 100 | 100 | 100 | 100 | 100 | 100 | 100 |
| DOP | 60 | 60 | 60 | 60 | 60 | 60 | 60 | 60 | 60 |
| calcium carbonate | 20 | 20 | 20 | 20 | 20 | 20 | 20 | 20 | 20 |
| stabilizer | 5 | 5 | 5 | 5 | 5 | 5 | 5 | 5 | 5 |
| copper damage inhibitor | - | 1.6 | 1.6 | 1.6 | 1.6 | 1.6 | 1.6 | 1.6 | 1.6 |
| carbon black | - | 1 | 10 | 150 | - | - | - | 160 | - |
| silica | - | - | - | - | 1 | 10 | 150 | - | 160 |
| total (parts by weight) | 185 | 187.6 | 196.6 | 336.6 | 187.6 | 196.6 | 336.6 | 346.6 | 346.6 |
| **adhesive** | | | | | | | | | |
| SBR | 70 | - | - | - | - | - | - | - | - |
| natural rubber | 30 | - | - | - | - | - | - | - | - |
| zinc white # 3 | 20 | - | - | - | - | - | - | - | - |
| rosin-type resin | 80 | - | - | - | - | - | - | - | - |
| emulsion-type acrylic acid resin | - | 100 | 100 | 100 | 100 | 100 | 100 | 100 | 100 |
| copper damage inhibitor | - | 1 | 1 | 1 | 1 | 1 | 1 | 1 | 1 |

Table 54   (continued)

| Experiment 2 : PVC-type tapes (tape base: adsorbent + copper damage inhibitor; adhesive: acrylic acid resin + adsorbent + copper damage inhibitor) | | | | | | | | | |
|---|---|---|---|---|---|---|---|---|---|
| composition (parts by weight) | Prior Art | E.2-1 | E. 2-2 | E.2-3 | E. 2-4 | E. 2-5 | E. 2-6 | C. E. 2-1 | C. E. 2-2 |
| **adhesive** | | | | | | | | | |
| carbon black | - | 1 | 10 | 150 | - | - | - | 160 | - |
| silica | - | - | - | - | 1 | 10 | 150 | - | 160 |
| total (parts by weight) | 200 | 102 | 111 | 251 | 102 | 111 | 251 | 261 | 261 |
| experimental results | | | | | | | | | |
| 150°C, 96hr, 10φ mandrel-winding | X (cable) | O (cable) | O (cable) | O (cable) | O (cable) | O (cable) | O (cable) | O (cable) | O (cable ) |
| wrapping operation | O | O | O | O | O | O | O | X | X |
| global evaluation | X | O | O | O | O | O | O | X | X |

Table 55

| Experiment 3: PVC-type tapes (tape base: adsorbent + anti-oxidizing agent + copper damage inhibitor; adhesive: acrylic acid resin + adsorbent + anti-oxidizing agent + copper damage inhibitor) | | | | | | | | | |
|---|---|---|---|---|---|---|---|---|---|
| composition (parts by weight) | Prior Art | E.3-1 | E. 3-2 | E.3-3 | E. 3-4 | E. 3-5 | E. 3-6 | C. E. 3-1 | C. E. 3-2 |
| **PVC tape base** | | | | | | | | | |
| PVC (P: 1300) | 100 | 100 | 100 | 100 | 100 | 100 | 100 | 100 | 100 |
| DOP | 60 | 60 | 60 | 60 | 60 | 60 | 60 | 60 | 60 |
| calcium carbonate | 20 | 20 | 20 | 20 | 20 | 20 | 20 | 20 | 20 |
| stabilizer | 5 | 5 | 5 | 5 | 5 | 5 | 5 | 5 | 5 |
| anti-oxidizing agent | - | 5 | 5 | 5 | 5 | 5 | 5 | 5 | 5 |
| copper damage inhibitor | - | 1.6 | 1.6 | 1.6 | 1.6 | 1.6 | 1.6 | 1.6 | 1.6 |
| carbon black | - | 1 | 10 | 150 | - | - | - | 160 | - |
| silica | - | - | - | - | 1 | 10 | 150 | - | 160 |

Table 55   (continued)

| composition (parts by weight) | Prior Art | E.3-1 | E. 3-2 | E.3-3 | E. 3-4 | E. 3-5 | E. 3-6 | C. E. 3-1 | C. E. 3-2 |
|---|---|---|---|---|---|---|---|---|---|
| **Experiment 3: PVC-type tapes (tape base: adsorbent + anti-oxidizing agent + copper damage inhibitor; adhesive: acrylic acid resin + adsorbent + anti-oxidizing agent + copper damage inhibitor)** | | | | | | | | | |
| **PVC tape base** | | | | | | | | | |
| total (parts by weight) | 185 | 192.6 | 201.6 | 341.6 | 192.6 | 201.6 | 341.6 | 351.6 | 351.6 |
| **adhesive** | | | | | | | | | |
| SBR | 70 | - | - | - | - | - | - | - | - |
| natural rubber | 30 | - | - | - | - | - | - | - | - |
| zinc white # 3 | 20 | - | - | - | - | - | - | - | - |
| rosin-type resin | 80 | - | - | - | - | - | - | - | - |
| emulsion-type acrylic acid resin | - | 100 | 100 | 100 | 100 | 100 | 100 | 100 | 100 |
| anti-oxidizing agent | - | 3 | 3 | 3 | 3 | 3 | 3 | 3 | 3 |
| copper damage inhibitor | - | 1 | 1 | 1 | 1 | 1 | 1 | 1 | 1 |
| carbon black | - | 1 | 10 | 150 | - | - | - | 160 | - |
| silica | - | - | - | - | 1 | 10 | 150 | - | 160 |
| total (parts by weight) | 200 | 105 | 114 | 254 | 105 | 114 | 254 | 264 | 264 |
| experimental results | | | | | | | | | |
| 150°C, 96hr, 10φ mandrel-winding | X (cable) | O (cable) | O (cable) | O (cable) | O (cable) | O (cable) | O (cable) | O (cable) | O (cable ) |
| wrapping operation | O | O | O | O | O | O | O | X | X |
| global evaluation | X | O | O | O | O | O | O | X | X |

Table 56

| composition (parts by weight) | Prior Art | E.4-1 | E. 4-2 | E.4-3 | E. 4-4 | E. 4-5 | E. 4-6 | C. E. 4-1 | C. E. 4-2 |
|---|---|---|---|---|---|---|---|---|---|
| **Experiment 4 : HF-type tapes (tape base: adsorbent + anti-oxidizing agent; adhesive: acrylic acid resin + adsorbent + anti-oxidizing agent )** | | | | | | | | | |
| **HF tape base** | | | | | | | | | |
| polyolefin | 100 | 100 | 100 | 100 | 100 | 100 | 100 | 100 | 100 |
| bromine-type flame retardant | 3 | 3 | 3 | 3 | 3 | 3 | 3 | 3 | 3 |
| antimony trioxide | 1.5 | 1.5 | 1.5 | 1.5 | 1.5 | 1.5 | 1.5 | 1.5 | 1.5 |
| anti-oxidizing agent | - | 3.5 | 3.5 | 3.5 | 3.5 | 3.5 | 3.5 | 3.5 | 3.5 |
| carbon black | - | 1 | 10 | 150 | - | - | - | 160 | - |
| silica | - | - | - | - | 1 | 10 | 150 | - | 160 |
| total (parts by weight) | 104.5 | 109 | 118 | 258 | 109 | 118 | 258 | 268 | 268 |
| **adhesive** | | | | | | | | | |
| SBR | 70 | - | - | - | - | - | - | - | - |
| natural rubber | 30 | - | - | - | - | - | - | - | - |
| zinc white # 3 | 20 | - | - | - | - | - | - | - | - |
| rosin-type resin | 80 | - | - | - | - | - | - | - | - |
| emulsion-type acrylic acid resin | - | 100 | 100 | 100 | 100 | 100 | 100 | 100 | 100 |
| anti-oxidizing agent | - | 3 | 3 | 3 | 3 | 3 | 3 | 3 | 3 |
| carbon black | - | 1 | 10 | 150 | - | - | - | 160 | - |
| silica | - | - | - | - | 1 | 10 | 150 | - | 160 |
| total (parts by weight) | 200 | 104 | 113 | 253 | 104 | 113 | 253 | 263 | 263 |
| experimental results | | | | | | | | | |
| 150°C, 96hr, 10φ mandrel-winding | X (cable ) | O (cable) | O (cable) | O (cable) | O (cable) | O (cable) | O (cable) | O (cable) | O (cable) |

Table 56   (continued)

| Experiment 4 : HF-type tapes (tape base: adsorbent + anti-oxidizing agent; adhesive: acrylic acid resin + adsorbent + anti-oxidizing agent ) | | | | | | | | |
|---|---|---|---|---|---|---|---|---|
| experimental results | | | | | | | | |
| wrapping operation | O | O | O | O | O | O | O | X | X |
| global evaluation | X | O | O | O | O | O | O | X | X |

Table 57

| Experiment 5 : HF-type tapes (tape base: adsorbent +copper damage inhibitor; adhesive: acrylic acid resin +adsorbent + copper damage inhibitor) | | | | | | | | | |
|---|---|---|---|---|---|---|---|---|---|
| composition (parts by weight) | Prior Art | E.5-1 | E. 5-2 | E.5-3 | E. 5-4 | E. 5-5 | E. 5-6 | C. E. 5-1 | C. E. 5-2 |
| **HF tape base** | | | | | | | | | |
| polyolefin | 100 | 100 | 100 | 100 | 100 | 100 | 100 | 100 | 100 |
| bromine-type flame retardant | 3 | 3 | 3 | 3 | 3 | 3 | 3 | 3 | 3 |
| antimony trioxide | 1.5 | 1.5 | 1.5 | 1.5 | 1.5 | 1.5 | 1.5 | 1.5 | 1.5 |
| copper damage inhibitor | - | 1 | 1 | 1 | 1 | 1 | 1 | 1 | 1 |
| carbon black | - | 1 | 10 | 150 | - | - | - | 160 | - |
| silica | - | - | - | - | 1 | 10 | 150 | - | 160 |
| total (parts by weight) | 104.5 | 106.5 | 115.5 | 255.5 | 106.5 | 115.5 | 255.5 | 265.5 | 265.5 |
| **adhesive** | | | | | | | | | |
| SBR | 70 | - | - | - | - | - | - | - | - |
| natural rubber | 30 | - | - | - | - | - | - | - | - |
| zinc white # 3 | 20 | - | - | - | - | - | - | - | - |
| rosin-type resin | 80 | - | - | - | - | - | - | - | - |
| emulsion-type acrylic acid resin | - | 100 | 100 | 100 | 100 | 100 | 100 | 100 | 100 |
| copper damage inhibitor | - | 1 | 1 | 1 | 1 | 1 | 1 | 1 | |

Table 57   (continued)

| Experiment 5 : HF-type tapes (tape base: adsorbent +copper damage inhibitor; adhesive: acrylic acid resin +adsorbent + copper damage inhibitor) | | | | | | | | | |
|---|---|---|---|---|---|---|---|---|---|
| composition (parts by weight) | Prior Art | E.5-1 | E. 5-2 | E.5-3 | E. 5-4 | E. 5-5 | E. 5-6 | C. E. 5-1 | C. E. 5-2 |
| **adhesive** | | | | | | | | | |
| carbon black | - | 1 | 10 | 150 | - | - | - | 160 | - |
| silica | - | - | - | - | 1 | 10 | 150 | - | 160 |
| total (parts by weight) | 200 | 102 | 111 | 251 | 102 | 111 | 251 | 261 | 261 |
| experimental results | | | | | | | | | |
| 150°C, 96hr, 10φ mandrel-winding | X (cable) | O (cable) | O (cable ) | O (cable) | O (cable) | O (cable) | O (cable) | O (cable) | O (cable) |
| wrapping operation | O | O | O | O | O | O | O | X | X |
| global evaluation | X | O | O | O | O | O | O | X | X |

Table 58

| Experiment 6: HF-type tapes (tape base: adsorbent + anti-oxidizing agent + copper damage inhibitor; adhesive: acrylic acid resin + adsorbent + anti-oxidizing agent + copper damage inhibitor) | | | | | | | | | |
|---|---|---|---|---|---|---|---|---|---|
| composition (parts by weight) | Prior Art | E.6-1 | E. 6-2 | E.6-3 | E. 6-4 | E. 6-5 | E. 6-6 | C. E. 6-1 | C. E. 6-2 |
| **HF tape base** | | | | | | | | | |
| polyolefin | 100 | 100 | 100 | 100 | 100 | 100 | 100 | 100 | 100 |
| bromine-type flame retardant | 3 | 3 | 3 | 3 | 3 | 3 | 3 | 3 | 3 |
| antimony trioxide | 1.5 | 1.5 | 1.5 | 1.5 | 1.5 | 1.5 | 1.5 | 1.5 | 1.5 |
| anti-oxidizing agent | - | 3.5 | 3.5 | 3.5 | 3.5 | 3.5 | 3.5 | 3.5 | 3.5 |
| copper damage inhibitor | - | 1 | 1 | 1 | 1 | 1 | 1 | 1 | 1 |
| carbon black | - | 1 | 10 | 150 | - | - | - | 160 | - |
| silica | - | - | - | - | 1 | 10 | 150 | - | 160 |
| total (parts by weight) | 104.5 | 110 | 119 | 259 | 110 | 119 | 259 | 269 | 269 |

Table 58   (continued)

| Experiment 6: HF-type tapes (tape base: adsorbent + anti-oxidizing agent + copper damage inhibitor; adhesive: acrylic acid resin + adsorbent + anti-oxidizing agent + copper damage inhibitor) | | | | | | | | | |
|---|---|---|---|---|---|---|---|---|---|
| composition (parts by weight) | Prior Art | E.6-1 | E. 6-2 | E.6-3 | E. 6-4 | E. 6-5 | E. 6-6 | C. E. 6-1 | C. E. 6-2 |
| **adhesive** | | | | | | | | | |
| SBR | 70 | - | - | - | - | - | - | - | - |
| natural rubber | 30 | - | - | - | - | - | - | - | - |
| zinc white # 3 | 20 | - | - | - | - | - | - | - | - |
| rosin-type resin | 80 | - | - | - | - | - | - | - | - |
| emulsion-type acrylic acid resin | - | 100 | 100 | 100 | 100 | 100 | 100 | 100 | 100 |
| anti-oxidizing agent | - | 3 | 3 | 3 | 3 | 3 | 3 | 3 | 3 |
| copper-poisoning preventing agent | - | 1 | 1 | 1 | 1 | 1 | 1 | 1 | 1 |
| carbon black | - | 1 | 10 | 150 | - | - | - | 160 | - |
| silica | - | - | - | - | 1 | 10 | 150 | - | 160 |
| total (parts by weight) | 200 | 105 | 114 | 254 | 105 | 114 | 254 | 264 | 264 |
| experimental results | | | | | | | | | |
| 150°C, 96hr, 10φ mandrel-winding | X (cable) | O (cable) | O (cable) | O (cable) | O (cable) | O (cable) | O (cable) | O (cable) | O (cable) |
| wrapping operation | O | O | O | O | O | O | O | X | X |
| global evaluation | X | O | O | O | O | O | O | X | X |

## Claims

1.  A harness-protecting material comprising a base material comprising two faces, at least one face of which is coated with an adhesive, **characterised in that**;

    said base material comprises a base organic material portion which includes a base polymer portion formed of a halogen-free resin or a substantially halogen-free resin; and

    said adhesive comprises a base organic material portion which includes a base polymer portion, and an adhesive adjuvant which contains at least one compound selected from the group consisting of a hydrogenated terpene-type resin, a hydrogenated aromatic resin, a hydrogenated aliphatic-type resin, a cumarone-indene type resin, a phenol-type resin and a styrene-type resin.

2. The harness-protecting material according to claim 1, wherein said adhesive contains an acrylic acid-type resin as said base polymer portion.

3. The harness-protecting material according to claim 1 or 2, wherein said adhesive adjuvant is added in a proportion of about 10 to about 200 parts by weight, relative to 100 parts by weight of said base polymer portion of said adhesive.

4. The harness-protecting material according to any one of claims 1 to 3, wherein at least one of said base material and said adhesive contain(s) at least one agent selected from the group consisting of an anti-oxidizing agent, a copper damage inhibitor and an adsorbent.

5. The harness-protecting material according to claim 4, wherein said adsorbent comprises at least one of carbon black and silica.

6. The harness-protecting material according to claim 4 or 5, wherein said adsorbent is added in a proportion of about 1 to about 150 parts by weight, relative to 100 parts by weight of said base polymer portion of said adhesive, and/ or in a proportion of about 1 to about 150 parts by weight, relative to 100 parts by weight of said base polymer portion of said base material.

7. The harness-protecting material according to any one of claims 4 to 6 adapted to cover a cable bundle that comprises at least one electrical cable covered with a halogen-free or substantially halogen-free cable coating which contains a determined amount of anti-oxidizing agent relative to parts by weight of base organic material portion of said halogen-free or substantially halogen-free cable coating, wherein said base material and/or said adhesive of said harness-protecting material contain(s) about 10 to about 500 % by weight of anti-oxidizing agent, with regard to said determined amount in said halogen-free or substantially halogen-free cable coating.

8. The harness-protecting material according to claim 7, wherein said base material and/or said adhesive contain(s) parts by weight of anti-oxidizing agent equivalent to said determined amount in said halogen-free or substantially halogen-free cable coating.

9. The harness-protecting material according to claim 7 or 8, wherein said anti-oxidizing agent used in said base material and/or adhesive is of the same type as said anti-oxidizing agent used in said halogen-free or substantially halogen-free cable coating.

10. The harness-protecting material according to any one of claims 4 to 9, wherein said copper damage inhibitor is added in a proportion of about 0.001 to about 5 parts by weight , relative to 100 parts by weight of said base organic material portion of said base material, and/or in a proportion of about 0.001 to about 5 parts by weight, relative to 100 parts by weight of said base organic material portion of said adhesive.

11. The harness-protecting material according to any one of claims 4 to 10, adapted to cover a cable bundle that comprises at least one electrical cable covered with a halogen-free or substantially halogen-free cable coating which contains a determined amount of copper damage inhibitor relative to parts by weight of base organic material portion of said halogen-free or substantially halogen-free cable coating, wherein said base material and/or said adhesive of said harness-protecting material contain(s) parts by weight of copper damage inhibitor equivalent to said determined amount in said halogen-free or substantially halogen-free cable coating.

12. The harness-protecting material according to any one of claims 1 to 11, wherein said base material is in the form of a tape.

13. The harness-protecting material according to any one of claims 1 to 12, wherein said substantially halogen-free resin contains about 5 % by weight of halogen at the most, relative to the total amount of resin including additives.

14. A wire harness comprising a harness-protecting material as defined in any one of claims 1 to 13.

15. The use of a harness-protecting material according to any one of claims 1 to 13 for a wire harness used in a vehicle.

# FIG.1a

<u>10</u>

14

12

# FIG.1b

<u>16</u>

18a

12

18b

**FIG.2a**

24

20

36

38

22

10

A

B

**FIG.2b**

28

10

26

36

38

22

10

A

B

**FIG.2c**

30

10

10

36

38

22

10

10

A

B

# FIG.3

Sheet before use